(19)

**Europäisches Patentamt**

**European Patent Office**

**Office européen des brevets**

(11) **EP 2 641 124 B1**

(12) **EUROPÄISCHE PATENTSCHRIFT**

(45) Veröffentlichungstag und Bekanntmachung des Hinweises auf die Patenterteilung:
**18.01.2017 Patentblatt 2017/03**

(21) Anmeldenummer: **11790872.3**

(22) Anmeldetag: **16.11.2011**

(51) Int Cl.:
*G01M 11/02* (2006.01)      *G05B 19/418* (2006.01)
*G02C 7/02* (2006.01)

(86) Internationale Anmeldenummer:
**PCT/EP2011/005782**

(87) Internationale Veröffentlichungsnummer:
**WO 2012/065738 (24.05.2012 Gazette 2012/21)**

(54) **BERECHNUNGSVERFAHREN ZUR WELLENFRONTDURCHRECHNUNG VON BRILLENGLÄSERN MIT EINEM DIFFRAKTIVEN GITTER**

METHOD OF CALCULATION FOR DETAILED WAVEFRONT CALCULATION FOR SPECTACLE LENSES WITH A DIFFRACTIVE GRATING

PROCÉDÉ DE CALCUL PERMETTANT D'ÉVALUER LE FRONT D'ONDE DE VERRES DE LUNETTES À L'AIDE D'UN RÉSEAU DE DIFFRACTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.11.2010 DE 102010051762**

(43) Veröffentlichungstag der Anmeldung:
**25.09.2013 Patentblatt 2013/39**

(73) Patentinhaber: **Rodenstock GmbH**
**80687 München (DE)**

(72) Erfinder:
• **BECKEN, Wolfgang**
**82061 Neuried (DE)**
• **ESSER, Gregor**
**80686 München (DE)**

• **ALTHEIMER, Helmut**
**87650 Baisweil-Lauchdorf (DE)**
• **WEHNER, Edda**
**82275 Emmering (DE)**
• **TRUMM, Stephan**
**80999 München (DE)**
• **SESSNER, Rainer**
**91154 Roth (DE)**
• **UTTENWEILER, Dietmar**
**82057 Icking (DE)**

(74) Vertreter: **Müller-Boré & Partner**
**Patentanwälte PartG mbB**
**Friedenheimer Brücke 21**
**80639 München (DE)**

(56) Entgegenhaltungen:
**WO-A1-2005/098518      WO-A1-2008/089999**
**WO-A2-02/084381**

**Beschreibung**

Ein Verfahren zum Bestimmen der optischen Eigenschaften eines Brillenglases für alle Durchblickpunkte basiert auf einem Ermitteln des Verlaufs eines Hauptstrahls an jedem Durchblickpunkt und der zu diesem Hauptstrahl gehörenden Wellenfront über eine Ausdehnung, welche durch den Pupillendurchmesser bestimmt ist. Die Wellenfront kann dann als bekannt betrachtet werden, wenn sie innerhalb einer bestimmten Näherung ausreichend bekannt ist, z.B. wenn sich Zernike-Koeffizienten für die Wellenfront bis zu einer bestimmten Ordnung angeben lassen. Diese Ordnung kann die zweite Ordnung sein, wenn ausschließlich die prismatische Wirkung, der Brechwert und der Astigmatismus relevant sind, die dritte Ordnung, wenn außerdem auch Koma und Dreiblattfehler (Trefoil) betrachtet werden sollen, die vierte Ordnung, wenn zusätzlich auch die sphärische Aberration betrachtet werden soll, oder eine noch höhere Ordnung.

Es ist aus dem Stand der Technik bekannt, für optische Elemente und insbesondere für Brillengläser, die durch mindestens zwei brechende, refraktive Grenzflächen begrenzt sind, die Form dieser Wellenfronten zu bestimmen. Dies kann beispielsweise durch numerische Berechnung einer ausreichenden Anzahl an Nachbarstrahlen erfolgen, verbunden mit einem anschließenden Fit der Wellenfrontdaten durch Zernike-Polynome. Ein anderer Ansatz beruht auf einer lokalen Wellenfrontdurchrechnung (siehe WO 2008 089999 A1). Hierbei wird pro Durchblickpunkt nur ein einziger Strahl berechnet (der Hauptstrahl) und begleitend die Ableitungen der Pfeilhöhe der Wellenfront nach den transversalen (zum Hauptstrahl senkrechten) Koordinaten. Diese Ableitungen können bis zu einer bestimmten Ordnung gebildet werden, wobei die zweiten Ableitungen die lokalen Krümmungseigenschaften der Wellenfront (wie z.B. Brechwert, Astigmatismus) beschreiben und die höheren Ableitungen mit den Abbildungsfehlern höherer Ordnung zusammenhängen.

Bei einer Durchrechnung von Licht durch ein Brillenglas werden die lokalen Ableitungen der Wellenfront an einer geeigneten Position im Strahlverlauf berechnet, um sie dort mit erwünschten Werten, die aus der Refraktion des Brillenglasträgers hervorgehen, zu vergleichen. Diese Position kann beispielsweise die Scheitelpunktkugel sein. Hierzu wird angenommen, dass eine sphärische Wellenfront vom Objektpunkt ausgeht und bis zur ersten Brillenglasfläche propagiert. Dort wird die Wellenfront gebrochen und propagiert anschließend zur zweiten Brillenglasfläche, wo sie wieder gebrochen wird. Sollten weitere Flächen vorhanden sein, wird der Wechsel von Propagation und Brechung solange fortgesetzt bis die letzte Grenzfläche passiert ist. Die letzte Propagation findet dann von dieser letzten Grenzfläche bis zu der Scheitelpunktkugel statt.

WO 2008 089999 A legt die Gesetze für Brechung an refraktiven Flächen nicht nur für Abbildungsfehler bzw. optische Eigenschaften zweiter Ordnung sondern auch für höhere Ordnungen offen. Wenn eine Wellenfront mit bis zu einer bestimmten Ordnung bekannten lokalen Ableitungen unter schrägem Einfall auf eine Grenzfläche trifft, deren Pfeilhöhe selbst durch bekannte lokale Ableitungen bis zu derselben Ordnung beschrieben werden kann, dann können mit den Berechnungsverfahren nach WO 2008 089999 A1 die lokalen Ableitungen der ausfallenden Wellenfront bis zu der gleichen Ordnung berechnet werden. Eine solche Berechnung, insbesondere bis zur zweiten Ordnung, ist z.B. für die Beurteilung der Abbildungseigenschaften bzw. optischen Eigenschaften eines Brillenglases in Gebrauchsstellung wichtig. Insbesondere ist eine solche Berechnung von großer Bedeutung wenn ein Brillenglas in Gebrauchsstellung über alle Durchblickpunkte optimiert werden soll.

Zur Verbesserung von optischen Elementen/Systemen und insbesondere von Brillengläsern kann es jedoch vorteilhaft sein, zusätzlich optische Elemente, welche auf andere physikalische Effekte als auf reine Refraktion an einer gekrümmten refraktiven Grenzfläche beruhen, in den Strahlenhang zu bringen. So ist aus dem Stand der Technik bekannt, diffraktive Gitter bzw. Diffraktive Optische Elemente (DOE) zu verwenden, um den Farbsaum (d.h. den Farbquerfehler und/oder die chromatische Aberration) von abbildenden Systemen/Elementen zu reduzieren. Wird jedoch mindestens eine der Grenzflächen eines abbildenden Systems/Elements komplizierter aufgebaut, beispielsweise indem sie ein diffraktives Gitter enthält, dann können die auf die Brechung bezogenen Gesetze aus dem Stand der Technik nicht angewendet werden.

In dem Fall eines optischen Elements/Systems mit zumindest einem diffraktiven Gitter war es bisher nicht möglich, eine exakte Wellenfrontdurchrechnung durchzuführen. Das bedeutet, dass die Vorteile eines diffraktiven Gitters unzureichend ausgenutzt werden können. Insbesondere kann nach dem Stand der Technik ein durch die Einführung des diffraktiven Gitters eventuell entstehender Refraktionsfehler rechnerisch höchstens sehr pauschal, ungenau und jedenfalls nicht exakt in Gebrauchsstellung berechnet werden. Auch im Fall eines optischen Elements mit zumindest einem phasenändernden (phasenverzögernden oder phasenmodulierenden) Element ist es mit den bekannten Verfahren nicht möglich, eine exakte Wellenfrontdurchrechnung durchzuführen.

Es ist eine Aufgabe der Erfindung ein Verfahren sowie eine entsprechende Vorrichtung bereitzustellen, welche es ermöglichen, eine schnelle und effiziente Durchrechnung der optischen Eigenschaften eines beliebigen optischen Elements oder Systems mit zumindest einem phasenändernden optischen Elements durchzuführen.

Diese Aufgabe wird durch ein Verfahren zum Auswerten zumindest einer optischen Eigenschaft eines optischen Elements mit den im Anspruch 1 angegebenen Merkmalen, durch ein Computerprogrammerzeugnis mit den im Anspruch 13 angegebenen Merkmalen, durch eine Vorrichtung zum Auswerten zumindest einer optischen Eigenschaft mit den im Anspruch 14 angegebenen Merkmalen, durch ein Verfahren zum Herstellen eines optischen Elements mit den im Anspruch 15 angegebenen Merkmalen, sowie durch eine Vorrichtung zum Herstellen eines optischen Elements mit den im Anspruch 17 angegebenen Merkmalen gelöst.

Bevorzugte Ausführungsformen sind Gegenstand der abhängigen Ansprüche.

Ein erster Aspekt der Erfindung betrifft ein computerimplementiertes Verfahren zum (automatischen) Auswerten zumindest einer optischen Eigenschaft $k$ -ter Ordnung, $k = 2, 3, 4, \ldots$ eines optischen Elements an zumindest einer Bewertungsstelle, wobei das optische Element zumindest eine Grenzfläche, welche aus einer refraktiven Grundfläche und zumindest einem phasenändernden optischen Element gebildet ist, umfasst. Das Verfahren umfasst die Schritte:

Bestimmen der Eigenschaften einer Wellenfront in der lokalen Umgebung der zumindest einen Bewertungsstelle mittels einer lokalen Wellenfrontdurchrechnung; und

Bestimmen der zumindest einen optischen Eigenschaft an der zumindest einen Bewertungsstelle anhand der Eigenschaften der Wellenfront in der lokalen Umgebung der zumindest einen Bewertungsstelle,

wobei die lokale Wellenfrontdurchrechnung eine lokale Wellenfrontdurchrechnung durch die zumindest eine Grenzfläche umfasst, und die lokale Wellenfrontdurchrechnung beim Durchgang durch die zumindest eine Grenzfläche nach der durch einen additiven Zusatzterm $\mathbf{PK}^{(k)}$ ergänzten Gleichung beim Durchgang für die lokale Wellenfrondurchrechnung durch die refraktive Grundfläche erfolgt, wobei

der additive Zusatzterm $\mathbf{PK}^{(k)}$ von den lokalen Ableitungen $k$ -ter Ordnung einer dem phasenändernden optischen Element zugeordneten Phasenfunktion $\Psi(\overline{x,y})$ nach den Koordinaten tangential zur Grundfläche abhängt, wobei die Phasenfunktion $\Psi(\overline{x,y})$ die durch das zumindest eine phasenändernde optische Element eingeführte optische Pfadlängendifferenz als Funktion der Koordinaten $(\overline{x,y})$ tangential zur Grundfläche darstellt.

Bei der zumindest einen optischen Eigenschaft $k$ -ter Ordnung, $k = 2, 3, 4, \ldots$ eines optischen Elements handelt es sich um die zumindest eine (monochromatische) Abbildungseigenschaft $k$ -ter Ordnung, wie zum Beispiel Brechkraft, Astigmatismus, Koma, Trefoil, sphärische Aberration, etc.

Die Erfindung basiert auf der überraschenden Erkenntnis, dass die Vergenzgleichung $\mathbf{B = A + D}$ sowie die entsprechenden Gleichungen höherer Ordnung, welche eine (lokale) Wellenfrontdurchrechnung durch gewöhnliche refraktive Grenzflächen beschreiben, sich in vergleichsweise einfacher Weise modifizieren lassen, so dass ebenfalls beliebige phasenändernde optische Elemente mit einbezogen werden können. Dabei kann entweder der Durchgang von Licht durch ein isoliertes phasenänderndes optisches Element beschrieben werden, oder der Durchgang durch eine unmittelbar aufeinanderfolgende Kombination aus einem phasenändernden optischen Element und einer refraktiven Grundfläche.

Ferner hat sich überraschenderweise herausgestellt, dass sich jedem beliebigen, auch nicht-rotationssymmetrischen, phasenändernden optischen Element auch bei beliebigen schiefwinkligen Strahleinfallbedingungen für jede Ordnung $k, k = 2, 3, 4, \ldots$ eine, im Allgemeinen vektorielle, Größe $\mathbf{PK}^{(k)}$ zuordnen lässt, so dass die entsprechende (lokale) Vergenzgleichung $\mathbf{(B = A + D)}$ und die entsprechenden Gleichungen höherer Ordnung für rein refraktive Flächen im Wesentlichen nur additiv um den Zusatzterm $\mathbf{PK}^{(k)}(\mathbf{PK}^{(2)}, \mathbf{PK}^{(3)}, \mathbf{PK}^{(4)}, \ldots)$ erweitert werden müssen, um die Vergenzen beim Wellenfrontdurchgang bei Anwesenheit eines nicht-rotationssymmetrischen phasenändernden optischen Element korrekt zu beschreiben.

Mit anderen Worten ist es auch in jeder noch so asymmetrischen Situation, für die sich für rein refraktive Flächen die Wellenfrontdurchrechnung exakt beschreiben ließe, ausreichend, die entsprechende Vergenzgleichung im Wesentlichen nur durch einen additiven Zusatzterm $\mathbf{PK}^{(k)}$ zu erweitern, um auch das phasenändernde optische Element korrekt zu beschreiben. Ferner ist erkannt worden, dass die Vergenz der ausfallenden Wellenfront unabhängig von der Reihenfolge ist, in der die brechende Fläche und das phasenändernde optische Element aufeinander folgen. Die Komponenten des additiven Zusatzterms $\mathbf{PK}^{(k)}$ hängen von den lokalen Ableitungen $k$-ter Ordnung (d.h. zweiter oder höherer Ordnung) einer Phasenfunktion $\Psi(\overline{x,y})$ nach den Koordinaten $\overline{x,y}$ tangential zur brechenden Fläche, d.h. nach den transversalen Koordinaten. Die Phasenfunktion $\Psi(\overline{x,y})$ stellt die optische Pfadlängendifferenz (Optical Path Difference oder OPD), welche durch das phasenändernde optische Element eingeführt wird, als Funktion der Koordinaten $(\overline{x,y})$ tangential zur brechenden Fläche (d.h. die Grundfläche) dar. Die Beschreibung eines phasenändernden optischen Elements durch die Phasenfunktion $\Psi(\overline{x,y})$ ermöglicht es, den additiven Zusatzterm $\mathbf{PK}^{(k)}$ bzw. die additiven Zusatzterme $\mathbf{PK}^{(2)}$, $\mathbf{PK}^{(3)}$, $\mathbf{PK}^{(4)}$, $\ldots$ konstruktiv zu bestimmen.

Da der additive Zusatzterm von den lokalen Ableitungen zweiter oder höherer Ordnung der Phasenfunktion nach den Koordinaten tangential zur brechenden Fläche des durch die Bewertungsstelle verlaufenden Hauptstrahls abhängt, wird dieser Term nachfolgend auch "Phasenkrümmung" genannt.

Wenn die zu bestimmende optische Eigenschaft eine optische Eigenschaft zweiter Ordnung ist, kann die lokale Wellenfrontdurchrechnung nach der Gleichung $\mathbf{B = A + D + PK}^{(2)}$, erfolgen.

In der obigen Formel bezeichnen

**A** die Powervektorform der lokalen Vergenzmatrix der einfallenden Wellenfront an einem Durchstoßpunkt eines Hauptstrahls, welcher durch die zumindest eine Bewertungsstelle verläuft, mit der zumindest einen Grenzfläche,

**B** die Powervektorform der lokalen Vergenzmatrix der ausfallenden Wellenfront an dem Durchstoßpunkt des Hauptstrahls mit der Grenzfläche;

**D** die Powervektorform der lokalen Flächenbrechwertmatrix der refraktiven Grundfläche; und

**PK**$^{(2)}$ einen additiven Zusatzterm, welcher von den lokalen Ableitungen zweiter Ordnung einer dem phasenändernden optischen Element zugeordneten Phasenfunktion $\Psi(\bar{x},\bar{y})$ nach den Koordinaten $(\bar{x},\bar{y})$ tangential zur Grundfläche bzw. zur brechenden Fläche abhängt (bzw. abhängen), wobei die Phasenfunktion $\Psi(\bar{x}\bar{y})$ die durch das zumindest eine phasenändernde optische Element eingeführte optische Pfadlängendifferenz als Funktion der Koordinaten $(\bar{x},\bar{y})$ tangential zur Grundfläche bzw. zur brechenden Fläche des Hauptstrahls darstellt.

Hinsichtlich der verwendeten Fachterminologie und insbesondere der Definition und der Darstellung in Powervektorform der Vergenzmatrix einer Wellenfront und der Flächenbrechwertmatrix wird z.B. auf WO 2008/089999 A1 oder auf die Publikation G. Esser, et al., "Derivation of the refraction equations for higher-order aberrations of local wavefronts at oblique incidence", JOSA A, Vol. 27, Nr. 2, Februar 2010, Seiten 218 bis 237), verwiesen, deren entsprechende Ausführungen insoweit einen integralen Offenbarungsbestandteil der vorliegenden Anmeldung darstellen.

Ist beispielsweise die auszuwertende optische Eigenschaft eine optische Eigenschaft (Abbildungseigenschaft) zweiter Ordnung, wie z.B. Sphäre, Astigmatismus, dann hängt der additive Zusatzterm von den Ableitungen zweiter Ordnung der Phasenfunktion ab:

$$\mathbf{PK}^{(2)} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2\Psi(\bar{x},\bar{y})/\partial\bar{x}^2 \\ \partial^2\Psi(\bar{x},\bar{y})/\partial\bar{x}\partial\bar{y} \\ \partial^2\Psi(\bar{x},\bar{y})/\partial\bar{y}^2 \end{pmatrix}\Bigg|_{(\bar{x},\bar{y})=(0,0)} .$$

Ist die auszuwertende optische Eigenschaft eine optische Eigenschaft dritter oder höherer Ordnung, dann hängt der additive Zusatzterm von den Ableitungen dritter oder höherer Ordnung ab.

Ist beispielsweise die zu auswertende optische Eigenschaft eine optische Eigenschaft (Abbildungseigenschaft) dritter Ordnung, wie z.B. Koma, Trefoil, etc. dann gilt für den additiven Zusatzterm:

$$\mathbf{PK}^{(3)} = -\begin{pmatrix} \Psi^{(3,0)}(0,0) \\ \Psi^{(2,1)}(0,0) \\ \Psi^{(1,2)}(0,0) \\ \Psi^{(0,3)}(0,0) \end{pmatrix} = -\begin{pmatrix} \partial^3\Psi(\bar{x},\bar{y})/\partial\bar{x}^3 \\ \partial^3\Psi(\bar{x},\bar{y})/\partial\bar{x}^2\partial\bar{y} \\ \partial^3\Psi(\bar{x},\bar{y})/\partial\bar{x}\partial\bar{y}^2 \\ \partial^3\Psi(\bar{x},\bar{y})/\partial\bar{y}^3 \end{pmatrix}\Bigg|_{(\bar{x},\bar{y})=(0,0)}$$

Ist die auszuwertende optische Eigenschaft eine optische Eigenschaft vierter Ordnung ($k = 4$) kann der entsprechende Zusatzterm vierter Ordnung **PK**$^{(4)}$, analog zum Zusatzterm dritter Ordnung **PK**$^{(3)}$ gebildet werden.

Die verallgemeinerte Goddington-Gleichung für die Wellenfrontdurchrechnung zweiter Ordnung und die entsprechenden Gleichungen (Wellenfrontgleichungen) für die Wellenfrontdurchrechnung bei dem Durchgang durch eine refraktive Grenzfläche (Grundfläche), auf welcher zusätzlich ein phasenänderndes optisches Element aufgebracht ist, sind nachfolgend im Detail beschrieben (siehe z.B. Tabellen 2, 2A und 2B und die entsprechenden Erläuterungen).

Unter einem optischen Element im Sinne der vorliegenden Anmeldung wird ein beliebiges, abbildendes optisches Element oder System mit einer oder mehreren optischen Komponente(n) verstanden. Das optische Element kann z.B. eine Linse oder ein Linsensystem, ein Brillenglas, ein Prisma, etc. sein. Das optische Element weist zumindest eine Grenzfläche auf, welche aus einer Grundfläche und zumindest einem phasenändernden optischen Element ausgebildet ist. Das optische Element kann weitere rein refraktive Grenzflächen und/oder Grenzflächen mit jeweils zumindest einem phasenändernden optischen Element aufweisen. Die Wellenfrontdurchrechnung wird dann erneut für jede zusätzliche Grenzfläche in der oben beschriebenen Art und Weise durchgeführt. Wenn die Grenzfläche eine rein refraktive Grenzfläche ist, ist der additive Zusatzterm Null. Die lokale Wellenfrontdurchrechnung für diese Fläche kann dann nach den aus dem Stand der Technik (z.B. WO 2008/089999 A1, G. Esser, et al., "Derivation of the refraction equations for higher-order aberrations of local wavefronts at oblique incidence", JOSA A, Vol. 27, Nr. 2, Februar 2010, Seiten 218 bis 237) bekannten Gleichungen für die Wellenfrontdurchrechnung durch eine rein refraktive Fläche erfolgen. So kann in diesem Fall z.B. bei senkrechtem Strahleinfall eine lokale Wellenfrontdurchrechnung 2. Ordnung nach der Gleichung $\mathbf{B} = \mathbf{A} + \mathbf{D}$ erfolgen.

Die refraktive Grundfläche kann eine beliebige Fläche sein, insbesondere eine nichtrotationssymmetrische asphärische Fläche.

Ein phasenänderndes optisches Element im Sinne der vorliegenden Anmeldung ist ein optisches Element (POE), welches phasenverzögernd oder phasenmodulierend ist, und zwar so, dass die Änderung der optischen Weglänge durch Hinzufügen des Elements vom Durchtrittspunkt des Strahls abhängt. Ein phasenänderndes optisches Element (POE) kann z.B. durch ein diffraktives Gitter bzw. durch ein diffraktives optisches Element (**D**iffractive **O**ptical **E**lement oder DOE) realisiert werden. Es ist ebenfalls möglich, das POE durch jede andere Art der Phasenmodulation zu realisieren, z.B. durch eine dünne Folie mit variierendem Brechungsindex (Gradient Index Material). Wahlweise können die Materialien, welche das diffraktive Gitter begrenzen oder die Schicht aufbauen, statisch oder z.B. elektrisch schaltbar sein. Verfahren zum Herstellen von statischen oder schaltbaren POEs sind aus dem Stand der Technik bekannt.

Das phasenändernde optische Element kann ein beliebiges, insbesondere ein nicht-rotationssymmetrisches phasenänderndes optisches Element sein. Insbesondere kann das phasenändernde optische Element z.B. ein einfaches periodisches oder ein doppelperiodisches phasenänderndes optisches Element sein. Wenn das phasenändernde optische Element ein diffraktives optisches Element bzw. ein diffraktives Gitter ist, wird die Phasenfunktion vorzugsweise für eine vorgegebene Wellenläge und für eine vorgegebene Beugungsordnung ausgewertet ($\Psi(\bar{x},\bar{y}) = \Psi(\bar{x},\bar{y},\lambda,m)$). Das phasenändernde optische Element kann sich im Wesentlichen über die gesamte Grundfläche erstrecken. Alternativ kann das phasenändernde optische Element lediglich in einem Bereich der Grundfläche angeordnet werden.

Das Koordinatensystem $\bar{x},\bar{y},\bar{z}$ ist ein lokales Koordinatensystem, welches dazu dient, den Hindurchtritt eines Hauptstrahls durch eine Grenzfläche (eine Grundfläche mit zumindest einem diffraktiven Gitter) zu beschreiben, wobei am Durchstoßpunkt des Hauptstrahls mit der Grenzfläche $(\bar{x},\bar{y},\bar{z}) = (0,0,0)$ gilt, und wobei die $\bar{z}$-Achse dort senkrecht zur Grundfläche steht. Eine spezielle mögliche Wahl eines solchen lokalen Systems besteht darin, zu fordern, dass der einfallende Strahl beispielsweise in der $\bar{x}$-$\bar{z}$-Ebene oder in der $\bar{y}$-$\bar{z}$-Ebene liegt. Der Hauptstrahl ist ein Strahl, welcher durch die jeweilige Bewertungsstelle verläuft. Der Hauptstrahl unterscheidet sich somit von etwaigen Nachbarstrahlen, welche abseits der Bewertungsstelle verlaufen. Ein Hauptstrahl ist im beispielhaften Fall eines Brillenglases insbesondere ein Lichtstahl, welcher ausgehend vom Objektpunkt durch die Mitte der Eintrittspupille verläuft. Die Eintrittspupille fällt bei Blickbewegungen mit dem Augendrehpunkt und nicht notwendigerweise mit der physikalischen Pupille des Auges zusammen.

Das Bestimmen zumindest einer optischen Eigenschaft (Abbildungseigenschaft) umfasst insbesondere ein Bestimmen der lokalen Ableitungen der zweiten und höheren Ordnungen der Wellenfront in der lokalen Umgebung der zumindest einen Bewertungsstelle. Die optischen Eigenschaften zweiter oder höheren Ordnung (z.B. Astigmatismus, sphärische Wirkung, Koma, sphärische Aberration, etc.) in einer vorgegebenen Bewertungsstelle beim Strahldurchtritt durch eine rein refraktive Grenzfläche können in an sich bekannter Weise anhand der ermittelten Ableitungen der lokalen Wellenfront in der Umgebung der Bewertungsstelle bestimmt werden. Diesbezüglich wird insbesondere auf die Druckschrift WO 2008/089999 A1, auf den Artikel von W. Becken, et al. "Brillengläser im Sport: Optimierung der Abbildungseigenschaften unter physiologischen Aspekten", Z. Med. Phys., 17 (2007), Seiten 56 - 66 oder auf den Artikel von G. Esser "Derivation of the refraction equations for higher-order aberrations of local wavefronts at oblique incidence", JOSA A, Vol. 27, Nr. 2, Februar 2010, Seiten 218-237 verwiesen. Auf diese Druckschriften wird hinsichtlich der verwendeten Fachterminologie sowie bezüglich des Zusammenhangs der optischen Eigenschaften zweiter oder höherer Ordnung mit Wellenfronteigenschaften verwiesen. Die entsprechenden Ausführungen stellen insoweit einen integralen Offenbarungsbestandteil der vorliegenden Anmeldung dar.

Die lokalen Ableitungen der zweiten und höheren Ordnung der Wellenfront in der lokalen Umgebung der zumindest einen Bewertungsstelle können aus den Eigenschaften der auf die Eintrittsfläche des optischen Elements einfallenden Wellenfront $W_{In}$ (z.B. beschrieben durch die Vergenzmatrix der einfallenden Wellenfront in der Umgebung des Durchstoßpunktes) und den Eigenschaften des optischen Elements ermittelt werden. Die Eigenschaften des optischen Elements umfassen z.B. die Flächeneigenschaften der refraktiven Anteile (bzw. der jeweiligen refraktiven Grundflächen) aller Grenzflächen des optischen Elements und die durch das zumindest eine phasenändernde optische Element (POE) eingeführte Phasenkrümmung. Die Flächeneigenschaften der refraktiven Anteile aller Grenzflächen umfassen insbesondere die lokalen Ableitungen zweiter oder höherer Ordnung der Pfeilhöhe der jeweiligen refraktiven Grundfläche. Die Flächeneigenschaften zweiter Ordnung des refraktiven Anteils einer refraktiven Grundfläche können zum Beispiel durch die Flächenbrechwertmatrix $\mathbf{D}$ beschrieben werden.

Für den Fall einer Wellenfrontdurchrechnung zweiter Ordnung können die Größen $\mathbf{A}$, $\mathbf{B}$ und $\mathbf{D}$ sowohl als

Matrizen als auch als Vektoren geschrieben werden. **A** kann dann die Powervektorform der Vergenzmatrix der auf die Grenzfläche einfallenden Wellenfront, **B** kann als die Powervektorform der Vergenzmatrix der ausfallenden Wellenfront und **D** die Powervektorform der Flächenbrechwertmatrix der brechenden (refraktiven) Grundfläche sein. Statt Powervektoren können jedoch auch Linearkombinationen von Powervektorkomponenten, die zu einem neuen Vektor zusammengefasst werden, verwendet werden. Insbesondere können dabei die Normalkrümmungen und die Torsion, also die zweiten Ableitungen nach den Querkoordinaten und die gemischte Ableitung, verwendet werden.

Das erfindungsgemäße Verfahren kann auch als eine Erweiterung der, z.B. aus der Druckschrift WO 2008/089999A1 oder aus der Publikation von G. Esser, W. Becken, W. Müller, P. Baumbach, J. Arasa, and D. Uttenweiler, "Derivation of the refraction equations for higher-order aberrations of local wavefronts at oblique incidence", JOSA. A, Vol. 27, Nr. 2, Februar 2010, Seiten 218 - 237 bekannten, lokalen Wellenfrontdurchrechnung durch rein refraktive Grenzflächen auf den Fall von komplexen optischen Systemen mit zumindest einem phasenändernden optischen Element betrachtet werden. Mit dem erfindungsgemäßen Verfahren können die optischen Eigenschaften bzw. die Abbildungseigenschaften eines beliebigen optischen Elements auch beim Vorhandensein beliebiger phasenändernden optischen Elementen, welche nicht auf reiner Refraktion beruhen, exakt berechnet werden.

Es ist somit möglich, schnell und effizient die Eigenschaften von komplexen optischen Elementen, vorzugsweise in einer Mehrzahl an Bewertungsstelle auch in tatsächlicher Gebrauchsstellung des optischen Elements exakt zu bestimmen und auszuwerten. Ist das Verfahren zum Auswerten zumindest einer optischen Eigenschaft ein Bestandteil eines Qualitätssicherungsverfahrens oder einer Optimierung eines Herstellungsverfahrens führt das zu einer entsprechenden Verbesserung des gesamten Qualitätssicherungsverfahrens oder des Optimierungsverfahrens. Ist insbesondere das Verfahren zum Auswerten zumindest einer optischen Eigenschaft ein Bestandteil einer (iterativen) Optimierung und/oder eines Herstellungsverfahrens, kann somit das gesamte Potential phasenändernder optischer Elemente, z.B. zur Farbsaumkorrektur, optimal ausgenutzt werden.

Da das erfindungsgemäße Verfahren zum Auswerten zumindest einer optischen Eigenschaft schnell und effizient durchgeführt werden kann, eignet sich dieses Verfahren zur Qualitätssicherung von optischen Elementen im Rahmen einer Massenproduktion sowie zur schnellen (z.B. online) Optimierung von optischen Elementen, welche individuell für eine bestimmte Gebrauchssituation optimiert werden. Insbesondere eignet sich das erfindungsgemäße Verfahren zum individuellen, Online-Optimieren von Brillengläsern mit zumindest einem phasenändernden optischen Element für einen bestimmten Brillenträger. Diese können z.B. farbsaumkorrigierte Brillengläser sein, welche zumindest ein diffraktives Gitter aufweisen. Alternativ oder zusätzlich können dies Brillengläser sein, welche z.B. eine dünne Schicht mit variablem Brechungsindex aufweisen.

Das Bestimmen der zumindest einen optischen Eigenschaft kann ein Ermitteln des Verlaufs des durch die Bewertungsstelle verlaufenden Hauptstrahls umfassen.

Um Wellenfronteigenschaften zu beschreiben kann zuerst die Strahldurchrechnung ("ray tracing") eines Hauptstrahls, welcher durch eine Bewertungsstelle des optischen Element verläuft, durchgeführt werden. Der Verlauf des Hauptstrahls kann mittels eines "modifizierten" Ray-Tracing Verfahrens bestimmt werden, welches den Einfluss des phasenändernden optischen Elements berücksichtigt. Insbesondere kann das Ermitteln des Verlaufs des Hauptstrahls ein Ermitteln von Richtungsvektoren **N,N':**

$$\mathbf{N} = \begin{pmatrix} \sin\varphi_x \\ \sin\varphi_y \\ \sqrt{1-\sin^2\varphi_x - \sin^2\varphi_y} \end{pmatrix}$$

und

$$\mathbf{N'} = \begin{pmatrix} \sin\varphi'_x \\ \sin\varphi'_y \\ \sqrt{1-\sin^2\varphi'_x - \sin^2\varphi'_y} \end{pmatrix}$$

umfassen, welche den Verlauf des Hauptstrahls vor und nach der Grenzfläche (z.B. der refraktiven Grundfläche mit dem phasenändernden optischen Element), beschreiben, wobei sich die Komponenten der Vektoren auf das lokale

Koordinatensystem $\overline{x},\overline{y},\overline{z}$ beziehen. Der auf die Grenzfläche einfallende Teil bzw. Abschnitt des Hauptstrahls wird nachfolgend auch als einfallender (Haupt)strahl und der Teil bzw. Abschnitt des Hauptstrahls nach dem Austritt aus der Grenzfläche wird nachfolgend auch als ausfallender oder austretender (Haupt)strahl bezeichnet. Dabei kann insbesondere berücksichtigt werden, dass der auf die Grenzfläche einfallende Strahl, der ausfallende Strahl und der Normalenvektor der brechenden Fläche beim Vorhandensein eines phasenändernden optischen Elements nicht notwendigerweise in einer Ebene liegen.

Wenn das phasenändernde optische Element ein diffraktives Gitter ist, gilt für den Verlauf des Hauptstrahls durch die zumindest einen Grenzfläche:

$$n'\sin\varphi'_x - n\sin\varphi_x = \frac{\partial}{\partial\overline{x}}\Psi(\overline{x},\overline{y};\lambda,m)$$

$$n'\sin\varphi'_y - n\sin\varphi_y = \frac{\partial}{\partial\overline{y}}\Psi(\overline{x},\overline{y};\lambda,m)$$

wobei

$n'$ den Brechungsindex des Materials nach der refraktiven Grundfläche bezeichnet;
$n$ den Brechungsindex des Materials vor der refraktiven Grundfläche bezeichnet;
$\varphi_x$ den Winkel des einfallenden Strahls gegen die $\overline{y}$ - $\overline{z}$ Ebene bezeichnet;
$\varphi_y$ den Winkel des einfallenden Strahls gegen die $\overline{x}$ - $\overline{z}$ Ebene bezeichnet;
$\varphi'_x$ den Winkel des ausfallenden Strahls gegen die $\overline{y}$ - $\overline{z}$ Ebene bezeichnet;
$\varphi'_y$ den Winkel des ausfallenden Strahls gegen die $\overline{x}$ - $\overline{z}$ *Ebene* bezeichnet;
$\lambda$ die Wellenlänge bezeichnet; und
$m$ die Beugungsordnung bezeichnet.

Anschließend können die lokalen Ableitungen der dem Hauptstrahl zugeordneten Wellenfront nach den Koordinaten senkrecht zu dem Hauptstrahl in der lokalen Umgebung der jeweiligen Bewertungsstelle wie oben beschrieben ermittelt werden. Anhand der ermittelten lokalen Ableitungen zweiter und/oder höherer Ordnung können die optischen Eigenschaften zweiter und/oder höherer Ordnung an der Bewertungsstelle des optischen Elements ermittelt werden.

Mit dem oben beschriebenen Verfahren ist es möglich, die sehr rechenintensive numerische Berechnung einer ausreichenden Anzahl an Nachbarstrahlen, verbunden mit einem anschließenden Fit der Wellenfrontdaten durch Zernike-Polynome, zu vermeiden. Es ist somit möglich, schnell und effizient die Eigenschaften von komplexen optischen Elementen, vorzugsweise in einer Mehrzahl an Bewertungsstellen exakt zu bestimmen und auszuwerten.

Das Verfahren zum Auswerten zumindest einer optischen Eigenschaft kann ferner das Erfassen von Flächendaten der zumindest einen refraktiven Grundfläche und des phasenändernden optischen Elements umfassen.

Die Flächendaten der refraktiven Grundfläche und die Daten des phasenändernden optischen Elements können anhand von Messdaten der Grundfläche mit dem zumindest einen phasenändernden optischen Element erhalten werden. Die Messdaten können z.B. mittels Vermessung einer oder mehreren Mikroskopaufnahmen erhalten werden. Die ermittelten Flächendaten und Daten des phasenändernden optischen Elements können z.B. mittels geeigneter Funktionen (z.B. Spline-Funktionen, Polynomen, etc.) interpoliert werden. Es ist jedoch möglich, die Flächendaten der refraktiven Grundfläche und/oder die Phasenfunktion des phasenändernden optischen Elements anhand von theoretischen Daten festzulegen. Die theoretischen Daten können z.B. numerische Daten oder Daten in funktionaler Form sein. Die Flächendaten der zumindest einen refraktiven Grundfläche und des phasenändernden optischen Element können in einem geeigneten Speicher gespeichert und daraus ausgelesen werden.

Vorzugsweise umfassen die Daten des phasenändernden optischen Elements Daten bezüglich des Verlaufs der Gitterlinien des phasenändernden optischen Elements. Unter Gitterlinien des phasenändernden optischen Elements werden insbesondere Linien gleicher Eigenschaft, z.B. gleicher Transmissionseigenschaft des phasenändernden optischen Elements verstanden. Vorzugsweise wird eine Phasenfunktion $\psi(\overline{x},\overline{y})$, wobei $\Psi(\overline{x},\overline{y},m) = m\lambda \cdot \psi(\overline{x},\overline{y})$, anhand der erfassten Daten bezüglich des Verlaufs der Gitterlinien des phasenändernden optischen Elements derart bestimmt, dass die Isolinien der Phasenfunktion bzw. die Kurven mit $\psi(\overline{x},\overline{y}) = const. = 0,1,2,...$ parallel zu den Gitterlinien des phasenändernden optischen Elements verlaufen. Für die Phasenfunktion $\Psi(\overline{x},\overline{y},\lambda,m)$ gilt dann $\Psi(\overline{x},\overline{y},\lambda,m) = 0,m\lambda,2m\lambda,....$ Für alle Punkte, welche zwischen den Gitterlinien liegen, können die Werte der Phasenfunktion durch eine geeignete Interpolation, z.B. eine lineare, eine quadratische, etc. Interpolation ermittelt werden.

Die Daten bezüglich des Verlaus der Gitterlinien des phasenändernden optischen Elements können mittels einer Vermessung, z.B. einer mikroskopischen Vermessung, des phasenändernden optischen Elements erhalten werden. Die erhaltenen Messdaten können mittels geeigneter Funktionen (z.B. mittels Spline-Funktion, Polynomen, etc.) interpoliert werden. Alternativ können die Daten bezüglich des Verlaufs der Gitterlinien des phasenändernden optischen Elements theoretische Daten sein.

Vorzugsweise umfasst das Ermitteln der Phasenfunktion die Schritte

- Vermessen einer Gitterprojektion in einer vorgegebene Ebene $(\bar{x}^0, \bar{y}^0$;
- Ermitteln einer Phasenfunktion $\psi^0(\bar{x}^0, \bar{y}^0)$ in einem globalen Koordinatensystem $(\bar{x}^0, \bar{y}^0, \bar{z}^0)$ mittels einer Auffassung der in der Ebene $(\bar{x}^0, \bar{y}^0)$ projizierten Gitterlinien als Kurven $\psi^0(\bar{x}^0, \bar{y}^0)$ = *const.* = 0,1,2..., wobei für alle Punkte, welche zwischen den Gitterlinien liegen, die Werte der Phasenfunktion durch Interpolation erhalten werden;
- Transformation der ermittelten Phasenfunktion $\psi^0(\bar{x}^0, \bar{y}^0)$ in ein lokales Koordinatensystem $(\bar{x}, \bar{y}, \bar{z})$ dessen $\bar{z}$-Achse senkrecht zur der Grundfläche in der Bewertungsstelle steht:

$$\psi(\bar{x}, \bar{y}) = \psi^0\left(\bar{x}^0(\bar{x}, \bar{y}), \bar{y}^0(\bar{x}, \bar{y})\right)$$

- Festlegen einer Wellenlänge und einer Beugungsordnung;
- Ermitteln der Phasenfunktion $\Psi(\bar{x}, \bar{y})$ nach der Gleichung $\Psi(\bar{x}, \bar{y}) = \Psi(\bar{x}, \bar{y}; \lambda, m) = m\lambda \cdot \psi(\bar{x}, \bar{y})$,

wobei das globale Koordinatensystem $(\bar{x}^0, \bar{y}^0, \bar{z}^0)$ ein Koordinatensystem ist, welches zur Beschreibung der Grundfläche durch ihre Pfeilhöhe dient; und das lokale Koordinatensystem $\bar{x}, \bar{y}, \bar{z}$ ein lokales Koordinatensystem ist, welches dazu dient, den Hindurchtritt eines (Haupt)Strahls durch eine Grenzfläche zu beschreiben, wobei am Durchstoßpunkt des Hauptstrahls mit der Grenzfläche $(\bar{x}, \bar{y}, \bar{z})$ = (0,0,0) gilt, und wobei die $\bar{z}$-Achse am Durchstoßpunkt senkrecht zur Grundfläche steht.

Die Ebene $(\bar{x}^0, \bar{y}^0)$ ist dabei die Ebene, welche senkrecht zu der Richtung $\bar{z}^0$ des globalen Koordinatensystems steht. Das globale Koordinatensystem $(\bar{x}^0, \bar{y}^0, \bar{z}^0)$ kann ein beliebiges Koordinatensystem sein, z.B. ein Koordinatensystem, dessen Ursprung mit dem Scheitel der Grundfläche zusammenfällt, wobei die $(\bar{x}^0, \bar{y}^0)$ Ebene tangential zu der Grundfläche am Scheitel ist.

Das Verfahren zum Auswerten zumindest einer optischen Eigenschaft kann ferner ein Vergleichen der an der zumindest einen Bewertungsstelle bestimmten optischen Eigenschaft mit einem vorgegebenen Sollwert für die zumindest eine optische Eigenschaft an der zumindest einen Bewertungsstelle umfassen.

Anhand des Vergleichs kann z.B. entschieden werden, ob das optische Element vorgegebene Gütekriterien erfüllt. Wenn das optische Element ein Brillenglas ist, kann der vorgegebene Sollwert für die zumindest eine optische Eigenschaft an der zumindest einen Bewertungsstelle anhand der Rezeptdaten eines Brillenträgers, welche mittels einer Refraktionsbestimmung ermittelt worden sind, bestimmt werden.

Das Verfahren zum Auswerten zumindest einer optischen Eigenschaft eines optischen Elements kann ferner die Ausgabe der an der zumindest einen Bewertungsstelle bestimmten optischen Eigenschaft und/oder des Ergebnisses des Vergleichs der an der zumindest einen Bewertungsstelle bestimmten optischen Eigenschaft mit einem vorgegebenen Sollwert umfassen. Die Ausgabe kann z.B. mittels geeigneter graphischer Benutzerschnittstellen (GUI) erfolgen. Die Ausgabe kann z.B. in Form von Isolinienplotts der Verteilung der zumindest einen optischen Eigenschaft über das optische Element erfolgen.

Das Verfahren zum Auswerten zumindest einer optischen Eigenschaft eines optischen Elements umfassend zumindest ein phasenänderndes optisches Element kann insbesondere Bestandteil eines Qualitätssicherungsverfahrens sein. Wenn z.B. entschieden wird, dass das optische Element die vorgegebenen Gütekriterien nicht erfüllt, kann das optische Element aussortiert oder nachbearbeitet werden.

Das Verfahren zum Auswerten zumindest einer optischen Eigenschaft eines optischen Elements kann ebenfalls Teil eines Optimierungs- und Herstellungsverfahrens sein. Das optische Element kann z.B. im Rahmen eines iterativen Optimierungsverfahrens solange verändert werden, bis die Entscheidung, ob das optische Element die vorgegebenen Gütekriterien erfüllt, positiv ausfällt. Alternativ kann das iterative Optimierungsverfahren nach einer bestimmten Anzahl von Schritten abgebrochen werden. Vorzugsweise umfasst das Optimierungsverfahren ein Minimieren oder Maximieren einer Zielfunktion.

Die zumindest eine optische Eigenschaft kann eine Abbildungseigenschaft zweiter Ordnung, wie z.B. ein Astigmatismus und/oder eine sphärische Wirkung; und/oder eine Abbildungseigenschaft dritter Ordnung, wie z.B. ein Koma und/oder ein Dreiblattfehler (Trefoil); und/oder eine Abbildungseigenschaft vierter Ordnung, wie z.B. sphärische Aberration sein. Es ist selbstverständlich möglich, auch andere optische Eigenschaften zu berechnen und auszuwerten, insbesondere andere optische Eigenschaften höherer Ordnungen.

Vorzugsweise wird die zumindest eine optische Eigenschaft an einer Vielzahl von Bewertungsstellen ausgewertet, wobei die Vielzahl von Bewertungsstellen zumindest 1000, vorzugsweise zumindest 2000, weiter bevorzugt zumindest 5000, besonders bevorzugt zumindest 10000 Bewertungsstellen umfasst. Grundsätzlich gibt es keine Beschränkung in der Anzahl der Bewertungsstellen. So kann die Anzahl der Bewertungsstellen über 20000 sein.

Vorzugsweise ist das optische Element ein Brillenglas. Die Grenzfläche mit dem zumindest einen phasenändernden optischen Element kann die Vorder- oder die Rückfläche des Brillenglases sein. Es ist jedoch möglich, dass die Grenzfläche mit dem zumindest einen phasenändernden optischen Element eine Innenfläche eines Compound-Systems oder eines Laminat-Systems ist, welches z.B. aus einem ersten optischen Element (z. B. einem Grundglas) und einem zweiten optischen Element (z.B. einem Deckglas) aufgebaut ist.

Vorzugsweise erfolgt das Bestimmen zumindest einer optischen Eigenschaft des Brillenglases unter Berücksichtigung einer vorgegebenen, durchschnittlichen oder individuellen Gebrauchsstellung des Brillenglases und/oder eines vorgegebenen durchschnittlichen oder individuellen Objektabstandsmodells. Die durchschnittliche oder individuelle Gebrauchsstellung des Brillenglases wird insbesondere durch durchschnittliche oder individuelle Parameter der Augen des Brillenträgers und Parameter der Anordnung des Brillenglases vor den Augen des Brillenträgers charakterisiert. Parameter der Augen des Brillenträgers und/oder der Anordnung des Brillenglases vor den Augen des Brillenträgers umfassen den Hornhautscheitelabstand, den Fassungsscheibenwinkel, die Vorneigung, die Pupillendistanz und andere durchschnittliche oder individuelle Parameter.

Das Objektabstandsmodell kann ein Modell sein, welches jedem Hauptstrahl eine Objektentfernung zuordnet. Die Objektentfernungen können in Abhängigkeit von der zur erfüllenden Sehaufgabe, der Anwendungssituation des Brillenglases bzw. der Brille, und andere individuelle Benutzerspezifische Parameter festgelegt werden. Ebenfalls ist es möglich, ein standardisiertes Objektabstandsmodell zu verwenden, z.B. das in DIN 58 208 Teil 2 (vgl. Bild 6) festgelegte Objektabstandsmodell.

Somit ist es möglich, die optischen Eigenschaften in tatsächlicher Gebrauchsstellung des optischen Elements auch beim Vorhandensein zumindest eines phasenändernden optischen Elements exakt zu berechnen und auszuwerten.

Vorzugsweise ist das phasenändernde optische Element ein diffraktives Gitter. Unter dem Begriff "diffraktives Gitter" oder "diffraktives optisches Element" (DOE) wird jedes phasenändernde optische Element verstanden, bei welchem Beugungseffekte von Relevanz sind. Das diffraktive Gitter umfasst in der Regel eine im Wesentlichen regelmäßige, vorzugsweise periodische oder quasi-periodische, linienartige Anordnung von Strukturen oder Bereichen, in denen das Licht so beeinflusst wird, dass Beugungseffekte von Relevanz sind. Das diffraktive Gitter kann sowohl ein fein strukturiertes diffraktives Gitter als auch ein grob strukturiertes diffraktives Gitter (wie z.B. MOD=Multi-Order-Diffraction Gitter) sein. Das diffraktive Gitter kann zum Beispiel ein Transmissionsgitter, ein mechanisch geteiltes Gitter, insbesondere ein Sägezahn- oder Blazegitter, ein holographisches Gitter, ein Gitter, welches durch eine dünne Folie oder Schicht mit variierendem Brechungsindex (Gradient-Index-Material) realisiert wird, sein. Die Strukturen der eingesetzten diffraktiven Gitter können statisch oder insbesondere elektrisch schaltbar sein.

Vorzugsweise werden diffraktive Gitter eingesetzt, bei welchen der Gangunterschied zwischen zwei benachbarten Gitterlinien typischerweise einer Beugungsordnung von $|m| = 1$ bis $|m| = 4$ entspricht. Ebenfalls ist es möglich, ein MOD-Gitter zu verwenden, bei welchem der Gangunterschied typischerweise in der Größenordnung $|m| \approx 20$ liegt. Das diffraktive Gitter kann in der ersten Beugungsordnung verwendet werden. Es ist jedoch möglich, das diffraktive Gitter nicht in erster Beugungsordnung, sondern in einer höheren Ordnung zu verwenden. Das diffraktive Gitter kann eine Grenzfläche aufweisen, welche gegen Luft berechnet wird. Es ist ebenfalls möglich, eine Grenzfläche des diffraktiven Gitters nicht gegen Luft, sondern gegen ein anderes Material zu berechnen.

Das Profil des diffraktiven Gitters kann geeignet festgelegt oder dimensioniert werden. Das Profil des Gitters wird vorzugsweise so festgelegt, dass die Beugungseffizienz für eine bestimmte Beugungsordnung maximal ist. Anders ausgedrückt kann das Profil des Gitters so festgelegt werden, dass sich die Intensität des gebeugten Lichts möglichst in einer Beugungsordnung konzentriert. Vorzugsweise ist das Gitterprofil sägezahnförmig. Insbesondere kann eine sägezahnförmige (engl. biazed) Grenzfläche zwischen einem dispergierenden Grundmaterial und Luft eingesetzt werden. Die laterale Skala des Gitters, d.h. die Gitterkonstante, kann in der Größenordnung der Wellenlänge liegen. Es ist jedoch auch möglich, diffraktive Gitter einzusetzen, wobei die Gitterkonstante nicht in der Größenordnung der Wellenlänge liegt, sondern um bis zu einem Faktor 100 darüber. Das diffraktive Gitter kann mit einem anderen Gitter überlagert/kombiniert werden, z.B. mit einem Fresnel-Gitter, welches eine von Null unterschiedliche dioptrische Wirkung aufweist. Die Periode des Gittes kann - wie nachfolgend beschrieben wird - geeignet bestimmt werden.

Im Fall eines Brillenglases kann sich das diffraktive Gitter im Wesentlichen über den gesamten Blickwinkelbereich bzw. über den gesamten Bereich des Basisglases erstrecken. Das Gitter kann in zentrierter Weise um einen vorgegebenen Bezugspunkt, insbesondere um den Prismenbezugspunkt oder um den Zentrier- bzw. Anpaßpunkt, oder um die geometrische Mitte des rohrunden Brillenglases angeordnet werden. Es ist jedoch ebenfalls möglich, das diffraktive Gitter dezentriert anzuordnen. Das Gitter kann auf eine oder auf beide refraktive Grenzflächen des Brillenglases aufgebracht werden. Es ist jedoch auch möglich, ein Compound-System vorzusehen, welches aus einem Grundglas und einem Deckglas aufgebaut ist, wobei die Gitterstrukturen auf den geschützten Innenseiten des Grundglases und/oder des Deckglases (d.h. die sich gegenüber stehenden Seiten des Grund- und des Deckglases) aufgebracht sind.

Ein weitere Aspekt der Erfindung betrifft ein Computerprogrammerzeugnis, d.h. ein in der Patentanspruchskategorie einer Vorrichtung beanspruchtes Computerprogramm, sowie ein Speichermedium mit darauf gespeichertem Computerprogramm, wobei das Computerprogramm ausgelegt ist, wenn geladen und ausgeführt auf einem Computer, ein bevorzugtes beispielhaftes zum Auswerten zumindest einer optischen Eigenschaft eines optischen Elements durchzuführen.

Des weiteren wird eine Vorrichtung zum (automatischen) Auswerten zumindest einer optischen Eigenschaft eines optischen Elements an zumindest einer Bewertungsstelle vorgeschlagen, wobei die Vorrichtung Rechenmittel umfasst, welche ausgelegt sind, ein beispielhaftes Verfahren zum Auswerten zumindest einer optischen Eigenschaft eines optischen Elements durchzuführen.

Die Rechenmittel können mittels geeignet konfigurierten bzw. programmierten Computern, spezialisierte Hardware und/oder Computernetze oder Computersysteme und so weiter implementiert werden. Die Vorrichtung kann ferner umfassen:

Erfassungsmittel zum Erfassen von Flächendaten der zumindest einen refraktiven Grundfläche und des phasenändernden optischen Elements;

Speichermittel zum Speichern von Flächendaten der zumindest einen refraktiven Grundfläche und des phasenändernden optischen Elements und/oder zum Speichern der bestimmten zumindest einen optischen Eigenschaft; und/oder

Ausgabemittel zur Ausgabe der an der zumindest einen Bewertungsstelle bestimmten optischen Eigenschaft und/oder des Ergebnisses des Vergleichs der an der zumindest einen Bewertungsstelle bestimmten optischen Eigenschaft mit einem vorgegebenen Sollwert.

Ferner kann die Vorrichtung Erfassungsmittel umfassen, welche ausgelegt sind, Daten bezüglich einer zu erreichenden Wirkung des optischen Elements und/oder Daten bezüglich einer individuellen oder durchschnittlichen Gebrauchsstellung des optischen Elements (z.B. des Brillenglases) zu erfassen.

Die Erfassungsmittel, die Speichermittel, und/oder die Ausgabemittel können miteinander und mit den Rechenmittel in Signalverbindung stehen.

Ein weiterer Aspekt der Erfindung betrifft ein Verfahren zum Herstellen eines optischen Elements umfassend zumindest ein phasenänderndes optisches Element, welches auf einer refraktive Grundfläche angeordnet ist, umfassend die Schritte

Vorgeben eines zu optimierenden optischen Elements;

Optimieren bzw. Modifizieren des vorgegebenen optischen Elements, derart dass an zumindest einer Bewertungsstelle die Abweichung des Werts zumindest einer optischen Eigenschaft des optischen Elements von einem Sollwert minimiert wird, wobei die zumindest eine optische Eigenschaft nach einem beispielhaften Verfahren zum Auswerten zumindest einer optischen Eigenschaft des optischen Elements ausgewertet wird. Vorzugsweise werden an mehreren Bewertungsstellen die Abweichungen der Werte zumindest einer optischen Eigenschaft des optischen Elements von entsprechenden Sollwerten (im Sinne eines bestmöglichen Kompromisses) minimiert.

Vorzugsweise erfolgt das Verfahren iterativ, wobei nach jedem Schritt des Modifizierens des optischen Elements ein Auswerten an zumindest einer Bewertungsstelle zumindest einer optischen Eigenschaft des modifizierten optischen Elements, ein Bewerten des modifizierten optischen Elements in Abhängigkeit von der zumindest einer optischen Eigenschaft und gegebenenfalls ein weiteres Modifizieren des optischen Elements erfolgt. Das iterative Verfahren kann nach einem festgelegten Schritt abgebrochen werden. Vorzugsweise wird das Verfahren dann abgebrochen, wenn das Bewerten des optischen Elements positiv ist, d.h. wenn ein bestimmtes Gütekriterium erfüllt wird.

Das Verfahren zum Herstellen eines optischen Elements kann ferner ein Bereitstellen von Bearbeitungsdaten des optimierten bzw. gegebenenfalls in mehreren Schritten modifizierten optischen Elements umfassen. Die Bearbeitungsdaten können Flächendaten der Grundfläche sowie Daten des phasenändernden optischen Elements umfassen. Ebenfalls können die Bearbeitungsdaten Daten bezüglich der weiteren Grenzflächen des optischen Elements und/oder der Dicke des optischen Elements und/oder des Brechungsindex des optischen Elements umfassen. Ebenfalls kann das Verfahren zum Herstellen eines optischen Elements ein Fertigstellen des optischen Elements nach den bereitgestellten Bearbeitungsdaten umfassen. Verfahren zum Herstellen von optischen Elementen mit zumindest einem phasenändernden optischen Element sind aus dem Stand der Technik bekannt.

Vorzugsweise umfasst das Optimieren oder Modifizieren des vorgegebenen optischen Elements eine Berechnung einer Zielfunktion, welche von der zumindest einen optischen Eigenschaft (Abbildungseigenschaft) abhängt. Vorzugsweise erfolgt die Optimierung derart, dass Abbildungsfehler zumindest zweiter Ordnung minimiert werden. Ist das optische Element ein Brillenglas kann die Zielfunktion eine monokulare oder binokulare Zielfunktion sein.

Eine beispielhafte monochromatische Zielfunktion ist eine Zielfunktion der Form:

$$F_{\text{monochrom}} = \sum_i g_Z(i)(Z_\Delta(i) - Z_{\Delta,\text{Soll}}(i))^2 + g_S(i)(S_\Delta(i) - S_{\Delta,\text{Soll}}(i))^2$$

wobei $S_\Delta$ und $Z_\Delta$ den entsprechenden Refraktionsfehler des sphärischen Äquivalents und den Betrag der astigmatischen Abweichung, $S_{\Delta,\text{Soll}}$, $Z_{\Delta,\text{Soll}}$ die entsprechenden Sollwerte, und $g_Z(i)$ und $g_S(i)$ die entsprechenden Gewichtungen bezeichnen.

Die monochromatische Zielfunktion kann für eine vorgegebene Wellenlänge ausgewertet werden. Vorzugsweise ist die Zielfunktion jedoch eine polychromatische Zielfunktion, welche die Wellenlängenabhängigkeit der optischen Eigenschaften unmittelbar oder mittelbar (z.B. durch Berücksichtigung der Farbfehler) berücksichtigt.

Die polychromatische Zielfunktion kann z.B. eine Zielfunktion des Typs:

$$\text{Typ 1)} \qquad F_1 = \sum_\lambda F_{\text{monochrom}}(\lambda),$$

$$\text{Typ 2)} \qquad F_2 = F_{\text{monochrom}}(\lambda_0) + \sum_i g_{\text{FLF}}(i) \times f(\mathbf{S}_{\text{SK}}(i,\lambda_2) - \mathbf{S}_{\text{SK}}(i,\lambda_1))^2,$$

$$\text{Typ 3)} \qquad F_3 = F_{\text{monochrom}}(\lambda_0) + \sum_i g_{\text{FQF}}(i) \times g(\Delta\varphi_{\text{SK}}(i,\lambda_2,\lambda_1))^2$$

sein.

In den obigen Formeln bezeichnen

$F_{\text{monochrom}}(\lambda)$ eine monochromatische Zielfunktion für die Wellenlänge $\lambda$;
$g_{\text{FLF}}(i)$ die Gewichtung des Farblängsfehlers an der $i$-ten Bewertungsstelle des optischen Elements;
$g_{\text{FQF}}(i)$ die Gewichtung des Farbquerfehlers an der $i$-ten Bewertungsstelle des optischen Elements;
$\mathbf{S}_{\text{SK}}(i,\lambda_1)$ die Vergenzmatrix der Wellenfront an der Scheitelpunktkugel für die Wellenlänge $\lambda_1$ und für die $i$-te Bewertungsstelle;
$\mathbf{S}_{\text{SK}}(i,\lambda_2)$ die Vergenzmatrix der Wellenfront an der Scheitelpunktkugel für die Wellenlänge $\lambda_2$ und für die $i$-te Bewertungsstelle; und
$f(\mathbf{S}_{\text{SK}}(i,\lambda_2) - \mathbf{S}_{\text{SK}}(i,\lambda_1))$ eine Funktion der Differenz der Vergenzmatrizen der Wellenfront an der Scheitelpunktkugel für zwei unterschiedlichen Wellenlängen $\lambda_1$ und $\lambda_2$;
$\Delta\varphi_{\text{SK}}(i,\lambda_2,\lambda_1)$ den Winkel zwischen den objektseitigen Hauptstrahlen für die unterschiedlichen Wellenlängen $\lambda_1$ und $\lambda_2$
und $g(\Delta\varphi_{\text{SK}}(i,\lambda_2,\lambda_1))$ eine Funktion des Winkels zwischen den objektseitigen Hauptstrahlen für die unterschiedlichen Wellenlängen $\lambda_1$ und $\lambda_2$.

Bei der polychromatischen Zielfunktion des ersten Typs wird eine beliebige monochromatische Zielfunktion als Funktion der Wellenlänge aufgefasst, für zumindest zwei unterschiedliche Wellenlängen ausgewertet und über den Satz von zumindest zwei unterschiedlichen Wellenlängen summiert. So können z.B. die Farbfehler des optischen Elements mittelbar durch die Wellenlängenabhängigkeit der in die Zielfunktion eingehenden Größen berücksichtigt werden.

Bei der polychromatischen Zielfunktion des zweiten Typs wird eine beliebige monochromatische Zielfunktion bei einer vorgegebenen Wellenlänge $\lambda_0$ (Arbeitswellenlänge) ausgewertet. Zu dieser Funktion wird noch ein Term hinzugenommen, welcher von der Differenz $(\mathbf{S}_{\text{SK}}(i,\lambda_2) - \mathbf{S}_{\text{SK}}(i,\lambda_1))$ der Vergenzmatrizen für zumindest zwei unterschiedliche Wellenlängen $\lambda_1$ und $\lambda_2$ abhängt. Die Art der Abhängigkeit kann verschieden ausgewählt werden. Insbesondere kann die Funktion $f$ für den dioptrischen Abstand zwischen den Vergenzmatrizen oder für die Differenz der sphärischen Äquivalente stehen. Im letzteren Fall stellt die Funktion $f$ einen Strafterm für den Farblängsfehler dar. Die Funktion $f$ kann eine beliebige Funktion sein, für die $f(\mathbf{0}) = 0$ ist. Bevorzugt ist $f$ so zu wählen, dass $f(\mathbf{S}_{\text{SK}}(i,\lambda_2) - \mathbf{S}_{\text{SK}}(i,\lambda_1))$ umso größer ist, je größer der dioptrische Abstand zwischen $\mathbf{S}_{\text{SK}}(i,\lambda_2)$ und $\mathbf{S}_{\text{SK}}(i,\lambda_1)$ ist. In einer anderen bevorzugten Aus-

führungsform ist $f(\mathbf{S}_{SK}(i,\lambda_2)-\mathbf{S}_{SK}(i,\lambda_1))$ umso größer, je größer der Abstand zwischen den sphärischen Äquivalenten von $\mathbf{S}_{SK}(i,\lambda_2)$ und $\mathbf{S}_{SK}(i,\lambda_1)$ ist.

Bei der polychromatischen Zielfunktion des dritten Typs wird eine beliebige monochromatische Zielfunktion bei einer vorgegebenen Wellenlänge $\lambda_0$ (Arbeitswellenlänge) ausgewertet. Zu dieser Zielfunktion wird ein zusätzlicher Term aufgenommen, welcher von dem Farbquerfehler abhängt. So stellt die Funktion $g(\Delta\varphi_{SK}(i,\lambda_2,\lambda_1))$ einen Strafterm für den Farbquerfehler dar, welcher durch den Winkel $\Delta\varphi_{SK}(i,\lambda_2,\lambda_1)$ zwischen den objektseitigen Hauptstrahlen für die unterschiedlichen Wellenlängen $\lambda_1$ und $\lambda_2$ gegeben ist. Die Funktion $g$ kann z.B. die Identität, eine trigonometrische Funktion oder eine andere geeignete Funktion sein.

Beispiele von Zielfunktionen des ersten bis dritten Typs sind:

$$\text{1a)}\quad F_1 = \sum_{i,\lambda} g_Z(i,\lambda)(Z_\Delta(i,\lambda)-Z_{\Delta,\text{Soll}}(i,\lambda))^2 + g_S(i,\lambda)(S_\Delta(i,\lambda)-S_{\Delta,\text{Soll}}(i,\lambda))^2$$

$$\text{2a)}\quad F_2 = \sum_i \left( \begin{array}{l} g_Z(i)(Z_\Delta(i,\lambda_0)-Z_{\Delta,\text{Soll}}(i,\lambda_0))^2 + g_S(i)(S_\Delta(i,\lambda_0)-S_{\Delta,\text{Soll}}(i,\lambda_0))^2 \\ + g_{\text{FLF}}(i)\times f(\mathbf{S}_{SK}(i,\lambda_2)-\mathbf{S}_{SK}(i,\lambda_1))^2 \end{array} \right)$$

$$\text{3a)}\quad F_3 = \sum_i \left( \begin{array}{l} g_Z(i)(Z_\Delta(i,\lambda_0)-Z_{\Delta,\text{Soll}}(i,\lambda_0))^2 + g_S(i)(S_\Delta(i,\lambda_0)-S_{\Delta,\text{Soll}}(i,\lambda_0))^2 \\ + g_{\text{FQF}}(i)\times g(\Delta\varphi_{SK}(i,\lambda_2,\lambda_1))^2 \end{array} \right)\quad.$$

Hier bezeichnen

$Z_\Delta(i,\lambda)$ den Ist-Wert des Betrags des astigmatischen Fehlers an der $i$-ten Bewertungsstelle des optischen Elements für die Wellenlänge $\lambda$;

$Z_{\Delta,\text{Soll}}(i,\lambda)$ den Sollwert des Betrags des astigmatischen Fehlers an der $i$-ten Bewertungsstelle des optischen Elements für die Wellenlänge $\lambda$;

$S_\Delta(i,\lambda)$ den Ist-Wert des Refraktionsfehlers an der $i$-ten Bewertungsstelle des optischen Elements für die Wellenlänge $\lambda$;

$S_{\Delta,\text{Soll}}(i,\lambda)$ den Sollwert des Refraktionsfehlers an der $i$-ten Bewertungsstelle des optischen Elements für die Wellenlänge $\lambda$;

$g_Z(i,\lambda)$ die Gewichtung des Betrags der astigmatischen Abweichung an der $i$-ten Bewertungsstelle des optischen Elements für die Wellenlänge $\lambda$;

$g_S(i,\lambda)$ die Gewichtung des Refraktionsfehlers an der $i$-ten Bewertungsstelle des optischen Elements für die Wellenlänge $\lambda$.

Es ist ebenfalls möglich, eine andere geeignete, polychromatische Zielfunktion einzusetzen, z.B. eine Zielfunktion, welche eine Kombination der zuvor beschriebenen Zielfunktionen ist. Insbesondere kann die Zielfunktion Terme erhalten, welche sowohl von dem Farblängsfehler als auch von dem Farbquerfehler abhängen. Durch die simultane Optimierung zumindest einer der refraktiven Flächen des Basisglases und des Basisgitters kann eine optimale Korrektur des Farbsaums des Brillenglases, vorzugsweise für alle Blickrichtungen, erreicht werden.

Das Optimieren oder Modifizieren des optischen Elements kann insbesondere eine Abänderung bzw. ein Optimieren der refraktiven Grundfläche und/oder des phasenändernden optischen Elements umfassen. Anders ausgedrückt können die Grundfläche und/oder das zumindest eine phasenändernde optische Element Freiheitsgrade bei der Optimierung darstellen. Vorzugsweise werden daher die refraktive Grundfläche und/oder das zumindest eine phasenändernde optische Element und insbesondere dessen Phasenfunktion mittels einer flexiblen mathematischen Darstellung beschrieben. Die flexible mathematische Darstellung kann z.B. eine Spline-Darstellung, eine polynomische Darstellung, oder eine andere geeignete Darstellung mit zumindest einem Freiheitsgrad bzw. mit zumindest einem variablen Parameter/Koeffizient sein.

Es ist jedoch ebenfalls möglich, bei festgehaltener refraktiven Grundfläche und festgehaltenem diffraktiven Gitter eine andere Grenzfläche des optischen Elements abzuändern bzw. zu optimieren.

Ein weiterer Aspekt der Erfindung betrifft eine Vorrichtung zum Herstellen eines optischen Elements, insbesondere eines Brillenglases mit zumindest einem phasenändernden optischen Element, umfassend

Vorgabemittel zur Vorgabe eines zu optimierenden optischen Elements;

Optimierungsmittel, welche ausgelegt sind, ein Optimieren oder Optimieren oder Modifizieren des vorgegebenen optischen Elements durchzuführen, derart dass an zumindest einer Bewertungsstelle die Abweichung des Werts zumindest einer optischen Eigenschaft des optischen Elements von einem Sollwert minimiert wird, wobei die zumindest eine optische Eigenschaft nach einem beispielhaften Verfahren zum Auswerten zumindest einer optischen Eigenschaft des optischen Elements ausgewertet wird.

Insbesondere sind die Optimierungsmittel derart ausgelegt, eines der oben beschriebenen beispielhaften Optimierungsverfahren durchzuführen.

Die Vorrichtung zum Herstellen eines optischen Elements kann ferner Speichermittel zum Speichern von Bearbeitungsdaten des optimierten oder modifizierten optischen Elements umfassen. Des Weiteren kann die Vorrichtung Bearbeitungsmittel, welche ausgelegt sind, das optische Element nach den bereitgestellten Bearbeitungsdaten zu fertigen, umfassen.

Weitere Aufgaben, Merkmale und Vorteile der vorliegenden Erfindung werden aus der nachfolgenden Beschreibung beispielhafter Ausführungsformen mit Bezug auf die Zeichnungen ersichtlich. Es zeigen:

Fig. 1 Schemazeichnung des Strahlverlaufs für eine Strahldurchrechnung und Wellenfrontdurchrechnung bei einem optischen System;

Fig. 2 Schemazeichnung des Strahlverlaufs für eine Strahldurchrechnung und Wellenfrontdurchrechnung bei einem Brillenglas;

Fig. 3 Strahlverlauf im Fall einer ebenen Grenzfläche mit einem diffraktiven Gitter;

Fig. 3A die gegenseitige Lage des Koordinatensystems der einfallenden Wellenfront und des Koordinatensystems der Grundfläche;

Fig. 4 zeigt Gitterlinien eines einfach periodischen, diffraktiven Gitters auf einer ebenen Grenzfläche;

Fig. 5 zeigt Gitterlinien eines diffraktiven Gitters auf einer ebenen Grenzfläche;

Fig. 6 zeigt Gitterlinien eines diffraktiven Gitters auf einer gekrümmten Grenzfläche;

Fig. 7 ein Ablaufschema, welches den Übergang zwischen dem Vektorfeld $\mathbf{d}(\bar{x}^0, \bar{y}^0)$ und der Phasenfunktion $\psi^0(\bar{x}^0, \bar{y}^0)$ illustriert;

Fig. 8 den Farblängsfehler (Fig. 8A) und den Farbquerfehler (Fig. 8B) eines Glases gemäß einem ersten Vergleichsbeispiel, welches nach einer monochromatischen Zielfunktion optimiert worden ist;

Fig. 9 den Farblängsfehler (Fig. 9A) und den Farbquerfehler (Fig. 9B) von Gläsern, welche jeweils nach einer polychromatischen Zielfunktion eines ersten Typs (erstes Beispiel) und eines zweiten Typs 2 (zweites Beispiel) optimiert worden sind;

Fig. 10A die Rezeptwirkung, die refraktive Wirkung, die diffraktive Wirkung und die Gesamtwirkung in der Glasmitte als Funktion der Wellenlänge des Glases gemäß dem ersten Vergleichsbeispiel;

Fig. 10B die Rezeptwirkung, die refraktive Wirkung, die diffraktive Wirkung und die Gesamtwirkung in der Glasmitte als Funktion der Wellenlänge für zwei Gläser gemäß dem ersten und dem zweiten Beispiel;

Fig. 11 den Farblängsfehler (Fig. 11A) und den Farbquerfehler (Fig. 11 B) eines Glases gemäß einem zweiten Vergleichsbeispiel, welches nach einer monochromatischen Zielfunktion optimiert worden ist;

Fig. 12 den Farblängsfehler (Fig. 12A) und den Farbquerfehler (Fig. 12B) eines Glases, gemäß einem dritten Beispiel, welches nach einer polychromatischen Funktion eines ersten Typs optimiert worden ist;

Fig. 13 den Farblängsfehler (Fig. 13A) und den Farbquerfehler (Fig. 13B) eines Glases, gemäß einem vierten Beispiel, welches nach einer polychromatischen Funktion eines zweiten Typs optimiert worden ist;

Fig. 14A die Rezeptwirkung, die refraktive Wirkung, die diffraktive Wirkung und die Gesamtwirkung in der Glasmitte als Funktion der Wellenlänge des Glases gemäß dem zweiten Vergleichsbeispiel;

Fig. 14B die Rezeptwirkung, die refraktive Wirkung, die diffraktive Wirkung und die Gesamtwirkung in der Glasmitte als Funktion der Wellenlänge des Glases gemäß dem dritten Beispiel;

Fig. 14C die Rezeptwirkung, die refraktive Wirkung, die diffraktive Wirkung und die Gesamtwirkung in der Glasmitte als Funktion der Wellenlänge des Glases gemäß dem vierten Beispiel;

Fig. 15A den Refraktionsfehler bei der Wellenlänge $\lambda_C$, den Refraktionsfehler bei der Wellenlänge $\lambda_F$ und den Farblängsfehler bei einem Glas gemäß dem zweiten Vergleichsbeispiel;

Fig. 15B den Refraktionsfehler bei der Wellenlänge $\lambda_C$, den Refraktionsfehler bei der Wellenlänge $\lambda_F$ und den Farblängsfehler bei dem Glas gemäß dem dritten Beispiel;

Fig. 15C den Refraktionsfehler bei der Wellenlänge $\lambda_C$, den Refraktionsfehler bei der Wellenlänge $\lambda_F$ und den Farblängsfehler bei dem Glas gemäß dem vierten Beispiel;

Fig. 16A-C Farbsaum eines Brillenglases für verschiedene Blickwinkel a) 0° b) 10° c) 20° d) 30°, wobei Fig. 16A eine unkorrigierte Abbildung durch ein monochromatisch optimiertes Brillenglas; Fig. 16B eine Abbildung durch ein farbsaumkorrigiertes Brillenglas, ohne eine asphärische Nachoptimierung der refraktiven Flächen; Fig. 16C eine Abbildung durch ein Brillenglas, welches mittels einer simultanen Farbsaumoptimierung und einer asphärischen Nachoptimierung optimiert worden ist;

Fig. 17    eine exemplarische Farbsaumkorrektur eines unkorrigierten Einstärkenglases, wobei Fig. 17A den Farbsaum eines unkorrigierten Einstärkenglases mit einer Abbezahl von 58,5; Fig. 17B den Farbsaum eines Einstärkenglases mit einer Abbezahl von 40,5 und Fig. 17C den Farbsaum eines farbsaumkorrigiertes Einstärkenglases mit einer effektiven Abbezahl von ungefähr 130 zeigt;

Fig. 18    eine exemplarische Farbsaumkorrektur eines progressiven Brillenglases, wobei Fig. 18A den Astigmatismus in Gebrauchsstellung des Brillenglases, Fig. 18B die diffraktive Phase bzw. die Form der Gitterlinien des diffraktiven Gitters, Fig. 18C den Farbsaum des unkorrigierten Brillenglases und Fig. 18D den Farbsaum des korrigierten Brillenglases zeigt.

Das nachfolgende Beispiel bezieht sich auf ein optisches Element, wobei das phasenändernde optische Element ein diffraktives Gitter ist. Ferner ist das optische Element ein Brillenglas. Alle Ausführungen gelten jedoch sinngemäß ebenfalls für beliebige optische Elemente, welche anstelle eines diffraktiven Gitters ein beliebiges phasenänderndes optisches Element aufweisen.

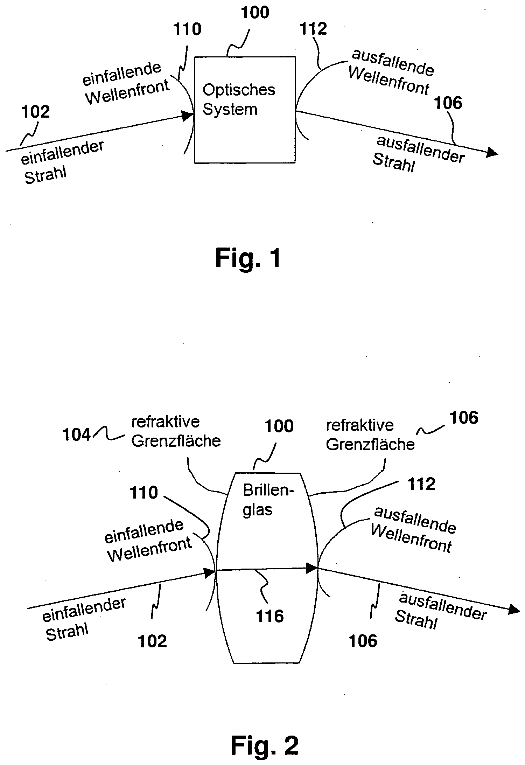

Der Durchgang des Lichts durch ein beliebiges optisches Element, welches auch mehrere optische Komponenten umfassen kann, bzw. durch ein beliebiges optisches System 100 kann anhand von Strahldurchrechnung und Wellenfrontdurchrechnung beschrieben werden, wie in **Fig. 1** und **Fig. 2** schematisch gezeigt. Dabei hat eine Strahldurchrechnung die Aufgabe, zu einem gegebenen optischen Element/System 100 aus einem einfallenden Strahl 102, welcher bis zur Eintrittsfläche 104 des optischen Elements/Systems gegeben ist, den ausfallenden Strahl 108 auszurechnen, der an der Austrittsfläche 106 aus dem Element/System ausfällt. Eine Wellenfrontdurchrechnung hat die Aufgabe, zu einem gegebenen optischen Element/System 100 aus einer einfallenden Wellenfront 110, die an der Eintrittsfläche 104 eines optischen Elements/Systems 100 gegeben ist, die ausfallende Wellenfront 112 an der Austrittsfläche 106 aus dem Element/System 100 zu berechnen. Eine lokale Wellenfrontdurchrechnung hat die Aufgabe, zu einem gegebenen optischen Element/System 100 aus den lokalen Eigenschaften einer einfallenden Wellenfront 112, die an der Eintrittsfläche 104 des optischen Elements 100 gegeben ist, die lokalen Eigenschaften der ausfallende Wellenfront 112 an der Austrittsfläche 112 des Elements/Systems 100 zu berechnen.

Ein optisches Element bzw. ein optisches System kann aus einer beliebigen Abfolge von dünnen Grenzflächen, homogenen Materialien oder inhomogenen Materialien bestehen. Insbesondere kann ein optisches Element (z.B. ein Brillenglas, wie in Fig. 2 gezeigt) aus der Abfolge aus einer gekrümmten refraktiven Grenzfläche 104 von Luft in ein dichteres homogenes Material 114, dem Durchgang 116 durch das Material und einer zweiten gekrümmten refraktiven Grenzfläche 106 zurück in Luft bestehen. **Fig. 2** zeigt schematisch die Strahldurchrechnung und Wellenfrontdurchrechnung durch ein solches optisches Element.

Zur Verbesserung von optischen Elementen bzw. von optischen Systemen, insbesondere von Brillengläsern, kann es jedoch von Vorteil sein, zusätzlich optische Komponenten in den Strahlengang zu bringen, die auf anderen physikalischen Effekten beruhen als auf reiner Refraktion an einer gekrümmten Grenzfläche. So ist vorgeschlagen worden, diffraktive optische Elemente, für welche Beugungseffekte von Bedeutung sind, einzusetzen. Insbesondere kann ein solches Element phasenverzögernd oder phasenmodulierend sein und zwar derart, dass die Änderung der optischen Weglänge durch Hinzufügen des Elements vom Durchtrittspunkt des Strahls abhängt.

Bisher sind jedoch keine Verfahren bekannt, welche es ermöglichen, eine genaue Durchrechnung der Eigenschaften (insbesondere der Abbildungseigenschaften) von optischen Elementen, welche ebenfalls diffraktive optische Komponenten umfassen, insbesondere unter Berücksichtigung einer vorgegebenen Gebrauchsstellung des optischen Elements, durchzuführen.

Nachfolgend wird eine erweiterte Wellenfrontdurchrechnung für den Fall von komplexen optischen Elementen, welche zumindest ein diffraktives Gitter aufweisen, im Detail beschrieben. Das Verfahren kann auch als eine Erweiterung der, z.B. aus der Druckschrift WO 2008/089999A1 bekannten, Wellenfrontdurchrechnung durch rein refraktive Grenzflächen auf den Fall von komplexen optischen Systemen mit zumindest einem diffraktiven Gitter betrachtet werden.

Die elementarste Beschreibung einer Wellenfrontdurchrechnung zweiter Ordnung durch eine rein refraktive Grenzfläche ist im Stand der Technik (siehe z.B. der Lehrbuch "Optik und Technik der Brille" von H. Diepes und R. Blendowske, 2002 Optische Fachveröffentlichung GmbH, Heidelberg, Seite 485 ff.) als sogenannte BAD-Gleichung oder anders genannt Vergenzgleichung bekannt. Im Fall einer rotationssymmetrischen, refraktiven Fläche und unter einem senkrechten Strahleinfall lautet die BAD Gleichung (die Vergenzgleichung)

$$B = A + D . \qquad\qquad (101)$$

Dabei ist $A$ die Vergenz (also ein Maß für die lokale Wellenfrontkrümmung) der einfallenden Wellenfront, $B$ die Vergenz der ausfallenden Wellenfront und D der Flächenbrechwert der brechenden Fläche.

Wenn die Voraussetzungen für Rotationssymmetrie nicht erfüllt sind, dann wird für rein refraktive Flächen nach dem Stand der Technik (siehe z.B. das oben zitierte Lehrbuch "Optik und Technik der Brille") die BAD-Gleichung vektoriell geschrieben, also

$$\mathbf{B} = \mathbf{A} + \mathbf{D}. \tag{102}$$

Dabei ist **A** die Powervektorform der Vergenzmatrix der einfallenden Wellenfront, **B** die Powervektorform der Vergenzmatrix der ausfallenden Wellenfront und **D** die Powervektorform der Flächenbrechwertmatrix der brechenden Fläche. Statt eines Powervektors können auch Linearkombinationen von Powervektorkomponenten, die zu einem neuen Vektor zusammengefasst werden, verwendet werden. Insbesondere können dabei die Normalkrümmungen und die Torsion, also die zweiten Ableitungen nach den Querkoordinaten und die gemischte Ableitung, verwendet werden.

Statt der Symbolen $A$ bzw. **A**, $B$ bzw. **B** und D bzw. **D** werden häufig die folgenden Symbole verwendet:

$A$ bzw. **A** $\rightarrow S$ bzw. **S**
$B$ bzw. **B** $\rightarrow S$' bzw. **S'**
$D$ bzw. **D** $\rightarrow F$ bzw. **F**.

Die Gleichungen (101) und (102) lauten dann entsprechend $S' = S + F$ und **S' = S + F**.

Falls der Strahleinfall nicht senkrecht erfolgt, lassen sich nach dem Stand der Technik für rein refraktive Grenzflächen weitere Modifikationen der BAD-Gleichung einführen, mit denen sich der Wellenfrontdurchgang dann wieder exakt beschreiben lässt (siehe z.B. G. Esser, W. Becken, W. Müller, P. Baumbach, J. Arasa, and D. Uttenweiler, "Derivation of the refraction equations for higher-order aberrations of local wavefronts at oblique incidence", JOSA. A, Vol. 27, Nr. 2, Februar 2010, Seiten 218 - 237). Diese Modifikationen stellen die Coddington-Gleichung und die verallgemeinerte Coddington-Gleichung für Abbildungsfehler zweiter und höherer Ordnung dar. Insbesondere wird in der Publikation von G. Esser et al. die Powervektorform der verallgemeinerten Coddington-Gleichung für Abbildungsfehler zweiter und höherer Ordnung beschrieben.

Die aus dem Stand der Technik bekannten Gleichungen (in Powervektorform) für die Wellenfrontdurchrechnungen zweiter und höherer Ordnung bei einem Durchgang durch eine rein refraktive Grenzfläche sind in Tabelle 1 zusammengefasst:

**Tabelle 1**

|  |  | senkrechter Einfall + Rotationssymmetrie | senkrechter Einfall ohne Rot. symmetrie | keine Symmetrie |
|---|---|---|---|---|
| 2.Ordnung | | $S'^{(2)} = S^{(2)} + F^{(2)}$ <br> alternative Schreibweise: <br> $S' = S + F$ <br> $B = A + D$ | $\mathbf{S'}^{(2)} = \mathbf{S}^{(2)} + \mathbf{F}^{(2)}$ <br> alternative Schreibweise: <br> **S'=S+F** <br> **B=A+D** | $\mathbf{T'}_2\mathbf{S'}^{(2)} = \mathbf{T}_2\mathbf{S}^{(2)} + {}_v\mathbf{F}^{(2)}$ |
| 3.Ordnung | | $S'^{(3)} = S^{(3)} + F^{(3)} + R_3(S^{(2)}, F^{(2)})$ | $\mathbf{S'}^{(3)} = \mathbf{S}^{(3)} + \mathbf{F}^{(3)} + \mathbf{R}_3(\mathbf{S}^{(2)}, \mathbf{F}^{(2)})$ | $\mathbf{T'}_3\mathbf{S'}^{(3)} = \mathbf{T}_3\mathbf{S}^{(3)} + {}_v\mathbf{F}^{(3)} + \mathbf{Q}_3(\mathbf{S}^{(2)}, \mathbf{F}^{(2)})$ |
| 4.Ordnung | | $S'^{(4)} = S^{(4)} + F^{(4)} + R_4(S^{(3)}, F^{(3)}, S^{(2)}, F^{(2)})$ | $\mathbf{S'}^{(4)} = \mathbf{S}^{(4)} + \mathbf{F}^{(4)} + \mathbf{R}_4(\mathbf{S}^{(3)}, \mathbf{F}^{(3)}, \mathbf{S}^{(2)}, \mathbf{F}^{(2)})$ | $\mathbf{T'}_4\mathbf{S'}^{(4)} = \mathbf{T}_4\mathbf{S}^{(4)} + {}_v\mathbf{F}^{(4)} + \mathbf{Q}_4(\mathbf{S}^{(3)}, \mathbf{F}^{(3)}, \mathbf{S}^{(2)}, \mathbf{F}^{(2)})$ |
| etc. | | | | |

Tabellen 1 A bis 1C enthalten Erläuterungen zu den in der Tabelle 1 enthaltenen Gleichungen für die 2. Ordnung (Tabelle 1A), für die dritte Ordnung (Tabelle 1 B) und für die vierte Ordnung (Tabelle 1 C).

**Tabelle 1 A**

| | |
|---|---|
| $S^{(2)} = nW_{\text{In}}^{(2)}(0)$ | Vergenz der einfallenden Wellenfront : Brechungsindex auf der Einfallsseite multipliziert mit der zweiten Ableitung der Pfeilhöhe der einfallenden Wellenfront |
| $S'^{(2)} = n'W_{\text{Out}}'^{(2)}(0)$ | Vergenz der ausfallenden Wellenfront : Brechungsindex auf der Ausfallsseite multipliziert mit der zweiten Ableitung der Pfeilhöhe der ausfallenden Wellenfront |

(fortgesetzt)

| | |
|---|---|
| $F^{(2)} = (n'-n)\overline{S}^{(2)}(0)$ | Flächenbrechwert der brechenden Fläche: Brechungsindexdifferenz multipliziert mit der zweiten Ableitung der Pfeilhöhe der brechenden Fläche |
| $S$ bzw. $A$ | Vergenz der einfallenden Wellenfront |
| $S'$ bzw. $B$ | Vergenz der ausfallenden Wellenfront |
| $F$ bzw. $D$ | Flächenbrechwert der brechenden Fläche |
| $\mathbf{S}^{(2)} = n\begin{pmatrix} W_{In}^{(2,0)}(0,0) \\ W_{In}^{(1,1)}(0,0) \\ W_{In}^{(0,2)}(0,0) \end{pmatrix}$ | Brechungsindex auf der Einfallsseite multipliziert mit dem Powervektor der zweiten Ableitung der Pfeilhöhe einfallenden Wellenfront |
| $\mathbf{S'}^{(2)} = n\begin{pmatrix} W'^{(2,0)}_{Out}(0,0) \\ W'^{(1,1)}_{Out}(0,0) \\ W'^{(0,2)}_{Out}(0,0) \end{pmatrix}$ | Brechungsindex auf der Ausfallsseite multipliziert mit dem Powervektor der zweiten Ableitung der Pfeilhöhe ausfallenden Wellenfront |
| $\mathbf{F}^{(2)} = (n'-n)\begin{pmatrix} \overline{S}^{(2,0)}(0,0) \\ \overline{S}^{(1,1)}(0,0) \\ \overline{S}^{(0,2)}(0,0) \end{pmatrix}$ | Brechungsindexdifferenz multipliziert mit dem Powervektor der zweiten Ableitungen der Pfeilhöhe der brechenden Fläche |
| $\mathbf{S}$ bzw. $\mathbf{A}$ | Powervektor der Vergenz der einfallenden Wellenfront |
| $\mathbf{S'}$ bzw. $\mathbf{B}$ | Powervektor der Vergenz der ausfallenden Wellenfront |
| $\mathbf{F}$ bzw. $\mathbf{D}$ | Powervektor des Flächenbrechwerts der brechenden Fläche |
| $\mathbf{T}_2$ | vom Einfallswinkel abhängige Matrix zur Korrektur des schiefen Einfalls |
| $\mathbf{T'}_2$ | vom Ausfallswinkel abhängige Matrix zur Korrektur des schiefen Einfalls |
| $v = n'\cos\varphi'-n\cos\varphi$ | Faktor zur Korrektur des schiefen Einfalls |

**Tabelle 1B:**

| | |
|---|---|
| $S^{(3)} = nW_{In}^{(3)}(0)$ | Brechungsindex auf der Einfallsseite multipliziert mit der dritten Ableitung der Pfeilhöhe einfallenden Wellenfront |
| $S'^{(3)} = n'W'^{(3)}_{Out}(0)$ | Brechungsindex auf der Ausfallsseite multipliziert mit der dritten Ableitung der Pfeilhöhe der ausfallenden Wellenfront |
| $F^{(3)} = (n'-n)\overline{S}^{(3)}(0)$ | Brechungsindexdifferenz multipliziert mit der dritten Ableitung der Pfeilhöhe der brechenden Fläche |
| $\mathbf{S}^{(3)} = n\begin{pmatrix} W_{In}^{(3,0)}(0,0) \\ W_{In}^{(2,1)}(0,0) \\ W_{In}^{(1,2)}(0,0) \\ W_{In}^{(0,3)}(0,0) \end{pmatrix}$ | Brechungsindex auf der Einfallsseite multipliziert mit dem Powervektor der dritten Ableitung der Pfeilhöhe der einfallenden Wellenfront |

(fortgesetzt)

| | |
|---|---|
| $$\mathbf{S}'^{(3)} = n \begin{pmatrix} W'^{(3,0)}_{\text{Out}}(0,0) \\ W'^{(2,1)}_{\text{Out}}(0,0) \\ W'^{(1,2)}_{\text{Out}}(0,0) \\ W'^{(0,3)}_{\text{Out}}(0,0) \end{pmatrix}$$ | Brechungsindex auf der Ausfallsseite multipliziert mit dem Powervektor der dritten Ableitung der Pfeilhöhe der ausfallenden Wellenfront |
| $$\mathbf{F}^{(3)} = (n'-n) \begin{pmatrix} \overline{S}^{(3,0)}(0,0) \\ \overline{S}^{(2,1)}(0,0) \\ \overline{S}^{(1,2)}(0,0) \\ \overline{S}^{(0,3)}(0,0) \end{pmatrix}$$ | Brechungsindexdifferenz multipliziert mit dem Powervektor der dritten Ableitung der Pfeilhöhe der brechenden Fläche |
| $\mathbf{T}_3$ | vom Einfallswinkel abhängige Matrix zur Korrektur des schiefen Einfalls |
| $\mathbf{T}'_3$ | vom Ausfallswinkel abhängige Matrix zur Korrektur des schiefen Einfalls |
| $v = n'\cos\varphi' - n\cos\varphi$ | Faktor zur Korrektur des schiefen Einfalls |
| $R_3(S^{(2)}, F^{(2)})$ | Zusatzterm, der nur von den Größen niedrigerer Ordnung (hier 2. Ordnung) abhängt |
| $\mathbf{R}_3(\mathbf{S}^{(2)}, \mathbf{F}^{(2)})$ | vektorieller Zusatzterm, der nur von den Größen niedrigerer Ordnung (hier 2. Ordnung) abhängt |
| $\mathbf{Q}_3(\mathbf{S}^{(2)}, \mathbf{F}^{(2)})$ | vektorieller Zusatzterm, der den schiefen Einfall berücksichtigt, und der nur von den Größen niedrigerer Ordnung (hier 2. Ordnung) abhängt |

**Tabelle 1C**

| | |
|---|---|
| $R_4(S^{(3)}, F^{(3)}, S^{(2)}, F^{(2)})$ | Zusatzterm, der nur von den Größen niedrigerer Ordnung (hier 2. und 3. Ordnung) abhängt |
| $\mathbf{R}_4(\mathbf{S}^{(3)}, \mathbf{F}^{(3)}, \mathbf{S}^{(2)}, \mathbf{F}^{(2)})$ | vektorieller Zusatzterm, der nur von den Größen niedrigerer Ordnung (hier 2. und 3. Ordnung) abhängt |
| $\mathbf{Q}_4(\mathbf{S}^{(3)}, \mathbf{F}^{(3)}, \mathbf{S}^{(2)}, \mathbf{F}^{(2)})$ | vektorieller Zusatzterm, der den schiefen Einfall berücksichtigt, und der nur von den Größen niedrigerer Ordnung (hier 2. und 3. Ordnung) abhängt |

Die Form der Zusatzterme $R_3(S^{(2)}, F^{(2)})$, $\mathbf{R}_3(\mathbf{S}^{(2)}, \mathbf{F}^{(2)})$, $\mathbf{Q}_3(\mathbf{S}^{(2)}, \mathbf{F}^{(2)})$ ist ferner in der Veröffentlichung [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] beschrieben. Diese Terme verschwinden, sobald die Terme niedrigerer Ordnung $S^{(2)}$, $F^{(2)}$ bzw. $\mathbf{S}^{(2)}$,$\mathbf{F}^{(2)}$ verschwinden bzw. gleich Null sind.

Die weiteren Erläuterungen für die 4. Ordnung, etc. sind analog zu den Erläuterungen für die 2. und 3. Ordnung.

Es hat sich überraschenderweise herausgestellt, dass die Gleichungen, welche die Wellenfrontdurchrechnung zweiter und höherer Ordnung durch gewöhnliche refraktive Grenzflächen beschreiben, sich in vergleichsweise einfacher Weise modifizieren lassen, so dass ebenfalls diffraktive optische Elemente bzw. diffraktive Gitter mit einbezogen werden können. Dabei kann entweder der Durchgang von Licht durch ein isoliertes diffraktives Gitter beschrieben werden oder der Durchgang durch eine unmittelbar aufeinanderfolgende Kombination aus einem diffraktiven Gitter und einer refraktiven Grenzfläche.

Ferner hat sich herausgestellt, dass sich jedem beliebigen, auch nicht-rotationssymmetrischen, diffraktiven Gitter auch bei beliebigen schiefwinkligen Strahleinfallbedingungen eine im Allgemeinen vektorielle Größe $\mathbf{PK}^{(k)}$, $k = 2,3,4,...$, nachfolgend auch Phasenkrümmung (für $k = 2$) bzw. Phasenableitungen (für $k > 2$) genannt, zuordnen lässt, so dass die entsprechende BAD Gleichung und die Gleichungen höherer Ordnung für refraktive Flächen im Wesentlichen nur additiv um den Zusatzterm $\mathbf{PK}^{(k)}$, $k = 2,3,4,...$ erweitert werden müssen, um die Vergenzen beim Wellenfrontdurchgang bei Anwesenheit eines nicht-rotationssymmetrischen diffraktiven Gitters korrekt zu beschreiben.

Mit anderen Worten ist es auch in jeder noch so asymmetrischen Situation, für die sich für rein refraktive Flächen die Wellenfrontdurchrechnung exakt beschreiben ließe, ausreichend, die entsprechende Gleichung im Wesentlichen nur durch einen additiven Zusatzterm **PK** zu erweitern, um auch das diffraktive Gitter korrekt zu beschreiben.

Ferner ist erkannt worden, dass die Vergenz der ausfallenden Wellenfront unabhängig von der Reihenfolge ist, in der die brechende Fläche und das diffraktive Gitter aufeinander folgen.

Im Falle einer Wellenfrontdurchrechnung zweiter Ordnung (d.h. für $k = 2$) für ein rotationssymmetrisches, diffraktives Gitter und unter senkrechtem Strahleinfall wird Gleichung (101) somit additiv um den Zusatzterm $PK^{(2)}$ erweitert, um die Vergenzen beim Wellenfrontdurchgang auch bei Anwesenheit eines diffraktiven Gitters korrekt zu beschreiben:

$$B = A + D + PK^{(2)}. \qquad (103)$$

Die Gleichung (101) ist allerdings nur exakt gültig für den Fall, dass der Strahl senkrecht auf die brechende Fläche trifft und die einfallende Wellenfront und die brechende Fläche rotationssymmetrisch sind. Aber auch für Abweichungen von diesen Voraussetzungen ist Gleichung (101) eine gute Näherung. Entsprechend ist dann Gleichung (103) eine gute Näherung bei Anwesenheit eines diffraktiven Gitters. Im Fall einer Wellenfrontdurchrechnung zweiter Ordnung (d.h. für $k = 2$) für ein nicht-rotationssymmetrisches diffraktives Gitter und bei einem senkrechten Strahleinfall kann dem diffraktiven Gitter eine vektorielle Größe $PK^{(2)}$ zugeordnet werden, so dass die entsprechende vektorielle BAD-Gleichung nur additiv um den vektoriellen Zusatzterm $PK^{(2)}$ erweitert werden muss, um die Vergenzen beim Wellenfrontdurchgang bei Anwesenheit eines nicht-rotationssymmetrischen diffraktiven Gitters korrekt zu beschreiben. In diesem Fall gilt

$$\mathbf{B} = \mathbf{A} + \mathbf{D} + \mathbf{PK}^{(2)}. \qquad (104)$$

Wie nachfolgend im Detail dargelegt wird, kann jedem beliebigen, auch nicht-rotationssymmetrischen, diffraktiven Gitter auch unter beliebigen schiefwinkligen Strahleinfallbedingungen ebenfalls eine im Allgemeinen vektorielle Größe $\mathbf{PK}^{(k)}$ zugeordnet werden, so dass die entsprechende allgemeine BAD-Gleichung und die Gleichungen höherer Ordnung für die Wellfrontdurchrechnung durch refraktive Flächen im Wesentlichen nur additiv um den Zusatzterm $\mathbf{PK}^{(k)}$ ($\mathbf{PK}^{(2)}, \mathbf{PK}^{(3)} \mathbf{PK}^{(4)}, ...$) erweitert werden müssen, um die Vergenzen beim Wellenfrontdurchgang bei Anwesenheit eines nicht-rotationssymmetrischen diffraktiven Gitter korrekt zu beschreiben.

Es ist ferner erkannt worden, dass die Komponenten des additiven Zusatzterms $\mathbf{PK}^{(k)}$ durch den Vektor der Ableitungen zweiter oder höherer Ordnung einer Phasenfunktion $\Psi(\overline{x},\overline{y})$ nach den Koordinaten $\overline{x},\overline{y}$ tangential zur brechenden Fläche (Grundfläche) beschrieben werden können. Für den additiven Zusatzterm zweiter Ordnung gilt z.B.:

$$\mathbf{PK}^{(2)} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2\Psi(\overline{x},\overline{y})/\partial\overline{x}^2 \\ \partial^2\Psi(\overline{x},\overline{y})/\partial\overline{x}\partial\overline{y} \\ \partial^2\Psi(\overline{x},\overline{y})/\partial\overline{y}^2 \end{pmatrix}\Bigg|_{(\overline{x},\overline{y})=(0,0)} \qquad (105)$$

Aus diesem Grunde wird der additive Zusatzterm zweiter Ordnung $\mathbf{PK}^{(2)}$ auch "Phasenkrümmung" genannt.

Die Phasenfunktion $\Psi(\overline{x},\overline{y})$ stellt die optische Pfadlängendifferenz (Optical Path Difference oder OPD), welche durch das diffraktive Gitter eingeführt wird, als Funktion der Koordinaten $\overline{x},\overline{y}$ tangential zur brechenden Fläche dar. Die Beschreibung eines diffraktiven Gitters durch die Phasenfunktion $\Psi(\overline{x},\overline{y})$ ermöglicht, den additiven Zusatzterm $\mathbf{PK}^{(k)}$ ($\mathbf{PK}^{(2)}, \mathbf{PK}^{(3)}, \mathbf{PK}^{(4)},...$) konstruktiv zu bestimmen. Anders ausgedrückt wird vorgeschlagen, zur Beschreibung eines beliebigen diffraktiven Gitters eine Phasenfunktion $\Psi(\overline{x},\overline{y})$ zu verwenden, wobei der additive Zusatzterm $\mathbf{PK}(k)$($\mathbf{PK}^{(2)}, \mathbf{PK}^{(3)}, \mathbf{PK}^{(4)},...$) durch den Vektor der Ableitungen zweiter oder höheren Ordnung der Phasenfunktion nach den Koordinaten $\overline{x},\overline{y}$ tangential zur brechenden Fläche gegeben ist (vgl. Gleichung (105) für $k = 2$).

Tabelle 2 fasst die Gleichungen bzw. Wellenfrontgleichungen (in Powervektorform) für die Wellenfrontdurchrechnung bei dem Durchgang durch eine refraktive Grenzfläche (Grundfläche) zusammen, auf welcher zusätzlich ein phasenänderndes optisches Element aufgebracht ist. Tabellen 2A und 2B enthalten Erläuterungen zu den in der Tabelle 2 enthaltenen Gleichungen für die 2. Ordnung (Tabelle 2A) und für die dritte Ordnung (Tabelle 2B).

**Tabelle 2**

| | senkrechter Einfall + Rotationssymmetrie | senkrechter Einfall ohne Rot.-Symmetrie | keine Symmetrie |
|---|---|---|---|
| 2.Ord. | $S'^{(2)} = S^{(2)} + F^{(2)} - \Psi^{(2)}$ <br> alternative Schreibweise: <br> $S' = S + F + PK^{(2)}$ <br> $B = A + D + PK^{(2)}$ | $\mathbf{S}'^{(2)} = \mathbf{S}^{(2)} + \mathbf{F}^{(2)} - \Psi^{(2)}$ <br> alternative Schreibweise: <br> $\mathbf{S}' = \mathbf{S} + \mathbf{F} + \mathbf{PK}^{(2)}$ <br> $\mathbf{B} = \mathbf{A} + \mathbf{D} + \mathbf{PK}^{(2)}$ | $\mathbf{T}'_2\mathbf{S}'^{(2)} = \mathbf{T}_2\mathbf{S}^{(2)} + \nu\mathbf{F}^{(2)} - \Psi^{(2)}$ <br> alternative Schreibweise: <br> $\mathbf{T}'_2\mathbf{S}'^{(2)} = \mathbf{T}_2\mathbf{S}^{(2)} + \nu\mathbf{F}^{(2)} + \mathbf{PK}^{(2)}$ |
| 3.Ord. | $S'^{(3)} = S^{(3)} + F^{(3)} - \Psi^{(3)} + R_3(S^{(2)},F^{(2)})$ <br> alternative Schreibweise: <br> $PK^{(3)} = -\Psi^{(3)}$ | $\mathbf{S}'^{(3)} = \mathbf{S}^{(3)} + \mathbf{F}^{(3)} - \Psi^{(3)} + \mathbf{R}_3(\mathbf{S}^{(2)},\mathbf{F}^{(2)})$ <br> alternative Schreibweise: <br> $\mathbf{PK}^{(3)} = -\Psi^{(3)}$ | $\mathbf{T}'_3\mathbf{S}'^{(3)} = \mathbf{T}_3\mathbf{S}^{(3)} + \nu\mathbf{F}^{(3)} - \Psi^{(3)} + \mathbf{Q}_3(\mathbf{S}^{(2)},\mathbf{F}^{(2)})$ <br> alternative Schreibweise: <br> $\mathbf{PK}^{(3)} = -\Psi^{(3)}$ |
| 4.Ord. | $S'^{(4)} = S^{(4)} + F^{(4)} - \Psi^{(4)} + R_4(S^{(3)},F^{(3)},S^{(2)},F^{(2)})$ <br> alternative Schreibweise: <br> $PK^{(4)} = \Psi^{(4)}$ | $\mathbf{S}'^{(4)} = \mathbf{S}^{(4)} + \mathbf{F}^{(4)} - \Psi^{(3)} + \mathbf{R}_4(\mathbf{S}^{(3)},\mathbf{F}^{(3)},\mathbf{S}^{(2)},\mathbf{F}^{(2)})$ <br> alternative Schreibweise: <br> $\mathbf{PK}^{(4)} = -\Psi^{(4)}$ | $\mathbf{T}'_4\mathbf{S}'^{(4)} = \mathbf{T}_4\mathbf{S}^{(4)} + \nu\mathbf{F}^{(4)} - \Psi^{(4)}$ <br> $+ \mathbf{Q}_4(\mathbf{S}^{(3)},\mathbf{F}^{(3)},\mathbf{S}^{(2)},\mathbf{F}^{(2)})$ <br> alternative Schreibweise <br> $\mathbf{PK}^{(4)} = -\Psi^{(4)}$ |
| etc. | | | |

**Tabelle 2A**

| | |
|---|---|
| $\Psi^{(2)} = \Psi^{(2)}(0)$ | zweite Ableitung der Phasenfunktion |
| $PK^{(2)} = -\Psi^{(2)}(0)$ | Phasenkrümmung, d.h. negative zweite Ableitung der Phasenfunktion |
| $\mathbf{\Psi}^{(2)} = \begin{pmatrix} \mathbf{\Psi}^{(2,0)}(0,0) \\ \mathbf{\Psi}^{(1,1)}(0,0) \\ \mathbf{\Psi}^{(0,2)}(0,0) \end{pmatrix}$ | Powervektor der zweiten Ableitungen der Phasenfunktion |
| $\mathbf{PK}^{(2)} = -\Psi^{(2)}(0,0)$ | Powervektor der Phasenkrümmung, d.h. der negativen |
| | zweiten Ableitungen der Phasenfunktion |

**Tabelle 2B**

| | |
|---|---|
| $\Psi^{(3)} = \Psi^{(3)}(0)$ | dritte Ableitung der Phasenfunktion |
| $PK^{(3)} = -\Psi^{(3)}(0)$ | Zusatzterm im Sinne der Erfindung, gegeben durch negative dritte Ableitung der Phasenfunktion |
| $\mathbf{\Psi}^{(3)} = \begin{pmatrix} \mathbf{\Psi}^{(3,0)}(0,0) \\ \mathbf{\Psi}^{(2,1)}(0,0) \\ \mathbf{\Psi}^{(1,2)}(0,0) \\ \mathbf{\Psi}^{(0,3)}(0,0) \end{pmatrix}$ | Powervektor der dritten Ableitungen der Phasenfunktion |
| $\mathbf{PK}^{(3)} = -\Psi^{(3)}(0,0)$ | Vektorieller Zusatzterm im Sinne der Erfindung, gegeben durch den Powervektor der negativen dritten Ableitungen der Phasenfunktion |

Die Gleichungen für die 4. Ordnung und für alle höheren Ordnungen sind analog aufgebaut.

Das Koordinatensystem $\bar{x},\bar{y},\bar{z}$ ist ein lokales Koordinatensystem, welches dazu dient, den Durchtritt eines Strahls durch eine Grenzfläche zu beschreiben, wobei am Durchstoßpunkt des Hauptstrahls mit der Grenzfläche $(\bar{x},\bar{y},\bar{z}) = (0,0,0)$ gilt, und wobei die $\bar{z}$-Achse dort senkrecht zur Grundfläche steht. Eine spezielle mögliche Wahl eines solchen lokalen Systems besteht darin, zu fordern, dass der einfallende Strahl beispielsweise in der $\bar{x}$-$\bar{z}$-Ebene oder in der $\bar{y}$-$\bar{z}$-Ebene liegt. Im Allgemeinen muss jedoch diese Bedingung nicht notwendigerweise erfüllt sein. Die Verwendung von lokalen Koordinatensystemen ist z.B. aus WO 2008/089999 A1 bekannt und wird z.B. bei der Wellenfrontdurchrechnung 2.Ordnung durch Flächen ohne diffraktive Gitter verwendet. Typischerweise werden so viele lokale Systeme wie Hauptstrahlen gerechnet werden sollen verwendet. Darüber hinaus kann ein globales Koordinatensystem verwendet werden.

Ebenfalls ist erkannt worden, dass sich ein Zusammenhang herstellen lässt zwischen den Gitterlinien des diffraktiven optischen Elements bzw. des diffraktiven Gitters und der Phasenfunktion $\Psi(\bar{x},\bar{y})$, welche darauf beruht, dass die Gitterlinien auf Kurven mit $\Psi(\bar{x},\bar{y})$ = *const.* liegen. Die Bestimmung der Phasenfunktion $\Psi(\bar{x},\bar{y})$ anhand von Parametern des diffraktiven Gitters wird nachfolgend im Detail beschrieben.

Ferner ist erkannt worden, dass anders als bei der Brechung an einer rein refraktiven Grenzfläche (wie z.B. in WO 2008 089999 A1 beschrieben), der einfallende Hauptstrahl, der ausfallende Hauptstrahl und der Normalenvektor der brechenden Fläche bei Vorhandensein eines diffraktiven Gitters im Allgemeinen nicht mehr in ein- und derselben Ebene liegen müssen.

Im einfachsten Fall einer refraktiven, homogenen Grenzfläche zwischen zwei Medien mit den Brechungsindizes $n$ und $n'$ ohne diffraktive optische Elemente bzw. diffraktive Gitter wird die Strahlablenkung durch das Brechungsgesetz $n'\sin\varphi' - n\sin\varphi = 0$, wobei $\varphi$ der Einfallswinkel und $\varphi'$ der Ausfallswinkel ist, beschrieben.

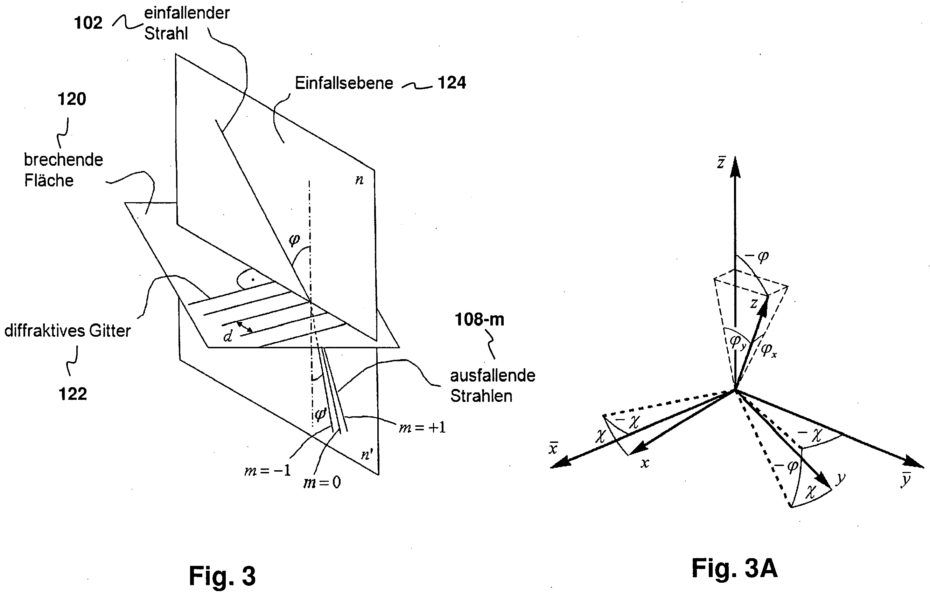

**Fig. 3** illustriert schematisch den Strahlengang bei Beugung an einer Grenzfläche 120 mit einem diffraktiven Gitter 122 in einem speziellen einfachen Fall, in welchem es möglich ist, die Strahlablenkung durch ein geschlossenes Gesetz zu beschreiben. Dieses Gesetz lässt sich als eine Modifikation dieses Brechungsgesetzes auffassen. Dieser Fall ist dadurch gekennzeichnet, dass die brechende Fläche 120 eine Ebene ist und das diffraktive Gitter 122 eine Unregelmäßigkeit dieser Fläche 120 ist, welche senkrecht zur Einfallsebene 124 translationsinvariant ist und in Richtung der Brechungsebene (die Ebene der brechenden Fläche 120) äquidistant mit Periode d ist (siehe **Fig. 3).** Die Unregelmäßigkeit kann z.B. ein Sägezahngitter sein, ein Rechteckgitter, ein Wechsel von lichtdurchlässigen und lichtundurchlässigen Zonen oder jede andere periodische Abweichung von der homogenen, ebenen, lichtdurchlässigen, brechenden Fläche. In diesem einfachen Fall wird ein einfallender monochromatischer Strahl 102, welcher zu Licht mit der Wellenlänge $\lambda$ gehört, durch Beugung in viele Einzelstrahlen 108-m, welche zu den verschiedenen Beugungsordnungen $m$, $m$ = ...,-2,-1,0,1,2,... gehören, aufgespalten. Die Beugungsordnung $m$ kann beliebig aber fest gewählt werden und nachfolgend kann die Situation für den einen Strahl zur Beugungsordnung $m$ isoliert, d.h. ungeachtet der möglichen anderen Beugungsordnungen, beschrieben werden. Für einen Strahl zur Beugungsordnung $m$ gilt dann das modifizierte Brechungsgesetz $n'\sin\varphi' - n\sin\varphi = m\lambda/d$, wobei $n$ und $n'$ jeweils den Brechungsindex des Materials vor und nach der Grenzfläche 120 bezeichnen und $\varphi$ der Einfallswinkel und $\varphi'$ der Ausfallswinkel ist.

Für jeden allgemeineren Fall, z.B. bei schräg zu den Gitterlinien einfallenden Strahlen, bei einem nicht äquidistanten Gitter und/oder bei einem Gitter mit gekrümmten Gitterlinien und/oder bei einer gekrümmten Fläche sind bisher keine umfassenden Gesetze für die Strahlablenkung und Wellenfrontrechnung bekannt. Um ein optisches Element mit beliebigen, insbesondere asphärischen Flächen und zumindest einem diffraktiven Gitter in Gebrauchsstellung unter Berücksichtigung der Abbildungsfehler 2.Ordnung (z.B. Brechkraft und Astigmatismus) und gegebenenfalls der Abbildungsfehler höherer Ordnung (z.B. Koma oder sphärische Aberration) berechnen oder optimieren zu können, ist es jedoch vorteilhaft, eine genaue Wellenfrontdurchrechnung auch für den allgemeinen Fall durchführen zu können.

Nachfolgend werden die Grundsätze der Strahl- und Wellenfrontdurchrechnung in dem allgemeinen Fall eines optischen Elements bzw. eines optischen Systems (z.B. eines Brillenglases) mit einem diffraktiven Gitter näher beschrieben.

**Koordinatensysteme**

Zunächst werden Größen eingeführt, welche eine Grenzfläche einschließlich zumindest eines diffraktiven Gitters möglichst allgemein beschreiben können. Hierzu werden - in Analogie zum Fall rein refraktiver Flächen - grundsätzlich zwei Arten von Koordinaten bzw. Koordinatensystemen verwendet.

Die eine Art sind globale Koordinaten $\bar{x}^0,\bar{y}^0,\bar{z}^0$, welche dazu dienen, die Grundfläche (d.h. die rein refraktive Fläche ohne das diffraktive Gitter durch ihre Pfeilhöhe $\bar{z}^0(\bar{x}^0,\bar{y}^0)$ zu beschreiben. Hierbei wird die gegebenenfalls vorhandene Pfeilhöhe des diffraktiven Gitters nicht zur Pfeilhöhe der Grundfläche hinzugerechnet. Stattdessen wird das diffraktive Gitter selbst durch eine separate Eigenschaft $h(\bar{x}^0,\bar{y}^0)$ beschrieben. Hierbei kann $h(\bar{x}^0,\bar{y}^0)$ die Rolle einer zusätzlichen Pfeilhöhe spielen, so dass die wahre (mikroskopische) physikalische Pfeilhöhe der Grenzfläche durch

$$\bar{z}_{\mathrm{m}}^0(\bar{x}^0,\bar{y}^0) = \bar{z}^0(\bar{x}^0,\bar{y}^0) + h(\bar{x}^0,\bar{y}^0)$$ gegeben ist. Es ist jedoch möglich, dass $h(\bar{x}^0,\bar{y}^0)$ die Rolle einer Transmissionseigenschaft oder einer sonstigen Eigenschaft des POE spielt.

Die andere Art von Koordinaten sind - wie oben beschrieben - lokale Koordinaten $\bar{x},\bar{y},\bar{z}$, welche dazu dienen, den Hindurchtritt eines Strahls durch die Grenzfläche so zu beschreiben, dass am Durchstoßpunkt $(\bar{x},\bar{y},\bar{z})$ = (0,0,0) gilt,

und dass die $\bar{z}$-Achse dort senkrecht zur Grundfläche steht. Eine spezielle mögliche Wahl eines solchen lokalen Systems besteht darin zu fordern, dass der einfallende Strahl in beispielsweise der $\bar{x}$-$\bar{z}$-Ebene oder der $\bar{y}$-$\bar{z}$-Ebene liegt. Im Allgemeinen muss jedoch diese Bedingung nicht notwendigerweise erfüllt sein. Die Verwendung von lokalen Systemen ist z.B. aus WO 2008/089999 A1 bekannt und wird z.B. bei der Wellenfrontdurchrechnung 2.Ordnung durch Flächen ohne diffraktives Gitter verwendet. Typischerweise wird nur ein globales Koordinatensystem, aber so viele lokale Systeme wie Strahlen gerechnet werden sollen, verwendet.

**Fig. 3A** stellt die Lage des Koordinatensystems $x,y,z$ der einfallenden Wellenfront bezüglich des Koordinatensystems $\bar{x},\bar{y},\bar{z}$ der brechenden Fläche (Grundfläche) dar, ausgedrückt durch die Winkel $\varphi_x$, $\varphi_y$, $\varphi$ und $\chi$.

In Fig. 3A sind der Einfachheit halber lediglich das Koordinatensystem der einfallenden Wellenfront und das Koordinatensystem der brechenden Fläche gezeigt. Das Koordinatensystem $x',y',z'$ der ausfallenden Wellenfront kann analog zu dem Koordinatensystem der einfallenden Wellenfront vorgegeben werden. Des Weiteren wird auf Fig. 1 in der Publikation [G. Esser, W. Becken, W. Müller, P. Baumbach, J. Arasa, und D. Uttenweiler, "Derivation of the refraction equations for higher-order aberrations of local wavefronts at oblique incidence", JOSA. A, Vol. 27, Nr. 2, Februar 2010, Seiten 218 - 237] verweisen, welche eine zweidimensionale Darstellung der entsprechenden gegenseitigen Lage für alle drei Koordinatensysteme zeigt.

**Beschreibung eines diffraktiven Gitters durch die Phasenfunktion $\Psi(\bar{x},\bar{y})$**

Die Phasenfunktion $\Psi(\bar{x},\bar{y})$ stellt die optische Pfadlängendifferenz (Optical Path Difference oder OPD), welche durch das diffraktive Gitter eingeführt wird, als Funktion der Koordinaten $\bar{x},\bar{y}$ tangential zur brechenden Fläche (Grundfläche) dar. Die Phasenfunktion $\Psi(\bar{x},\bar{y})$ kann anhand der Gitterlinien bestimmt werden. Umgekehrt ist es möglich bei einer vorgegebenen Phasenfunktion die Gitterlinien des entsprechenden diffraktiven Gitters zu bestimmen.

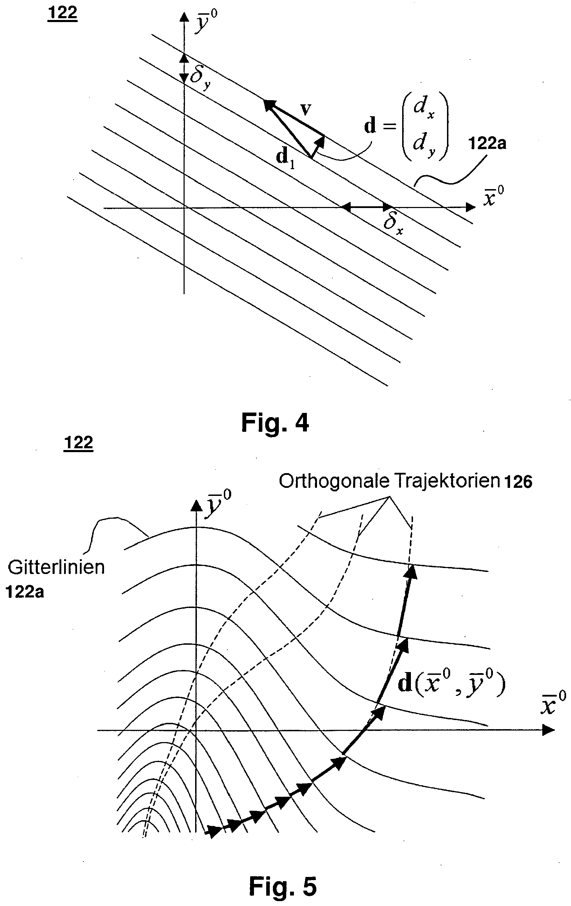

Im einfachsten Fall eines konstanten, äquidistanten diffraktiven Gitters 122 auf einer ebenen Fläche 120 (siehe z.B. **Fig. 3** und **Fig. 4),** die in globalen Koordinaten durch $\bar{z}^0(\bar{x}^0,\bar{y}^0) = a_x\bar{x}^0 + a_y\bar{y}^0 + t$ beschrieben wird, kann zwischen einem einfachperiodischen und einem doppelt-periodischen Gitter unterschieden werden.

Beim einfach-periodischen Gitter gibt es einen Periodenvektor $\mathbf{d}_1$, so dass für alle Punkte $\bar{r}^0 = (\bar{x}^0,\bar{y}^0)$

$$h(\bar{\mathbf{r}}^0 + \mathbf{d}_1) = h(\bar{\mathbf{r}}^0) \tag{106a}$$

gilt. Ferner gibt es eine Richtung mit Translationsinvarianz, d.h. einen Vektor $\mathbf{v}$ mit

$$h(\bar{\mathbf{r}}^0 + \alpha\mathbf{v}) = h(\bar{\mathbf{r}}^0) \tag{106b}$$

für alle $\alpha$.

In einem solchen Fall zeigen die Gitterlinien 112a in die Richtung von $\mathbf{v}$, dagegen muss $\mathbf{d}_1$ nicht unbedingt den Abstand zwischen den Gitterlinien 122a beschreiben, weil $\mathbf{d}_1$ nicht notwendigerweise senkrecht auf $\mathbf{v}$ stehen muss. In einem solchen Fall kann der Vektor $\mathbf{d}_1$ durch den Vektor mit den Komponenten $\mathbf{d} = \begin{pmatrix} d_x \\ d_y \end{pmatrix}$ ersetzt werden, welcher durch

$$\mathbf{d} = \mathbf{d}_1 - (\mathbf{d}_1 \cdot \mathbf{v})\mathbf{v} \tag{107}$$

definiert ist.

Dieser Vektor d steht senkrecht auf $\mathbf{v}$ und es gilt ferner

$$h(\overline{\mathbf{r}}^0 + \mathbf{d}) = h\left(\overline{\mathbf{r}}^0 + \mathbf{d}_1 - (\mathbf{d}_1 \cdot \mathbf{v})\mathbf{v}\right)$$
$$= h\left(\overline{\mathbf{r}}^0 + \mathbf{d}_1 - \alpha\mathbf{v}\right)$$
$$= h\left(\overline{\mathbf{r}}^0 + \mathbf{d}_1\right)$$
$$= h\left(\overline{\mathbf{r}}^0\right)$$

(108)

so dass auch der Vektor **d** ein Periodenvektor ist. Der Vektor **d** gibt jedoch im Gegensatz zu **d₁** auch den Abstand zwischen zwei Gitterlinien an (siehe **Fig. 4).** Die Gitterperiode ist dann durch den Betrag d = |**d**| gegeben.

Bei einem einfach-periodischen Gitter 122, wie z.B. in Fig. 4 gezeigt, existieren ferner noch zwei weitere Periodenvektoren von praktischer Bedeutung. Diese hängen vom Koordinatensystem ab und sind durch die Vektoren

$$\boldsymbol{\delta}_x = \begin{pmatrix} \delta_x \\ 0 \end{pmatrix}, \quad \boldsymbol{\delta}_y = \begin{pmatrix} 0 \\ \delta_y \end{pmatrix},$$

(109)

die in Richtung der Koordinatenachsen zeigen, gegeben (siehe Fig. 4). Der Zusammenhang zwischen d und den Vektoren $\delta_x, \delta_y$ ist durch:

$$\delta_x = \frac{|\mathbf{d}|^2}{d_x}, \quad \delta_y = \frac{|\mathbf{d}|^2}{d_y},$$

(110a)

sowie

$$d_x = \frac{\delta_x \delta_y^2}{\delta_x^2 + \delta_y^2}, \quad d_y = \frac{\delta_y \delta_x^2}{\delta_x^2 + \delta_y^2}$$

(110b)

gegeben.

Bei einem doppelt-periodischen Gitter 122 - existieren zwei Periodenvektoren **d₁,d₂** mit

$$h(\overline{\mathbf{r}}^0 + \mathbf{d}_1) = h(\overline{\mathbf{r}}_S)$$
$$h(\overline{\mathbf{r}}^0 + \mathbf{d}_2) = h(\overline{\mathbf{r}}_S)_.$$

(111)

Doppelt-periodisch in diesem Sinne bedeutet, dass es in keiner Richtung eine Translationsinvarianz gibt, d.h. es gibt keinen Vektor **v** mit $h(\overline{\mathbf{r}}^0 + \alpha\mathbf{v}) = h(\overline{\mathbf{r}}_S)$ für alle $\alpha$.

Aus Betrachtungen der Wellenoptik ergibt sich, dass eine ebene monochromatische Welle der Wellenlänge $\lambda$, die schräg auf ein einfach- oder doppelt-periodisches Gitter fällt, auf der ausfallenden Seite durch Interferenz zu einer richtungsabhängigen Intensitätsverteilung führt. Diese Verteilung lässt sich als Produkt aus zwei richtungsabhängigen Faktoren darstellen, wobei der eine Faktor (der Formfaktor) nur durch die Form des diffraktiven Gitters innerhalb einer Gitterperiode bestimmt wird, und der zweite Faktor (der Gitter- bzw. Beugungsfaktor) nur durch die Gitterperiodizität bestimmt wird. Der zweite Faktor nimmt ein Maximum in jeder einer solchen Richtung an, in der der Gangunterschied zwischen zwei Stellen des Wellenfeldes auf der Grenzfläche, die um eine Gitterperiode versetzt liegen, ein ganzzahliges Vielfaches der Wellenlänge des Lichts auf der ausfallenden Seite beträgt.

Wird im Bild der geometrischen Strahlenoptik dem einfallenden Wellenfeld der Richtungsvektor

$$\mathbf{N} = \begin{pmatrix} \sin \varphi_x \\ \sin \varphi_y \\ \sqrt{1 - \sin^2 \varphi_x - \sin^2 \varphi_y} \end{pmatrix} \tag{112a}$$

zugeordnet und auf der ausfallenden Seite einer jeder Richtung, in der ein Maximum des Gitterfaktors liegt, ein Richtungsvektor der Form

$$\mathbf{N'} = \begin{pmatrix} \sin \varphi'_x \\ \sin \varphi'_y \\ \sqrt{1 - \sin^2 \varphi'_x - \sin^2 \varphi'_y} \end{pmatrix} \tag{112b}$$

zugeordnet, dann werden die Strahlen durch die Gesetze

$$n' \sin \varphi'_x - n \sin \varphi_x = \frac{m_x \lambda}{\delta_x}$$
$$n' \sin \varphi'_y - n \sin \varphi_y = \frac{m_y \lambda}{\delta_y} \tag{113}$$

beschrieben, wobei $m_x$ = ..., -3, -2, -1,0, 1, 2, 3, ... und $m_y$ = ..., -3, -2, -1, 0, 1, 2, 3, ... ganze Zahlen sind. Die Gesetze (113) können als die erweiterten Brechungsgesetze bei Anwesenheit eines diffraktiven Gitters betrachtet werden. Insbesondere beschreibt der Fall $m_x$ = 0, $m_y$ = 0, d.h. die nullte Beugungsordnung, die Situation ohne diffraktive Elemente.

Bei einem doppelt-periodischen diffraktiven Element kommen alle ganzen Zahlen $m_x, m_y$ unabhängig voneinander vor. Bei einem einfach-periodischen Gitter kommen nur beitragsgleiche Beugungsordnungen $m_x = \sigma m_y$ vor, wobei $\sigma$ = +1 für den Fall gilt, dass die Gitterlinien für zunehmende Werte von $\bar{x}^0$ fallen (wie in **Fig. 4**, $\partial \bar{y}^0/\partial \bar{x}^0$ < 0) und $\sigma$ = -1 für den Fall steigender Gitterlinien gilt ($\partial \bar{y}^0/\partial \bar{x}^0$ > 0).

Nachfolgend werden einfach-periodische, diffraktiven Gitter ($m := m_x = \sigma m_y$) betrachtet. Alle Berechnungen können jedoch ebenfalls für den Fall von doppelt-periodischen diffraktiven Gittern entsprechend modifiziert werden.

Die Gleichung (113) mit $m := m_x = \sigma m_y$ auf der rechten Seite lässt sich so interpretieren, dass zwei Strahlen, die an zwei benachbarten Gitterlinien gebrochen werden, einen nichtverschwindenden Gangunterschied besitzen, d.h. eine Phasendifferenz, die proportional zu $m$ und proportional zu $\lambda$ ist. Somit gibt es zwei Möglichkeiten, den Verlauf der Gitterlinien zu charakterisieren, nämlich zum einen durch die (z.B. mit einem Mikroskop) messbaren, auf dem Vektor **d** basierenden Gittereigenschaften und zum anderen durch die abstrakte Eigenschaft, in den Strahlengang einen zusätzlichen ortsabhängigen Gangunterschied einzuführen. Im zweiten Fall wird der Verlauf der Gitterlinien durch die Differenz zwischen den Werten einer Phasenfunktion $\Psi^0(\bar{x}0,\bar{y}0;\lambda,m)$ bestimmt, welche außer von den Koordinaten $\bar{x}^0,\bar{y}^0$ auch noch von der Wellenlänge $\lambda$ und der Beugungsordnung $m$ abhängt. Da diese Phasenfunktion in jedem Fall proportional zu $\lambda$ und $m$ ist, können diese Faktoren abgespalten werden. Statt der Phasenfunktion $\Psi^0(\bar{x}^0,\bar{y}^0;\lambda,m)$ kann die Phasenfunktion $\psi^0(\bar{x}^0,\bar{y}^0)$ verwendet werden, wobei

$$\Psi^0(\bar{x}^0, \bar{y}^0; \lambda, m) = m\lambda \cdot \psi^0(\bar{x}^0, \bar{y}^0). \tag{114}$$

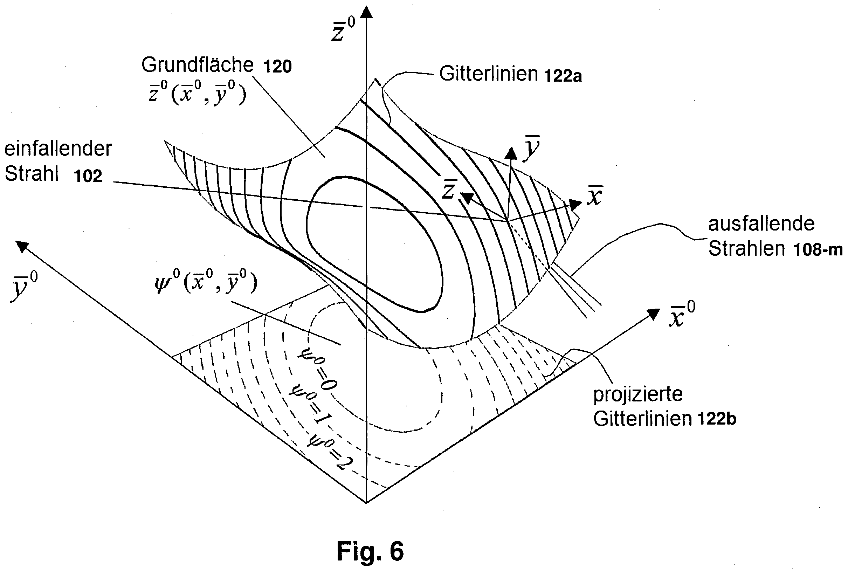

Fig. 5 zeigt Gitterlinien eines diffraktiven Gitters 122 auf einer ebenen Grenzfläche 120 und Fig. 6 zeigt Gitterlinien eines diffraktiven Gitters 122 auf einer gekrümmten Grenzfläche 122.

Außer im einfachsten Fall eines konstanten, äquidistanten Gittes auf einer ebenen Fläche verlaufen im allgemeinen Fall die Gitterlinien an jeder Stelle eines optischen Elements in einer anderen Richtung, wie z.B. in **Fig. 5** und **Fig. 6** gezeigt. Darüber hinaus ist im Allgemeinen ihr Abstand an jeder Stelle verschieden (siehe z.B. **Fig. 5).** Eine strenge Periodizität liegt dann im Grunde nicht mehr vor. Der Periodenvektor **d** kann folglich nicht mehr definiert werden. Es wird daher vorgeschlagen, den Periodenvektor **d** durch eine koordinatenabhängige Funktion $\mathbf{d}(\overline{x}^0,\overline{y}^0)$ oder, anders ausgedrückt, durch ein Vektorfeld $\mathbf{d}(\overline{x}^0,\overline{y}^0)$ zu ersetzen, welches als das Tangentialvektorfeld zu den Trajektorien 126, die orthogonal auf den Gitterlinien 122a stehen, definiert ist.

Zusätzlich muss im allgemeinen Fall einer gekrümmten Grundfläche 120, wie in **Fig. 6** gezeigt, berücksichtigt werden, dass das Gitter 122 zwar einerseits in globalen Koordinaten $\overline{x}^0,\overline{y}^0$ spezifiziert ist, andererseits jedoch für die Auswirkung auf den Strahldurchgang lokale Eigenschaften relevant sind, wie z.B. der lokale Gitterabstand, den das Gitter 122 entlang der verkippten Achsen eines lokalen Koordinatensystems $\overline{x},\overline{y}$ aufweist.

Anstelle von $\mathbf{d}(\overline{x}^0,\overline{y}^0)$ lässt sich die Auswirkung des Gitters 122 auch in diesem allgemeinen Fall durch die Phasenfunktion $\psi^0(\overline{x}^0,\overline{y}^0)$ beschreiben.

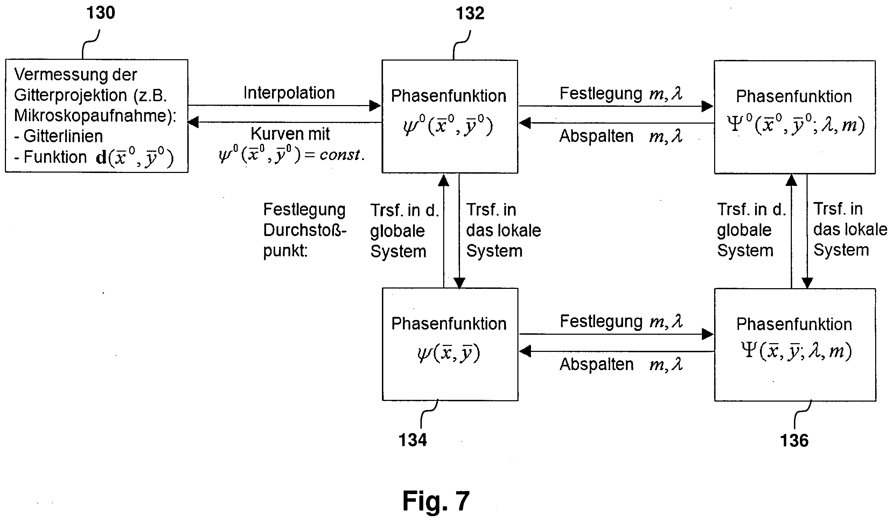

Die Phasenfunktion eines diffraktiven Gitters $\psi^0(\overline{x}^0,\overline{y}^0)$ ist zur Wellenfrontdurchrechnung geeigneter als das Vektorfeld $\mathbf{d}(\overline{x}^0,\overline{y}^0)$, jedoch ist sie nicht unmittelbar messbar. Um eine auf der Phasenfunktion $\psi^0(\overline{x}^0,\overline{y}^0)$ basierende Wellenfrontrechnung durchzuführen, wird daher ein Verfahren zum Bestimmen des Übergangs zwischen den Funktionen $\mathbf{d}(\overline{x}^0,\overline{y}^0)$ und $\psi^0(\overline{x}^0,\overline{y}^0)$ in beiden Richtungen (d.h. $\mathbf{d}(\overline{x}^0,\overline{y}^0) \leftrightarrow \psi^0(\overline{x}^0,\overline{y}^0)$) vorgeschlagen. Das in **Fig. 7** gezeigte Ablaufschema illustriert den Übergang zwischen dem Vektorfeld $\mathbf{d}(\overline{x}^0,\overline{y}^0)$ und der Phasenfunktion $\psi^0(\overline{x}^0,\overline{y}^0)$.

Insbesondere kann bei vorgegebenem Gitter, welches z.B. durch eine Vermessung (siehe Block 130 in Fig. 7) der Mikroskopaufnahme einer Gitterprojektion oder durch eine Projektion einer anderen messbaren Eigenschaft des Gitters (z.B. einer Transmissionseigenschaft) bekannt sein kann, die Phasenfunktion $\psi^0(\overline{x}^0,\overline{y}^0)$ im globalen Koordinatensystem dadurch erhalten werden (siehe Block 132 in Fig. 7), dass die Gitterlinien durchgezählt und als Kurven $\psi^0(\overline{x}^0,\overline{y}^0)$= 0 *const.* aufgefasst werden. Für die Kurven werden nacheinander die Werte $\psi^0(\overline{x}^0,\overline{y}^0)$ = 0, $\psi^0(\overline{x}^0,\overline{y}^0)$ = 1, $\psi^0(\overline{x}^0,\overline{y}^0)$ = 2, etc., angenommen (siehe Fig. 7). Für alle Punkte $(\overline{x}^0,\overline{y}^0)$, welche nicht auf sondern zwischen den Gitterlinien liegen, können die Werte der Phasenfunktion durch geeignete Interpolation ermittelt werden. Ist umgekehrt die Phasenfunktion $\psi^0(\overline{x}^0,\overline{y}^0)$ bekannt, so können die Gitterlinien durch Berechnung der Kurven $\psi^0(\overline{x}^0,\overline{y}^0)$ = *const.* mit $\psi^0(\overline{x}^0,\overline{y}^0)$ = 0, $\psi^0(\overline{x}^0,\overline{y}^0)$ = 1, $\psi^0(\overline{x}^0,\overline{y}^0)$ = 2, etc. ermittelt werden.

Diejenige Phasenfunktion, die für die lokale Strahldurchrechnung relevant ist, ist nach Festlegung eines lokalen Koordinatensystems $(\overline{x}, \overline{y}, \overline{z})$ die Funktion

$$\psi(\overline{x}, \overline{y}) = \psi^0\left(\overline{x}^0(\overline{x}, \overline{y}), \overline{y}^0(\overline{x}, \overline{y})\right), \tag{115}$$

(siehe Block 134 in Fig. 7), wobei sich die Zusammenhänge $\overline{x}^0(\overline{x}, \overline{y})$, $\overline{y}^0(\overline{x}, \overline{y})$ aus der Transformation vom globalen Koordinatensystem in das lokale Koordinatensystem (für dem jeweiligen Durchstoßpunkt) ergeben. Durch die Festlegung (siehe Block 136 in Fig. 7)

$$\Psi(\overline{x}, \overline{y}; \lambda, m) = m\lambda \cdot \psi(\overline{x}, \overline{y}) \tag{116}$$

analog zu der Gleichung (114) kann schließlich die lokale Phasenfunktion unter Einbeziehung der Beugungsordnung und der Wellenlänge erhalten werden.

**Wellenfrontdurchrechnung im Fall eines optischen Elements/Systems umfassend zumindest ein diffraktives Gitter**

Eigenschaften erster Ordnung (Strahlablenkung)

Eine Wellenfrontdurchrechnung ergibt für die Durchrechnung von Strahlen, die im lokalen System durch die Vektoren **N,N'** (vgl. Gleichungen (112a) und (112b)) beschrieben werden, die Gesetze für die Strahlablenkung

$$n'\sin \varphi'_x - n\sin \varphi_x = \frac{\partial}{\partial \overline{x}}\Psi(\overline{x}, \overline{y}; \lambda, m)$$

$$n'\sin \varphi'_y - n\sin \varphi_y = \frac{\partial}{\partial \overline{y}}\Psi(\overline{x}, \overline{y}; \lambda, m).$$

$$(117)$$

Beispiel 1:

Im einfachsten Fall eines konstanten äquidistanten Gitters auf einer ebenen Fläche, das z.B. Fig. 4 entspricht, ist im globalen System die Phasenfunktion durch

$$\psi^0(\overline{x}^0, \overline{y}^0) = \frac{\overline{x}^0}{\delta_x} + \frac{\overline{y}^0}{\delta_y} + \psi_0$$

$$(118)$$

gegeben, wobei $\psi_0$ eine Konstante ist. Da die Grundfläche eben ist, kann das lokale System identisch mit dem globalen System gewählt werden, so dass $\psi^0(\overline{x}, \overline{y}) = \psi^0(\overline{x}, \overline{y})$ ist. Da in diesem Fall

$$\frac{\partial}{\partial \overline{x}}\Psi(\overline{x}, \overline{y}; \lambda, m) = \frac{m\lambda}{\delta_x}$$

$$\frac{\partial}{\partial \overline{y}}\Psi(\overline{x}, \overline{y}; \lambda, m) = \frac{m\lambda}{\delta_y}$$

$$(119)$$

gilt, führt Gleichung (117) genau zu dem Spezialfall der Gleichung (113).

Beispiel 2:

Ist bei einem beliebigen Gitter das lokale System $\overline{x}$, $\overline{y}$, $\overline{z}$ am Durchstoßpunkt so gewählt, dass der einfallende Strahl in der $\overline{y}$-$\overline{z}$-Ebene liegt, dann ist $\varphi_x = 0$. Wenn die Phasenfunktion in diesem lokalen System durch $\Psi(\overline{x}, \overline{y}; \lambda, m)$ gegeben ist, dann lauten die Gesetze für die Strahlablenkung nach Gleichung (117)

$$n'\sin \varphi'_x = \frac{\partial}{\partial \overline{x}}\Psi(\overline{x}, \overline{y}; \lambda, m)$$

$$n'\sin \varphi'_y - n\sin \varphi_y = \frac{\partial}{\partial \overline{y}}\Psi(\overline{x}, \overline{y}; \lambda, m).$$

$$(120)$$

Wenn $\partial \Psi(\overline{x}, \overline{y}; \lambda, m)/\partial \overline{x} \neq 0$, ist auch $\varphi'_x \neq 0$. Dies bedeutet, dass - falls die Gitterlinien nicht senkrecht auf der Einfallsebene stehen - eine seitliche Strahlablenkung stattfindet und dass die Ausfallsebene nicht mit der Einfallsebene zusammenfällt (anders als im Fall reiner Brechung). Ist umgekehrt $\partial \Psi(\overline{x}, \overline{y}; \lambda, m)/\partial \overline{x} = 0$, dann ist $\varphi'_x = 0$ und die Strahlablenkung findet ausschließlich in der $\overline{y}$-$\overline{z}$-Ebene statt.

Eigenschaften zweiter Ordnung (Krümmungseigenschaften der Wellenfront)

Um Wellenfronteigenschaften zu beschreiben, wird vorgeschlagen, zuerst die Strahldurchrechnung ("ray tracing") eines Hauptstrahls, welcher durch eine Bewertungsstelle des optischen Element verläuft, durchzuführen. Der Hauptstrahl unterscheidet sich somit von etwaigen Nachbarstrahlen, welche abseits der Bewertungsstelle verlaufen. Ein Hauptstrahl ist im beispielhaften Fall eines Brillenglases insbesondere ein Lichtstahl, welcher ausgehend vom Objektpunkt durch die Mitte der Eintrittspupille verläuft. Die Eintrittspupille fällt bei Blickbewegungen mit dem Augendrehpunkt und nicht notwendigerweise mit der physikalischen Pupille des Auges zusammen. Die Winkel $\varphi_x$, $\varphi_y$, $\varphi'_x$, $\varphi'_y$ und damit die Vektoren **N, N'** in Gleichungen (112a) und (112b) sind nach diesem Schritt bekannt.

Zusätzlich wird vorgeschlagen, außer einem lokalen Koordinatensystem, das zur Beschreibung der Grundfläche dient und in dem auch der einfallende und der ausfallende Strahl beschrieben werden, noch weitere Koordinatensysteme einzuführen.

Das Koordinatensystem ($x$, $y$, $z$) dient dazu, die einfallende Wellenfront zu beschreiben und ist so gerichtet, dass die $z$-Achse in Lichtrichtung entlang der einfallenden Strahlrichtung **N** gerichtet ist und der Ursprung ($x$, $y$, $z$) = (0,0,0) mit dem Punkt ($\bar{x}$, $\bar{y}$, $\bar{z}$) = (0,0,0) zusammenfällt.

Das Koordinatensystem ($x'$, $y'$, $z'$) dient dazu, die ausfallende Wellenfront zu beschreiben und ist so gerichtet, dass die $z'$-Achse in Lichtrichtung entlang der ausfallenden Strahlrichtung N' gerichtet ist und der Ursprung ($x'$, $y'$, $z'$) = (0,0,0) ebenfalls mit dem Punkt ($\bar{x}$, $\bar{y}$, $\bar{z}$) = (0,0,0) zusammenfällt.

Die Koordinaten eines räumlichen Vektors können entweder durch die Größe **v** = ($v_x$,$v_y$,$v_z$) im Koordinatensystem ($x$,$y$,$z$), durch die Größe **v'** = ($v'_x$,$v'_y$,$v'_z$) im Koordinatensystem ($x'$,$y'$,$z'$) oder durch die Größe $\bar{\mathbf{v}}$ = ($\bar{v}_x$,$\bar{v}_y$,$\bar{v}_z$) im Koordinatensystem ($\bar{x}$, $\bar{y}$, $\bar{z}$) beschrieben werden. Die gegenseitige Lage der Koordinatensysteme ist abhängig von den Strahlen und ist nur bis auf die Freiheitsgrade festgelegt, die einer Rotation des Systems ($x$, $y$, $z$) um den einfallenden Strahl und einer zweiten unabhängigen Rotation des Systems ($x'$, $y'$, $z'$) um den ausfallenden Strahl entspricht.

Vorzugsweise wird die gegenseitige Lage der Koordinatensysteme durch

$$\mathbf{v} = \mathbf{R} \cdot \bar{\mathbf{v}} \qquad\qquad \mathbf{v}' = \mathbf{R}' \cdot \bar{\mathbf{v}}$$
$$\mathbf{R} = \mathbf{R}_z(\chi)\mathbf{R}_x(\varphi)\mathbf{R}_z(-\chi) \qquad\qquad \mathbf{R}' = \mathbf{R}_z(\chi')\mathbf{R}_x(\varphi')\mathbf{R}_z(-\chi') \qquad (121)$$

festgelegt, wobei

$$\mathbf{R}_x(\varepsilon) = \begin{pmatrix} 1 & 0 & 0 \\ 0 & \cos\varepsilon & -\sin\varepsilon \\ 0 & \sin\varepsilon & \cos\varepsilon \end{pmatrix},$$

$$\mathbf{R}_y(\varepsilon) = \begin{pmatrix} \cos\varepsilon & 0 & \sin\varepsilon \\ 0 & 1 & 0 \\ -\sin\varepsilon & 0 & \cos\varepsilon \end{pmatrix}, \qquad\qquad (122)$$

$$\mathbf{R}_z(\varepsilon) = \begin{pmatrix} \cos\varepsilon & -\sin\varepsilon & 0 \\ \sin\varepsilon & \cos\varepsilon & 0 \\ 0 & 0 & 1 \end{pmatrix}.$$

Die Hilfswinkel $\varphi$, $\varphi'$, $\chi$, $\chi'$ in Gleichung (121) müssen durch die vor der Wellenfrontdurchrechnung bekannten Größen $\varphi_x$, $\varphi_y$, $\varphi'_x$, $\varphi'_y$ ausgedrückt werden. Die Matrizen R, R' sind so konstruiert, dass $\varphi$, $\varphi'$ die Ein- und Ausfallswinkel gegen die Flächennormale sind und es gilt

$$\begin{aligned} \cos\varphi &= \sqrt{1 - \sin^2\varphi_x - \sin^2\varphi_y} \\ \sin\varphi &= \sqrt{\sin^2\varphi_x + \sin^2\varphi_y} \end{aligned}, \qquad \begin{aligned} \cos\varphi' &= \sqrt{1 - \sin^2\varphi'_x - \sin^2\varphi'_y} \\ \sin\varphi' &= \sqrt{\sin^2\varphi'_x + \sin^2\varphi'_y} \end{aligned}, \quad (123)$$

sowie

$$\sin\chi = \frac{-\sin\varphi_x}{\sqrt{\sin^2\varphi_x + \sin^2\varphi_y}}, \qquad \sin\chi' = \frac{-\sin\varphi'_x}{\sqrt{\sin^2\varphi'_x + \sin^2\varphi'_y}}.$$

$$\cos\chi = \frac{\sin\varphi_y}{\sqrt{\sin^2\varphi_x + \sin^2\varphi_y}} \qquad \cos\chi' = \frac{\sin\varphi'_y}{\sqrt{\sin^2\varphi'_x + \sin^2\varphi'_y}} \qquad (124)$$

Aus den obigen Gleichungen (123) und (124) folgt, dass

$$\tan\chi = -\frac{\sin\varphi_x}{\sin\varphi_y}, \qquad \tan\chi' = -\frac{\sin\varphi'_x}{\sin\varphi'_y}. \qquad (126)$$

Ist die einfallende Wellenfront im lokalen Koordinatensystem $(x, y, z)$ durch $W_{In}(x,y)$, die brechende Grundfläche im System $(\bar{x}, \bar{y}, \bar{z})$ durch $\bar{S}(\bar{x}, \bar{y})$ sowie die gesuchte ausfallende Wellenfront im System $(\bar{x}', \bar{y}', \bar{z}')$ durch $W'_{Out}(x',y')$ gegeben, dann beschreiben die nachfolgenden Formeln (127) und (128) die Abhängigkeit der zweiten lokalen Ableitungen der Wellenfronten (d.h. der einfallenden und der ausfallenden Wellenfront), der Grundfläche sowie der Phase $\Psi(\bar{x},\bar{y};\lambda,m)$.

$$n'\mathbf{R}_2(\chi')\mathbf{C}'_2\mathbf{R}_2(-\chi')\begin{pmatrix} W'^{(2,0)}_{Out}(0,0) \\ W'^{(1,1)}_{Out}(0,0) \\ W'^{(0,2)}_{Out}(0,0) \end{pmatrix} - n\mathbf{R}_2(\chi)\mathbf{C}_2\mathbf{R}_2(-\chi)\begin{pmatrix} W^{(2,0)}_{In}(0,0) \\ W^{(1,1)}_{In}(0,0) \\ W^{(0,2)}_{In}(0,0) \end{pmatrix} =$$

$$= v\begin{pmatrix} \bar{S}^{(2,0)}(0,0) \\ \bar{S}^{(1,1)}(0,0) \\ \bar{S}^{(0,2)}(0,0) \end{pmatrix} - \begin{pmatrix} \Psi^{(2,0)}(0,0) \\ \Psi^{(1,1)}(0,0) \\ \Psi^{(0,2)}(0,0) \end{pmatrix},$$

$$(127)$$

wobei

$$v = n'\cos\varphi' - n\cos\varphi$$

$$= n'\sqrt{1 - \sin^2\varphi'_x - \sin^2\varphi'_y} - n\sqrt{1 - \sin^2\varphi_x - \sin^2\varphi_y} \qquad (128)$$

erfüllt ist. Die Phase $\Psi(\bar{x}, \bar{y}; \lambda, m)$ ist dabei die in der Gleichung (116) definierte Phase.

Die einzelnen Termen der Gleichung (127) entsprechend dabei den Termen der BAD Gleichung **B - A = D + PK**$^{(2)}$.

In Gleichung (127) stehen die hochgestellten Symbole für Ableitungen. Für eine beliebige Funktion $h(x, y)$ gilt:

$$h^{(k-m,m)}(0,0) := \partial^k / \partial x^{k-m} \partial y^m\, h(x,y)\big|_{x=0,\, y=0}. \qquad (129)$$

Die Funktion $h(x, y)$ in der Formel (129) spielt dabei wahlweise die Rolle der Funktionen $W_{In}(x, y)$, $W'_{Out}(x', y')$, $\bar{S}(\bar{x}, \bar{y})$ und $\Psi(\bar{x}, \bar{y}; \lambda, m)$, wobei im Fall von $\Psi(\bar{x}, \bar{y}; \lambda, m)$ die Ableitungen auf $\bar{x}, \bar{y}$ bezogen sind. Die Matrizen $\mathbf{C}_2$ und $\mathbf{C}'_2$ sind wie im rein refraktiven Fall definiert (siehe z.B. G. Esser, W. Becken, W. Müller, P. Baumbach, J. Arasa und D. Uttenweiler, "Derivation of the refraction equations for higher-order aberrations of local wavefronts at oblique incidence", J. Opt. Soc. Am. A/Vol. 27, No. 2/February 2010):

$$\mathbf{C}_2 = \begin{pmatrix} 1 & 0 & 0 \\ 0 & \cos\varphi & 0 \\ 0 & 0 & \cos^2\varphi \end{pmatrix}, \qquad \mathbf{C'}_2 = \begin{pmatrix} 1 & 0 & 0 \\ 0 & \cos\varphi' & 0 \\ 0 & 0 & \cos^2\varphi' \end{pmatrix}. \tag{130}$$

Zusätzlich geht in die Gleichung (127) die Matrix $\mathbf{R}_2(\chi)$ ein, welche die Drehung der Wellenfront beschreibt. Ist allgemein eine Wellenfront durch die Funktion $w(x, y)$ gegeben, dann wird diese in gedrehten Koordinaten

$$\begin{pmatrix} \tilde{x} \\ \tilde{y} \end{pmatrix} = \mathbf{Rot}(\alpha) \begin{pmatrix} x \\ y \end{pmatrix} \qquad \text{mit} \qquad \mathbf{Rot}(\alpha) = \begin{pmatrix} \cos\alpha & -\sin\alpha \\ \sin\alpha & \cos\alpha \end{pmatrix} \tag{132}$$

durch die transformierte Funktion

$$\tilde{w}(\tilde{x}, \tilde{y}) = w(x(\tilde{x}, \tilde{y}), y(\tilde{x}, \tilde{y})) \tag{133}$$

beschrieben.

Die Ableitung k-ter Ordnung $\dfrac{\partial^k}{\partial\tilde{x}^m\partial\tilde{y}^{k-m}}\tilde{w}(\tilde{x}, \tilde{y})$ bzgl. der gedrehten Koordinaten kann als Linearkombination der Ableitungen $\dfrac{\partial^k}{\partial x^l\partial y^{k-l}}w(x, y)$ nach den ursprünglichen Koordinaten ausgedrückt werden. Die $(k + 1)\times(k + 1)$-Matrix $\mathbf{R}_k(\chi)$ beschreibt den Übergang zwischen der Ableitung der k-ten Ordnung in dem Koordinatensystem $(x, y)$ und der Ableitung der k-ten Ordnung in dem Koordinatensystem $(\tilde{x}, \tilde{y})$.

$$\frac{\partial^k}{\partial\tilde{x}^m\partial\tilde{y}^{k-m}}\tilde{w}(\tilde{x}, \tilde{y}) = \sum_{l=0}^{k}(\mathbf{R}_k(\chi))_{(m+1),(l+1)}\frac{\partial^k}{\partial x^l\partial y^{k-l}}w(x, y), \quad m = 0,...,k, \quad l = 0,...,k \tag{134}$$

Explizit gilt für die ersten drei Ordnungen

$$\mathbf{R}_1(\alpha) = \begin{pmatrix} \cos\alpha & -\sin\alpha \\ \sin\alpha & \cos\alpha \end{pmatrix} = \mathbf{Rot}(\alpha)$$

$$\mathbf{R}_2(\alpha) = \begin{pmatrix} \cos^2\alpha & -2\cos\alpha\sin\alpha & \sin^2\alpha \\ \cos\alpha\sin\alpha & \cos^2\alpha - \sin^2\alpha & -\cos\alpha\sin\alpha \\ \sin^2\alpha & 2\cos\alpha\sin\alpha & \cos^2\alpha \end{pmatrix}$$

$$\mathbf{R}_3(\alpha) = \begin{pmatrix} \cos^3\alpha & -3\cos^2\alpha\sin\alpha & 3\cos\alpha\sin^2\alpha & -\sin^3\alpha \\ \cos^2\alpha\sin\alpha & \cos^3\alpha - 2\cos\alpha\sin^2\alpha & \sin^3\alpha - 2\cos^2\alpha\sin\alpha & \cos\alpha\sin^2\alpha \\ \cos\alpha\sin^2\alpha & -(\sin^3\alpha - 2\cos^2\alpha\sin\alpha) & \cos^3\alpha - 2\cos\alpha\sin^2\alpha & -\cos^2\alpha\sin\alpha \\ \sin^3\alpha & 3\cos\alpha\sin^2\alpha & 3\cos^2\alpha\sin\alpha & \cos^3\alpha \end{pmatrix}$$

$$\mathbf{R}_4(\alpha) = \dots$$

$$(135)$$

Nachfolgend werden einige spezielle Fälle von optischen Systemen, insbesondere von Brillengläsern mit POE, betrachtet. So gilt bei einem senkrechten Lichteinfall:

$$v = n' - n;$$

$$\mathbf{R}_2 = 1;$$

$$\mathbf{C}_2 = 1;$$

$$\mathbf{C'}_2 = 1.$$

Für die Gleichung (127) ergibt sich:

$$n'\begin{pmatrix} W'^{(2,0)}_{\text{Out}}(0,0) \\ W'^{(1,1)}_{\text{Out}}(0,0) \\ W'^{(0,2)}_{\text{Out}}(0,0) \end{pmatrix} - n\begin{pmatrix} W^{(2,0)}_{\text{In}}(0,0) \\ W^{(1,1)}_{\text{In}}(0,0) \\ W^{(0,2)}_{\text{In}}(0,0) \end{pmatrix} = (n'-n)\begin{pmatrix} \overline{S}^{(2,0)}(0,0) \\ \overline{S}^{(1,1)}(0,0) \\ \overline{S}^{(0,2)}(0,0) \end{pmatrix} - \begin{pmatrix} \Psi^{(2,0)}(0,0) \\ \Psi^{(1,1)}(0,0) \\ \Psi^{(0,2)}(0,0) \end{pmatrix}$$

$$(127a)$$

Bei einem eindimensionalen Problem (Meridionalebene) treten statt gemischter Ableitungen nach $\overline{x}$, $\overline{y}$ nur Ableitungen nach einer Koordinate auf (z.B. nach $\overline{y}$). Ferner gilt

$$\mathbf{R}_2 = R_2 = 1;$$

$$\mathbf{C}_2 = C_2 = \cos^2\varphi;$$

$$\mathbf{C'}_2 = C'_2 = \cos^2\varphi'.$$

Folglich kann Gleichung (127) als

$$n'\cos^2\varphi' W'^{(2)}_{Out}(0) - n\cos^2\varphi W^{(2)}_{In}(0) = v\overline{S}^{(2)}(0) - \Psi^{(2)}(0) \qquad (127b)$$

geschrieben werden.

Bei einem senkrechten Lichteinfall und einem eindimensionalen Problem treten statt gemischter Ableitungen nach x,y nur Ableitungen nach einer Koordinate auf (z.B. nach $\bar{y}$). Ferner gilt

$$v = n' - n$$

$$\mathbf{R}_2 = R_2 = 1$$

$$\mathbf{C}_2 = C_2 = 1$$

$$\mathbf{C}'_2 = C'_2 = 1$$

Folglich kann Gleichung (127) als

$$n' W'^{(2)}_{Out}(0) - n W^{(2)}_{In}(0) = (n'-n)\overline{S}^{(2)}(0) - \Psi^{(2)}(0) \qquad (127c)$$

geschrieben werden.

<u>Eigenschaften höherer Ordnung der Wellenfront (Eigenschaften 3.,4.,... Ordnung)</u>

Analog zu Gleichung (127) gilt für Ableitungen 3. Ordnung

$$n'\mathbf{R}_3(\chi')\mathbf{C}'_3\,\mathbf{R}_3(-\chi')\begin{pmatrix} W'^{(3,0)}_{Out}(0,0) \\ W'^{(2,1)}_{Out}(0,0) \\ W'^{(1,2)}_{Out}(0,0) \\ W'^{(0,3)}_{Out}(0,0) \end{pmatrix} - n\mathbf{R}_3(\chi)\mathbf{C}_3\mathbf{R}_3(-\chi)\begin{pmatrix} W^{(3,0)}_{In}(0,0) \\ W^{(2,1)}_{In}(0,0) \\ W^{(1,2)}_{In}(0,0) \\ W^{(0,3)}_{In}(0,0) \end{pmatrix} =$$

$$= v\begin{pmatrix} \overline{S}^{(3,0)}(0,0) \\ \overline{S}^{(2,1)}(0,0) \\ \overline{S}^{(1,2)}(0,0) \\ \overline{S}^{(0,3)}(0,0) \end{pmatrix} - \begin{pmatrix} \Psi^{(3,0)}(0,0) \\ \Psi^{(2,1)}(0,0) \\ \Psi^{(1,2)}(0,0) \\ \Psi^{(0,3)}(0,0) \end{pmatrix} + \mathbf{Q}_3(\mathbf{S}^{(2)},\mathbf{F}^{(2)}) \qquad (136)$$

wobei analog zu Gleichung (130) gilt:

$$\mathbf{C}_3 = \begin{pmatrix} 1 & 0 & 0 & 0 \\ 0 & \cos\varphi & 0 & 0 \\ 0 & 0 & \cos^2\varphi & 0 \\ 0 & 0 & 0 & \cos^3\varphi \end{pmatrix}, \quad \mathbf{C'}_3 = \begin{pmatrix} 1 & 0 & 0 & 0 \\ 0 & \cos\varphi' & 0 & 0 \\ 0 & 0 & \cos^2\varphi' & 0 \\ 0 & 0 & 0 & \cos^3\varphi' \end{pmatrix}. \quad (137)$$

Gleichungen für die noch höheren Ordnungen k = 4,5,... können analog gebildet werden.

Mit der oben beschriebenen Vorgehensweise ist es möglich, ein optisches System (z.B. ein Brillenglas) mit zumindest einem diffraktiven Gitter exakt zu beschreiben. Insbesondere ist es möglich, die Eigenschaften zweiter oder höherer Ordnung der aus dem optischen System austretenden Wellenfront exakt zu bestimmen. Anhand der Eigenschaften der Wellenfront zweiter Ordnung oder höherer Ordnung können die Abbildungsfehler des optischen Elements (z.B. des Brillenglases) in an sich bekannter Weise ermittelt werden. Diesbezüglich wird insbesondere auf die Druckschrift WO 2008/089999 A1, auf den Artikel von W. Becken et al. "Brillengläser im Sport: Optimierung der Abbildungseigenschaften unter physiologischen Aspekten", Z. Med. Phys., 17 (2007), Seiten 56 - 66 oder auf den Artikel von G. Esser "Derivation of the refraction equations for higher-order aberrations of local wavefronts at oblique incidence", JOSA A, Vol. 27, Nr. 2, Februar 2010, Seiten 218-237 verwiesen. Auf diese Druckschriften wird hinsichtlich der verwendeten Fachterminologie und insbesondere der in Gleichungen (121) bis (137) verwendeten Symbole sowie bezüglich des Zusammenhangs der Sphäre, Zylinder, Achse (SZA-Werte) mit Wellenfronteigenschaften ausdrücklich Bezug genommen. Die entsprechenden Ausführungen stellen insoweit einen integralen Offenbarungsbestandteil der vorlegenden Anmeldung dar.

Wie bereits oben ausgeführt kann das Verfahren zum Auswerten zumindest einer optischen Eigenschaft an zumindest einer Bewertungsstelle eines optischen Elements Bestandteil einer Optimierung und eines Herstellungsverfahrens sein. In den nachfolgenden Beispielen ist das optische Element ein Brillenglas und das zumindest eine phasenänderndes optische Element ein diffraktives Gitter. Das optische Element kann jedoch ebenfalls ein beliebiges optisches Element, z.B. eine Linse, ein Linsensystem, etc. sein. Ebenfalls kann das phasenändernde optische Element ein beliebiges phasenverzögerndes oder phasenmodulierendes Element sein. Die optischen Eigenschaften des optischen Elements (Astigmatismus und Refraktionsfehler) werden anhand eines Verfahrens zum Auswerten der zumindest einen optischen Eigenschaft gemäß einem der zuvor beschriebenen bevorzugten Beispiele berechnet bzw. ausgewertet.

Zur Durchführung eines bevorzugten erfindungsgemäßen Optimierungsverfahrens gibt es verschiedene Verfahrensweisen.

## Iteratives Verfahren

Bei diesem Verfahren werden zumindest eine der zur Refraktion beitragenden, refraktiven Flächen des Brillenglases und das zumindest eine diffraktive Gitter nach einander optimiert oder verändert.

In einem ersten Schritt wird eine monochromatische Optimierung zumindest einer der zur Refraktion beitragenden Flächen (nachfolgend kurz Glasflächen) eines vorgegebenen Brillenglases, welches kein diffraktives Gitter aufweist, durchgeführt. Insbesondere wird zumindest eine der Glasflächen so lange verändert bzw. optimiert bis der Refraktionsfehler und/oder der astigmatische Fehler minimiert wird/werden. Die monochromatische Optimierung erfolgt derart, dass die refraktive Brechkraft in zumindest einem Bezugspunkt des Brillenglases den z.B. Rezeptwert $S_{\text{Rezept}}$ annimmt ($S_{\text{ref},0}(\lambda_d) = S_{\text{Rezept}}$). Der Rezeptwert ist der für einen Brillenträger z.B. durch Refraktionsbestimmung ermittelte Wert, welcher notwendig ist, eine Fehlsichtigkeit des Brillenträgers zu korrigieren. Der Bezugspunkt kann z.B. der Fernbezugspunkt, der Anpaß- bzw. Zentrierpunkt, die optische oder geometrische Mitte des Brillenglases oder ein anderer geeigneter Punkt auf dem Brillenglas sein. Die monochromatische Optimierung kann für eine beliebige, geeignete Wellenlänge durchgeführt werden, vorzugsweise wird die monochromatische Optimierung für die Wellenlänge $\lambda_d$ durchgeführt, welche ebenfalls in die Definition der Abbezahl eingeht. Vorzugsweise wird das Brillengas in Gebrauchsstellung optimiert. Verfahren zu monochromatischer Optimierung von Brillengläsern sind aus dem Stand der Technik (z.B. WO 2008/089999 A1) bekannt.

In einem dritten Schritt wird bei festgehaltenen Glasflächen ein diffraktives Gitter hinzugefügt. Das diffraktive Gitter wird bestimmt oder berechnet, um den Farbsaum des im vorangegangenen Schritt optimierten Brillenglases optimal zu korrigieren. Durch das Hinzufügen des diffraktiven Gitters wird jedoch ebenfalls ein Refraktionsfehler hinzugefügt.

In einem vierten Schritt kann bei festgehaltenem Gitter zumindest eine der zur Refraktion beitragenden Glasflächen solange nachoptimiert werden, bis der durch das Gitter eingeführte zusätzliche Refraktionsfehler wieder kompensiert ist. In einem nächsten Schritt wird dann das Gitter angepasst, um den durch die Flächenveränderung im vierten Schritt entstandenen Farbsaum wieder auszugleichen.

Da für gewöhnliche Abbezahlen die Brechkraft eines Gitters, das den Farbsaum eines Brillenglases kompensieren soll, in der Größenordnung von 5% bis 10% der refraktiven Brechkraft des Brillenglases liegt, werden die Änderungen in dem iterativen Verfahren immer kleiner, so dass das Verfahren im Allgemeinen konvergiert und nach einem passend gewählten Schritt abgebrochen werden kann.

In diesem Verfahren nehmen sowohl der Farbsaum als auch der Refraktionsfehler ihr denkbares Minimum nur approximativ an, weil das Verfahren nach endlich vielen Schritten abgebrochen wird.

## Vorhalten von refraktiver Brechkraft

Wie bereits oben ausgeführt weist ein diffraktives Gitter ebenfalls eine refraktive Brechkraft auf. Die tatsächliche Brechkraft eines Brillenglases, welches ein diffraktives Gitter aufweist, kann als die Summe der Brechkraft des durch rein refraktive Flächen zustande kommenden Brillenglases und der refraktiven Brechkraft des diffraktiven Gitters dargestellt werden. Insbesondere ist die tatsächliche Brechkraft $S_0(\lambda_d)$ eines farbsaumkompensierten Glases mit einer refraktiven Brechkraft $S_{ref,0}(\lambda_d)$ durch

$$S_0(\lambda_d) = S_{ref,0}(\lambda_d)\left(1 - \frac{1}{v_d} \cdot \frac{\lambda_d}{\lambda_F - \lambda_C}\right), \tag{138}$$

gegeben, wobei $v_d = (n_d - 1)/(n_F - n)$ die (alternative) Abbezahl des optischen Materials des Brillenglases ist und $n_d$, $n_F$ und $n_C$ die Brechzahlen des optischen Materials bei den Wellenlängen $\lambda_d$, $\lambda_F$ und $\lambda_C$ sind. Vorzugsweise ist $\lambda_d$ = 587,562 nm, $\lambda_F$ = 486,134 nm und $\lambda_C$ = 656,281 nm.

Anstatt in einem iterativen Verfahren zumindest eine der Glasflächen so zu optimieren, dass die refraktive Brechkraft des Brillenglases in zumindest einem Bezugspunkt den Rezeptwert $S_{Rezept}$ annimmt ($S_{ref,0}(\lambda_d) = S_{Rezept}$), kann die Veränderung der Brechkraft durch ein vorgegebenes Gitter vorgehalten werden. Dies bedeutet, dass das Optimieren zumindest einer der Glasflächen in einem ersten Schritt von vornherein so gestaltet wird, dass die spätere gesamte Brechkraft des Brillenglases mit dem Gitter in zumindest einem Bezugspunkt den Rezeptwert annimmt, so dass $S_0(\lambda_d) = S_{Rezept}$ verfüllt ist. Die refraktive, monochromatische Optimierung der Glasflächen findet folglich so statt, dass für die Brechkraft des Brillenglass im vorgegebenen Bezugspunkt die Bedingung

$$S_{ref,0}(\lambda_d) = \frac{S_{Rezept}}{\left(1 - \frac{1}{v_d} \cdot \frac{\lambda_d}{\lambda_F - \lambda_C}\right)} \tag{139}$$

erfüllt ist.

In einem zweiten Schritt wird dann ein diffraktives Gitter so berechnet und eingeführt, dass es den Farbsaum des Brillenglases aus dem ersten Schritt kompensiert. Der dabei hinzukommende Refraktionsfehler des Brillenglases ist dann genau so groß, dass die gesamte Brechkraft des Glases $S_0(\lambda_d) = S_{Rezept}$ ist.

Das Verfahren hat den Vorteil, dass der Farbsaum immer (im Rahmen der Möglichkeiten des Gitters) optimal kompensiert wird. Dagegen wird der Refraktionsfehler nur approximativ korrigiert, da, nach Einführung des Gitters, die Glasflächen des Brillenglases nicht noch einmal in Gebrauchsstellung nachoptimiert werden können.

## Vorhalten von diffraktiver Brechkraft

Anstatt im zuvor beschriebenen Verfahren mit Vorhalten der refraktiven Brechkraft das benötigte Gitter nachträglich zu bestimmen, kann das Gitter von vornherein, also gleich in einem ersten Schritt, als dasjenige Gitter bestimmt werden, das den Farbsaum eines Glases mit refraktiver Brechkraft $S_{ref,0}(\lambda_d)$ kompensiert (siehe Gleichung (2)). In einem zweiten Schritt wird dann der Refraktionsfehler des Brillenglases optimiert, wobei bei festgehaltenem Gitter ein Optimieren zumindest einer der refraktiven Glasflächen durchgeführt wird. Vorzugsweise erfolgt das Optimieren zumindest einer der refraktiven Glasflächen unter Berücksichtigung der Wellenfrontdurchrechnung bei Anwesenheit eines diffraktiven Gitters.

Das Verfahren gemäß dem dritten Beispiel hat den Vorteil, dass der Refraktionsfehler bestmöglich in Gebrauchsstellung minimiert wird, da die Wellenfront-Optimierung in Gebrauchsstellung der letzte durchgeführte Schritt ist. Bei diesem Schritt sind alle anderen Größen, wie z.B. das Gitter, bereits bekannt. Ein Nachteil könnte sein, dass der Farbsaum unter Umständen nicht bestmöglich kompensiert wird, weil das Gitter vorab pauschal und nicht in Abhängigkeit von den aktuellen Flächen bestimmt wird.

**Simultanes Optimieren von Flächen und Gitter**

Zum simultanen Optimieren der refraktiven Anteile und der diffraktiven Anteile eines Glases wird gemäß einem bevorzugten Ausführungsbeispiel vorgeschlagen, sowohl die refraktiven Abbildungsfehler als auch die chromatischen Abbildungsfehler bzw. den Farbsaum durch Minimierung einer Zielfunktion zu minimieren.

Aus WO 2008/089999 A1 ist bekannt, eine monochromatische Optimierung eines Brillenglases durch ein Minimieren der folgenden monochromatischen Zielfunktion durchzuführen:

$$F_{\text{monochrom}} = \sum_i g_Z(i)(Z_\Delta(i) - Z_{\Delta,\text{Soll}}(i))^2 + g_S(i)(S_\Delta(i) - S_{\Delta,\text{Soll}}(i))^2, \qquad (140)$$

wobei $S_\Delta$ und $Z_\Delta$ den Refraktionsfehler des sphärischen Äquivalents bzw. den Betrag der astigmatischen Abweichung $S_{\Delta,\text{Soll}}$, $Z_{\Delta,\text{Soll}}$ die entsprechenden Sollwerte und $g_Z(i)$ und $g_S(i)$ die entsprechenden Gewichtungen bezeichnen.

Alle Abbildungseigenschaften werden dabei bei einer vorgegebenen Wellenlänge ausgewertet. Die Summe über den Index $i$ läuft über verschiedene Bewertungsstellen des Brillenglases. Freiheitsgrad bei der Minimierung der Zielfunktion in Gleichung (140) ist üblicherweise eine Pfeilhöhe zumindest einer refraktiven Fläche, welche durch eine Funktion $z(x, y)$ beschrieben wird. Der Freiheitsgrad bei der Optimierung kann z.B. die Pfeilhöhe $z_1(x, y)$ der Vorderfläche oder die Pfeilhöhe $z_2(x, y)$ der Rückfläche eines Brillenglases sein. Es ist auch möglich, dass sowohl die Pfeilhöhe der Vorder- als auch der Rückfläche Freiheitsgrade bei der Optimierung sind, wie es z.B. bei einem doppelprogressiven Brillenglas der Fall sein kann. Die monochromatische Zielfunktion kann eine monokulare oder eine binokulare Zielfunktion sein. Eine monochromatische binokulare Zielfunktion ist z.B. in WO 2008 089999 A1 oder im Artikel von W. Becken, et al. "Brillengläser im Sport: Optimierung der Abbildungseigenschaften unter physiologischen Aspekten", Z. Med. Phys., 17 (2007), Seiten 56 - 66 beschrieben. Auf diese Druckschriften wird hinsichtlich der verwendeten Fachterminologie und insbesondere der in Gleichung (3) verwendeten Symbole, sowie bezüglich des Zusammenhangs der Sphäre, Zylinder, Achse (SZA-Werte) mit Wellenfronteigenschaften verwiesen. Die entsprechenden Ausführungen stellen insoweit einen integralen Offenbarungsbestandteil der vorliegenden Anmeldung dar.

Gemäß einem Ausführungsbeispiel der Erfindung wird vorgeschlagen, die monochromatische Zielfunktion dahingehend zu erweitern, die Wellenlängenabhängigkeit des Glases mit einem Gitter zu berücksichtigen. Insbesondere werden folgenden drei Typen von Zielfunktionen vorgeschlagen:

$$\text{Typ 1)} \quad F_1 = \sum_\lambda F_{\text{monochrom}}(\lambda) \qquad (141)$$

$$\text{Typ 2)} \quad F_2 = F_{\text{monochrom}}(\lambda_0) + \sum_i g_{\text{FLF}}(i) \times f(\mathbf{S}_{\text{SK}}(i, \lambda_2) - \mathbf{S}_{\text{SK}}(i, \lambda_1))^2 \qquad (142)$$

$$\text{Typ 3)} \quad F_3 = F_{\text{monochrom}}(\lambda_0) + \sum_i g_{\text{FQF}}(i) \times g(\Delta\varphi_{\text{SK}}(i, \lambda_2, \lambda_1))^2. \qquad (143)$$

Ein Beispiel einer Zielfunktion des Typs 1 ist die Zielfunktion

$$F_1 = \sum_{i,\lambda} g_Z(i, \lambda)(Z_\Delta(i, \lambda) - Z_{\Delta,\text{Soll}}(i, \lambda))^2 + g_S(i, \lambda)(S_\Delta(i, \lambda) - S_{\Delta,\text{Soll}}(i, \lambda))^2. \qquad (141a)$$

Ein Beispiel einer Zielfunktion des Typs 2 ist die Zielfunktion

$$F_2 = \sum_i \Big( g_Z(i)(Z_\Delta(i,\lambda_0) - Z_{\Delta,\mathrm{Soll}}(i,\lambda_0))^2 + g_S(i)(S_\Delta(i,\lambda_0) - S_{\Delta,\mathrm{Soll}}(i,\lambda_0))^2 \\ + g_{\mathrm{FLF}}(i) \times f\big(\mathbf{S}_{\mathrm{SK}}(i,\lambda_2) - \mathbf{S}_{\mathrm{SK}}(i,\lambda_1)\big)^2 \Big) \tag{142a}$$

Ein Beispiel einer Zielfunktion des Typs 3 ist die Zielfunktion

$$F_3 = \sum_i \Big( g_Z(i)(Z_\Delta(i,\lambda_0) - Z_{\Delta,\mathrm{Soll}}(i,\lambda_0))^2 + g_S(i)(S_\Delta(i,\lambda_0) - S_{\Delta,\mathrm{Soll}}(i,\lambda_0))^2 \\ + g_{\mathrm{FQF}}(i) \times g\big(\Delta\varphi_{\mathrm{SK}}(i,\lambda_2,\lambda_1)\big)^2 \Big) \tag{143a}$$

In den obigen Gleichungen (141 a) bis (142a) bezeichnen:

$Z_\Delta(i,\lambda)$ den Ist-Wert des astigmatischen Fehlers bzw. des Betrags der astigmatischen Abweichung an der *i*-ten Bewertungsstelle des Brillenglases für die Wellenlänge $\lambda$;

$Z_{\Delta,\mathrm{Soll}}(i,\lambda)$ den Sollwert des astigmatischen Fehlers bzw. des Betrags der astigmatischen Abweichung an der *i*-ten Bewertungsstelle des Brillenglases für die Wellenlänge $\lambda$;

$S_\Delta(i,\lambda)$ den Ist-Wert des Refraktionsfehlers bzw. der Abweichung des sphärischen Äquivalents an der *i*-ten Bewertungsstelle des Brillenglases für die Wellenlänge $\lambda$;

$S_{\Delta,\mathrm{Soll}}(i,\lambda)$ den Sollwert des Refraktionsfehlers bzw. der Abweichung des sphärischen Äquivalents an der *i*-ten Bewertungsstelle des Brillenglases für die Wellenlänge $\lambda$;

$g_Z(i,\lambda)$ die Gewichtung des astigmatischen Fehlers/des Betrags der astigmatischen Abweichung an der *i*-ten Bewertungsstelle des Brillenglases für die Wellenlänge $\lambda$;

$g_S(i,\lambda)$ die Gewichtung des Refraktionsfehlers bzw. der Abweichung des sphärischen Äquivalents an der *i*-ten Bewertungsstelle des Brillenglases für die Wellenlänge $\lambda$;

$g_{\mathrm{FLF}}(i)$ die Gewichtung des Farblängsfehlers an der *i*-ten Bewertungsstelle des Brillenglases;

$g_{\mathrm{FQF}}(i)$ die Gewichtung des Farbquerfehlers an der *i*-ten Bewertungsstelle des Brillenglases;

$\mathbf{S}_{\mathrm{SK}}(i,\lambda_1)$ die Vergenzmatrix der Wellenfront an der Scheitelpunktkugel für Wellenlänge $\lambda_1$ und für die *i*-te Bewertungsstelle;

$\mathbf{S}_{\mathrm{SK}}(i,\lambda_2)$ die Vergenzmatrix der Wellenfront an der Scheitelpunktkugel für Wellenlänge $\lambda_2$ und für die *i*-te Bewertungsstelle; und

$\Delta\varphi_{\mathrm{SK}}(i,\lambda_2,\lambda_1)$ den Winkel zwischen den objektseitigen Hauptstrahlen für zwei unterschiedlichen Wellenlängen $\lambda_1$ und $\lambda_2$.

Bei der Zielfunktion vom Typ 1 wird die gewöhnliche monochromatische Zielfunktion als Funktion der Wellenlänge aufgefasst, d.h. $F_{\mathrm{monochrom}} = F_{\mathrm{monochrom}}(\lambda)$. Diese Zielfunktion wird anschließend für mehrere Wellenlängen wiederholt ausgewertet und über einen vorzugebenden Satz von Wellenlängen summiert. Der Satz von Wellenlängen umfasst zumindest zwei Wellenlängen, z.B. $\lambda_1 = \lambda_F = 486{,}134\,nm$ und $\lambda_2 = \lambda_C = 656{,}281\,nm$. Die Summe läuft dementsprechend außer über den Index *i* ebenfalls über die Wellenlänge $\lambda$.

Die Zielfunktion vom Typ 2 kommt insbesondere dadurch zustande, dass eine gewöhnliche monochromatische Zielfunktion bei einer Arbeitswellenlänge $\lambda_0$ ausgewertet wird und zu dieser Zielfunktion noch ein Term hinzugenommen wird, welcher von der Differenz $\mathbf{S}_{\mathrm{SK}}(i,\lambda_2) - \mathbf{S}_{\mathrm{SK}}(i,\lambda_1)$ der Vergenzmatrizen $\mathbf{S}_{\mathrm{SK}}$ für zwei verschiedene Wellenlängen $\lambda_1$, $\lambda_2$ abhängt. Die Art $f(\mathbf{S}_{\mathrm{SK}}(i,\lambda_2) - \mathbf{S}_{\mathrm{SK}}(i,\lambda_1))$ der Abhängigkeit kann dabei verschieden gewählt werden. Insbesondere kann $f(\mathbf{S}_{\mathrm{SK}}(i,\lambda_2) - \mathbf{S}_{\mathrm{SK}}(i,\lambda_1))$ für den dioptrischen Abstand zwischen den Vergenzmatrizen stehen oder für die Differenz der sphärischen Äquivalente. In Letzterem Fall ist der Term $f(\mathbf{S}_{\mathrm{SK}}(i,\lambda_2) - \mathbf{S}_{\mathrm{SK}}(i,\lambda_1))$ ein Strafterm für den Farblängsfehler.

Die Zielfunktion vom Typ 3 kommt analog zur Zielfunktion vom Typ 2 zustande, mit dem Unterschied, dass der Zusatzterm $g(\Delta\varphi_{\mathrm{SK}}(i,\lambda_2,\lambda_1))$ ein Strafterm für den Farbquerfehler ist, der durch den Winkel $\Delta\varphi_{\mathrm{SK}}(i,\lambda_2,\lambda_1)$ zwischen den objektseitigen Hauptstrahlen an der *i*-ten Bewertungsstelle gegeben ist. Dabei ist *g* eine geeignete Funktion, z.B. die Identität, eine trigonometrische Funktion oder eine andere Funktion.

Unabhängig von der Art der Zielfunktion (Zielfunktion des Typs 1, des Typs 2 oder des Typs 3) ist eine Funktion, welche das diffraktive Gitter beschreibt, ein Freiheitsgrad der Optimierung. Zusätzlich ist die Pfeilhöhe $z(x, y)$ zumindest einer der Flächen des Brillenglases ein Freiheitsgrad der Optimierung. Die Pfeilhöhe kann parametrisch beschrieben werden. Eine geeignete Darstellung der Pfeilhöhe ist z.B. eine polynomiale Darstellung oder eine Darstellung mittels Splines.

Vorzugsweise ist die Funktion, welche das diffraktive Gitter beschreibt, eine Phasenfunktion $\Psi(x, y)$. Die Pha-

senfunktion $\Psi(x,y)$ stellt die optische Pfadlängendifferenz (Optical Path Difference oder OPD), welche durch das diffraktive Gitter eingeführt wird, als Funktion der Koordinaten $x$, $y$ eines geeignet gewählten Koordinatensystems dar. Vorzugsweise wird die Phasenfunktion $\Psi(\bar{x}, \bar{y})$ in einem lokalen Koordinatensystem $(\bar{x}, \bar{y}, \bar{z})$ angegeben, wobei $\bar{x}$, $\bar{y}$ die Koordinaten tangential zur brechenden Fläche sind. Die Beschreibung eines diffraktiven Gitters durch eine Phasenfunktion wird nachfolgend im Detail erläutert.

Die Phasenfunktion kann vorzugsweise parametrisch beschrieben werden, wobei die Anzahl der Parameter gleich der Anzahl der Freiheitsgrade der Phasenfunktion ist. Eine solche Beschreibung ist insbesondere für den Fall geeignet, dass die Phasenfunktion bestimmte Symmetrien aufweisen soll. Im allgemeinen Fall kann die Phasenfunktion wie eine Freiformfläche durch Splines beschrieben werden, wobei dann bei der Optimierung gegebenenfalls bis zu mehreren Tausend Spline-Koeffizienten zur Variation zur Verfügung stehen.

Die Berechnung der Gebrauchseigenschaften in Gleichungen (141) bis (143) erfolgt bei Anwesenheit des diffraktiven Gitters, beschrieben durch die aktuelle Phasenfunktion $\Psi(x, y)$. Der bei den Durchrechnungen relevante Brechungsindex ist dabei durch seinen Wert $n(\lambda)$ bei der jeweiligen Wellenlänge $\lambda$ gegeben. Das ermittelte Gitter kann im Allgemeinen asymmetrisch sein, da die Funktion $\Psi(x,y)$ frei optimiert wird und a priori keinerlei Symmetrien enthält bzw. enthalten muss.

Anstatt nur eine oder zwei refraktive Flächen kann in den Gleichungen (141) bis (143) ebenfalls eine höhere Anzahl an refraktiven Flächen berücksichtigt werden. Mehrere refraktive Flächen kommen z.B. bei Compundsystemen vor. In den Gleichungen (141) bis (143) kann ebenfalls eine höhere Anzahl (zwei oder mehr) von Gittern berücksichtigt werden. Die mehrere Gitter können z.B. jeweils auf den Grenzflächen eines Compoundsystems angeordnet sein.

Die Zielfunktion kann ebenfalls Terme, welche von den Abbildungsfehlern höherer Ordnung, wie z.B. Koma, Trefoil, sphärische Aberration, abhängen, umfassen. Weiterhin kann statt der monokularen Zielfunktion wie in Gleichung (140) auch eine binokulare Zielfunktion eingesetzt werden. Eine monochromatische binokulare Zielfunktion ist z.B. in WO 2008/089999 A1 oder in der Publikation von W. Becken, et al. "Brillengläser im Sport: Optimierung der Abbildungseigenschaften unter physiologischen Aspekten", Z. Med. Phys., 17 (2007), Seiten 56 - 66 beschrieben.

Durch die Einführung einer Zielfunktion im Verfahren zum Optimieren eines Brillenglases mit zumindest einem diffraktiven Gitter kann weitgehend das Problem gelöst werden, sowohl die Refraktionsanforderung an ein Brillenglas als auch die Reduktion chromatischer Fehler möglichst gut zu erreichen. Insbesondere kann mittels der Zielfunktion ein Kompromiss zwischen allen Anforderungen für eine Vielzahl von Blickrichtungen gesucht werden. Die Zielfunktion kann auf gewöhnlichen monochromatischen Zielfunktionen nach dem Stand der Technik basieren; wobei gemäß einem bevorzugten Beispiel vorgeschlagen wird, Zusatzterme einzuführen, welche direkt die Farbquerfehler (Typ 3) und/oder direkt die Farblängsfehler (Typ 2) enthalten. Alternativ können die Farbfehler indirekt korrigiert werden, indem eine monochromatische Zielfunktion für mehrere verschiedene Wellenlängen ausgewertet wird und über alle Wellenlängen summiert wird (Typ 1). Um die vermehrten Anforderungen erfüllen zu können, wird vorgeschlagen, zusätzliche Freiheitsgrade (Parameter) einzuführen und zu variieren, nämlich die Freiheitsgrade mindestens eines diffraktiven Gitters, das vorzugsweise über eine modifizierte Wellenfrontdurchrechnung in die Zielfunktion eingeht.

Wie gut die Qualität des zuvor beschriebenen iterativen Verfahrens, des Verfahren mit Vorhalten von refraktiver Brechkraft und des Verfahren mit Vorhalten von diffraktiver Brechkraft an die Qualität des Verfahrens mit simultaner Optimierung der Glasflächen und des Gitters mittels einer Zielfunktion herankommen können, hängt vom Durchführen der Optimierungsschritte ab. Wird z.B. beim iterativen Verfahren ebenso eine Zielfunktion des Typs 1 verwendet, dann kann die Qualität des iterativen Verfahrens mit einer sequentiellen Optimierung der Glasflächen und des Gitters je nach Länge der Iteration bis an die Qualität des Verfahrens mit einer simultanen Optimierung der Glasflächen und des Gitters mittels einer Zielfunktion herankommen. Ein Vorteil des iterativen Verfahren mit einer sequentiellen Optimierung der Glasflächen und des Gitters kann jedoch darin bestehen, dass ebenfalls einfachere Zielfunktionen gemäß dem Stand der Technik verwendet werden können, solange als letzten Schritt die Gebrauchsstellungs-Optimierung der Fläche durchführt wird. Wenn ferner eine vollständige Kompensation des Farbsaums nicht angestrebt wird, sondern ein gewisser Rest-Farbsaumfehler zugelassen wird, dann genügt in der Regel jeweils eine relativ pauschale Wahl des Gitters, so dass dieses nicht durch eine Optimierung oder eine Zielfunktion bestimmt werden muss. Dieselbe Aussage gilt auch für das Verfahren mit Vorhalten mit diffraktiver Brechkraft, da auch hierbei der letzte Schritt wieder die Gebrauchsstellungs-Optimierung der Fläche ist.

Im Gegensatz dazu ist das Verfahren mit Vorhalten von refraktiver Brechkraft vorwiegend für die Optimierung von Einstärkengläsern mit Gittern geeignet, da sich durch das nachträglich hinzugefügte Gitter der Strahlengang so verändert, dass das Glas in Gebrauchsstellung im Allgemeinen nicht mehr vollständig die Sehanforderungen erfüllt. Bei Einstärkengläsern können jedoch vorhandene Symmetrien so ausgenutzt werden, dass das Vorhalten der richtigen Brechkraft in der optischen Mitte auch in der Peripherie noch genügend Qualität erwarten lässt.

**Ausführungsbeispiele**

Die folgenden Ausführungsbeispiele beziehen sich auf rotationssymmetrische Einstärkengläser mit einem diffraktiven Gitter, wobei der Einfachheit halber der Astigmatismus außer Acht gelassen wird, und lediglich eindimensionale Probleme betrachtet werden. Die Einstärkengläser haben eine Rezeptwirkung von $S_{\text{Rezept}}$ = +6,0$dpt$ und sind aus einem optischen Material mit Brechungsindex $n_d$ =1,597 mit einer Abbezahl von $v_d$ = 42,0. Alle Brillengläser gemäß den Beispielen der Erfindung werden nach dem Verfahren zur simultanen Optimierung von Glasflächen und Gitter mit einer Zielfunktion optimiert. Die konkret bei dem Ausführungsbeispiel 1 und dem Ausführungsbeispiel 2 verwendeten Optimierungsverfahren unterscheiden sich jedoch in einigen Optimierungsvorgaben.

Ausführungsbeispiel 1 ist, anders als die meisten Optimierungsprobleme, kein überbestimmtes Problem und daher exakt lösbar. Es führt zu einem im Rahmen der Modellannahmen vollständig korrigierten Glas. Ausführungsbeispiel 2 ist so gewählt, dass auch im Rahmen der eindimensionalen Behandlung ohne Astigmatismus ein Kompromiss über mehrere Blickrichtungen gesucht werden muss, welcher von der Art der Zielfunktion abhängt. Diese Situation entspricht dem allgemeinen Fall eines Brillenglases mit einem diffraktiven Gitter. So bewirkt z.B. der Satz von Minkwitz bei Gleitsichtgläsern schon ohne Berücksichtigung von Farbfehlern, dass das Optimierungsproblem überbestimmt ist und deshalb ein Kompromiss gesucht werden muss.

In beiden Ausführungsbeispielen zeigt sich, dass das eingeführte Gitter die Farbfehler des Glases stark verbessern und gleichzeitig die Refraktionsfehler des Glases mitoptimieren kann. Selbstverständlich ist das Verfahren nicht auf eindimensionale Probleme beschränkt, sondern ist ebenfalls auf die Durchrechnung eines Brillenglases in Gebrauchsstellung anwendbar. In diesem allgemeineren Fall wird bei der Wellenfrontdurchrechnung ein schiefwinkliger Strahleinfall berücksichtigt.

Nachfolgend wird die Optimierung eines rotationssymmetrischen Brillenglases mittels einer Zielfunktion näher erläutert. Wie bereits oben ausgeführt, wird der Astigmatismus des Brillenglases der Einfachheit halber vernachlässigt.

Eine beispielhafte Zielfunktion vom Typ 1 ist in diesem Fall eine Zielfunktion der Form:

$$F_1 = \sum_{i,\lambda} g_S(i,\lambda)(S_\Delta(i,\lambda) - S_{\Delta,\text{Soll}}(i,\lambda))^2. \tag{141b}$$

Eine beispielhafte Zielfunktion des Typs 2 ist die Zielfunktion der Form:

$$F_2 = \sum_i g_S(i)(S_\Delta(i,\lambda_0) - S_{\Delta,\text{Soll}}(i,\lambda_0))^2 + g_{\text{FLF}}(i) \times f\left(\mathbf{S}_{\text{SK}}(i,\lambda_2) - \mathbf{S}_{\text{SK}}(i,\lambda_1)\right)^2. \tag{142b}$$

Eine beispielhafte Zielfunktion des Typs 3 ist die Zielfunktion der Form:

$$F_3 = \sum_i g_S(i)(S_\Delta(i,\lambda_0) - S_{\Delta,\text{Soll}}(i,\lambda_0))^2 + g_{\text{FQF}}(i) \times g\left(\Delta\varphi_{\text{SK}}(i,\lambda_2,\lambda_1)\right)^2. \tag{143b}$$

Die Berechnung der in den Gleichungen (141b) bis (143b) eingehenden Werte kann mittels Wellenfrontdurchrechnung erfolgen. Anders als die Wellenfrontdurchrechnung in dem oben genannten Artikel von W. Becken, et, al. "Brillengläser im Sport: Optimierung der Abbildungseigenschaften unter physiologischen Aspekten", Z. Med. Phys., 17(2007), Seiten 56 - 66, wird die im Artikel beschriebene, verallgemeinerte Coddington-Gleichung für den rein refraktiven Fall noch durch einen Zusatzterm für die diffraktive Phase Ψ erweitert. Die Erweiterung der Coddington-Gleichung für ein optisches Element mit zumindest einem Gitter wird nachfolgend im Detail beschrieben.

Im Fall eines senkrechtem Lichteinfalls an der einzelnen Grenzfläche $i(i = 1,2)$ für das dann eindimensionale Problem gilt für die Wellenfrontdurchrechnung

$$n'_i W'^{(2)}_{\text{Out},i}(0) - n_i W^{(2)}_{\text{In},i}(0) = (n'_i - n_i)\overline{S}_i^{(2)}(0) - \Psi_i^{(2)}(0). \tag{144}$$

In Gleichung (144) bezeichnen:

$n'_i$ den Brechungsindex des Materials nach der $i$-ten Fläche;
$n_i$ den Brechungsindex des Materials vor der $i$-ten Fläche;
$\overline{S}_i$ die Brechkraft der $i$-ten Fläche;

$W'^{(2)}_{\text{Out},i}(0)$ die Krümmung der ausfallenden Wellenfront an der $i$-ten Fläche;

$W_{\text{In},i}^{(2)}(0)$ die Krümmung der einfallenden Wellenfront an der $i$-ten Fläche;

$\Psi_i^{(2)}(0)$ die Phase des $i$-ten diffraktiven Gitters.

Wie aus Gleichung (144) ersichtlich, ist der refraktive Anteil der Brechkraft durch $(n_i{}'-n_i)\overline{S}_i^{(2)}(0)$ und der diffraktive Anteil zur Brechkraft durch $-\Psi_i^{(2)}(0)$ gegeben. Im vorliegenden Beispiel werden zwei refraktive Flächen $\overline{S}_1$ und $\overline{S}_2$ und zwei diffraktiven Gitter $\Psi_1$ und $\Psi_2$, welche ein Brillenglas mit Brechungsindex $n$ in Luft begrenzen, betrachtet. In diesem Fall ist $n_1 = 1$, $n'_1 = n$, $n_2 = n$, $n'_2 = 1$.

Die Änderung der Wellenfront bei der Propagation durch das Brillenglas und vom Brillenglas zur Scheitelpunktkugel kann vernachlässigt werden. Wenn die einfallende Wellenfront eben ist (d.h. $W_{\text{In},1}^{(2)}(0)=0$) kann folglich die Krümmung $W'^{(2)}_{\text{Out},2}(0)$ der ausfallenden Wellenfront direkt mit der Brechkraft des Glases gleichgesetzt werden. Für den refraktiven und den diffraktiven Beitrag zur Brechkraft gilt dementsprechend:

$$S(\overline{x},\lambda) = S_{\text{ref}}(\overline{x},\lambda) + S_{\text{diff}}(\overline{x},\lambda), \tag{145}$$

wobei

$$\begin{aligned}
S_{\text{ref}}(\overline{x},\lambda) &= (n(\lambda)-1)\overline{S}^{(2)}(\overline{x}) \\
&= (n(\lambda)-1)\left(\overline{S}_1^{(2)}(\overline{x}) + \overline{S}_2^{(2)}(\overline{x})\right) \\
S_{\text{diff}}(\overline{x},\lambda) &= -\Psi^{(2)}(\overline{x},\lambda) \\
&= -\left(\Psi_1^{(2)}(\overline{x},\lambda) + \Psi_2^{(2)}(\overline{x},\lambda)\right).
\end{aligned} \tag{146}$$

Wenn angenommen wird, dass $n(\lambda)$ linear von der Wellenlänge abhängt, gilt

$$\begin{aligned}
n(\lambda)-1 &= (n_0-1) + \frac{\partial n}{\partial \lambda}(\lambda-\lambda_0) \\
&= (n_0-1) + \frac{n_C-n_F}{\lambda_C-\lambda_F}(\lambda-\lambda_0) \\
&= (n_0-1)\left(1 + \frac{n_C-n_F}{n_0-1}\left(\frac{\lambda-\lambda_0}{\lambda_C-\lambda_F}\right)\right).
\end{aligned} \tag{147}$$

In der obigen Gleichung ist $\lambda_F = 486{,}1\,nm$ und $\lambda_C = 656{,}3\,nm$. Die Wellenläge $\lambda_0$ im Ausdruck $n_0 = n(\lambda_0)$ ist eine geeignet gewählte Wellenlänge.

Bevorzugt ist $\lambda_0 = \lambda_d = 587{,}1\,nm$ diejenige Wellenlänge, bei der die Abbezahl $v_d = -\dfrac{n_d-1}{n_C-n_F}$ definiert ist, so dass

$$n(\lambda) - 1 = (n_d - 1)\left(1 - \frac{1}{v_d}\left(\frac{\lambda - \lambda_d}{\lambda_C - \lambda_F}\right)\right) \tag{147a}$$

ist.

Die Phase $\Psi$ ist proportional zur Wellenlänge und lautet in einer Raumdimension:

$$\Psi(\overline{x}; \lambda, m) = m\lambda \cdot \psi(\overline{x}). \tag{148}$$

Die Gesamtbrechkraft kann durch die gesuchten Funktionen $\overline{S}^{(2)}(\overline{x})$ der Flächenkrümmung und $\psi^{(2)}(\overline{x})$ der Phasenkrümmung ausgedrückt werden:

$$S(\overline{x}, \lambda) = (n_d - 1)\left(1 - \frac{1}{v_d}\left(\frac{\lambda - \lambda_d}{\lambda_C - \lambda_F}\right)\right)\overline{S}^{(2)}(\overline{x}) - m\lambda \cdot \psi^{(2)}(\overline{x}). \tag{149}$$

In den folgenden Beispielen wird die Zielfunktion vom Typ 1 für 2 Wellenlängen ausgewertet. Für die Gewichtsfunktionen gilt $g_S(i,\lambda)=1$, $g_{FLF}(i) = 1$ und $g_{FQF}(i) =1$. Die Sollvorgaben für den Refraktionsfehler werden auf $S_{\Delta,Soll}(i,\lambda) = 0$ gesetzt. Die Größe $S_\Delta(i, \lambda)$ ist dabei die Differenz aus der vorhandenen Brechkraft $S(\overline{x},\lambda)$ und der verlangten Rezeptwirkung des Glases $S_{Rezept}$.

Unter diesen Bedingungen weisen die Zielfunktionen unterschiedlicher Typen jeweils die folgenden Formen auf:

$$\text{Typ 1)} \quad F_1 = \sum_i \left(S(\overline{x}_i, \lambda_1) - S_{Rezept}\right)^2 + \sum_i \left(S(\overline{x}_i, \lambda_2) - S_{Rezept}\right)^2$$

$$\text{Typ 2)} \quad F_2 = \sum_i \left(S(\overline{x}_i, \lambda_0) - S_{Rezept}\right)^2 + f\left(\mathbf{S}_{SK}(i, \lambda_2) - \mathbf{S}_{SK}(i, \lambda_1)\right)^2 \tag{150}$$

$$\text{Typ 3)} \quad F_3 = \sum_i \left(S(\overline{x}_i, \lambda_0) - S_{Rezept}\right)^2 + g\left(\Delta\varphi_{SK}(i, \lambda_2, \lambda_1)\right)^2.$$

Ausführungsbeispiel 1

Das Brillenglas gemäß dem ersten Vergleichsbeispiel ist nach einem herkömmlichen Verfahren mittels Minimierung einer monochromatischen Zielfunktion optimiert worden. Die Einstärkengläser gemäß dem Beispiel 1 oder dem Beispiel 2 werden jeweils nach einem der oben dargestellten Verfahren mittels Zielfunktionen des Typs 1 (Beispiel 1) oder des Typs 2 (Beispiel 2) optimiert. Die für die polychromatische Optimierung ausschlaggebenden Wellenlängen sind $\lambda_1 = \lambda_F = 486{,}1$ nm und $\lambda_2 = \lambda_C = 656{,}3$ nm. Die nachfolgende **Tabelle 1** fasst die Vorgaben für die Optimierungsverfahren zusammen.

Tabelle 1:

|  | **Zielfunktion** | **Freiheitsgrade** | **Bewertungsstellen** |
|---|---|---|---|
| **Vergleichsbeispiel 1** | monochromatisch | 1 (refraktiv) | 1 ($\overline{x}_i = 0$) |
| **Beispiel 1** | Typ 1 | 1 (refraktiv) + 1 (diffraktiv) = 2 | 1 ($\overline{x}_i = 0$) |
| **Beispiel 2** | Typ 2 | 1 (refraktiv) + 1 (diffraktiv) = 2 | 1 ($\overline{x}_i = 0$) |

Die zu optimierenden Glasflächen und die eingesetzten Gitter können durch eine Parameterdarstellung oder durch Splines oder eine andere geeignete Form beschrieben werden. Bei den Brillengläsern des Vergleichsbeispiels 1 sowie des ersten und des zweiten Beispiels wird die brechende, zu optimierende Fläche durch den einen Freiheitsgrad der Krümmung $k$ wie folgt beschrieben

$$\overline{S}(\overline{x}) = \frac{k}{2}\overline{x}^2.$$  (151a)

Die Gitterphase wird durch die Funktion

$$\psi(\overline{x}) = \frac{\alpha_2}{2}\overline{x}^2$$  (151b)

beschrieben, wobei $\alpha_2$ ein variabler Parameter ist.

Vergleichsbeispiel 1

Die monochromatische Zielfunktion aus Gleichung (3) lautet unter den Annahmen des vorliegenden Beispiels

$$F_{\text{monochrom}} = \left(a_d u + c\right)^2,$$  (152)

wobei $a_d = (n_d - 1)$ und $c = -S_{\text{Rezept}}$ ist. Hier spielt $u = \overline{S}^{(2)}(0) = k$ die Rolle des einzigen Freiheitsgrades, da das Gitter bei der monochromatischen Optimierung nicht vorkommt.

Eine Optimierung des Brillenglases gemäß dem Vergleichsbeispiel 1 anhand der monochromatischen Zielfunktion aus Gleichung (140) aufgrund einer Wellenfrontdurchrechnung ohne diffraktiven Zusatzterm liefert das Ergebnis $u = -c/a_d$, wie z.B. durch Differenzieren der Gleichung (152) nach $u$ und anschließendes Nullsetzen ersichtlich.

Dies ist gleichbedeutend mit

$$\overline{S}^{(2)}(0) = \frac{S_{\text{Rezept}}}{n_d - 1} \approx 10{,}05 dpt.$$  (153)

Die Brechkraft eines solchen Glases ist nach Einsetzen von Gleichung (153) in Gleichungen (147), (148), (149):

$$S(\overline{x},\lambda) = (n(\lambda) - 1)\overline{S}^{(2)}(\overline{x}) = \left(1 - \frac{1}{v_d}\left(\frac{\lambda - \lambda_d}{\lambda_C - \lambda_F}\right)\right)S_{\text{Rezept}}.$$  (154)

In diesem Fall ist $S(\overline{x},\lambda)$ des Brillenglases gleich $S_{\text{Rezept}}$ nur für $\lambda = \lambda_d$. Für andere Wellenlängen weist das Brillenglas gemäß dem Vergleichsbeispiel 1 einen Refraktionsfehler auf.

Der Farblängsfehler (FLF) eines Brillenglases gemäß dem Vergleichsbeispiel 1, welches durch

$$FLF(\overline{x}) := S(\overline{x},\lambda_1) - S(\overline{x},\lambda_2)$$  (155)

definiert ist, verschwindet daher nicht, sondern ist durch

$$FLF(\overline{x}) = \frac{S_{\text{Rezept}}}{v_d} = 0{,}14 dpt$$  (155a)

gegeben.

Der Farbquerfehler (FQF) eines Brillenglases kann unter den Voraussetzungen des vorliegenden Beispiels, insbesondere unter Vernachlässigung der Korrekturen für schiefen Strahleinfall, aus dem Farblängsfehler (FLF) durch Integration der Prentice'schen Regel ermittelt werden. In der differentiellen Form lautet die Prentice'schen Regel:

$$S(r) = \frac{\partial \mathrm{Pr}}{\partial r} \quad \Rightarrow \quad \mathrm{Pr}(r) = \mathrm{Pr}(0) + \int_0^r S(r')dr', \tag{156}$$

wobei Pr die prismatische Wirkung ist. Da $\mathrm{Pr}(0) = 0$ gilt für den Farbquerfehler:

$$FQF(\bar{x}) := \left| \mathrm{Pr}(\bar{x}, \lambda_1) - \mathrm{Pr}(\bar{x}, \lambda_2) \right| = \left| \int_0^r FLF(r')dr' \right| \tag{157}$$

Im vorliegenden Fall gilt

$$FQF(\bar{x}) = \left| \int_0^r \frac{S_{\mathrm{Rezept}}}{v_d} dr' \right| = 0{,}14 dpt \times |r| \ . \tag{157a}$$

Erstes Beispiel

Bei dem ersten Beispiel wird das Brillenglas polychromatisch unter Minimierung einer Zielfunktion vom Typ 1 optimiert. Eine beispielhafte Zielfunktion ist eine Zielfunktion der Form

$$F_1 = \left(a_1 u + b_1 v + c\right)^2 + \left(a_2 u + b_2 v + c\right)^2 \ , \tag{158}$$

wobei

$$a_i = (n_d - 1)\left(1 - \frac{1}{v_d}\left(\frac{\lambda_i - \lambda_d}{\lambda_C - \lambda_F}\right)\right), \quad i = 1,2;$$

$$b_i = -m\lambda_i, \quad i = 1,2;$$

$$c = -S_{\mathrm{Rezept}}; \tag{159}$$

$$u = \overline{S}^{(2)}(0) = k;$$

$$v = \psi^{(2)}(0) = \alpha_2$$

sind.

Direktes Ableiten von F nach $u$ und $v$ und Nullsetzen führt zu den Lösungen

$$u = \frac{(b_2 - b_1)c}{a_2 b_1 - a_1 b_2} \quad v = \frac{(a_2 - a_1)c}{a_1 b_2 - a_2 b_1} \tag{160}$$

Dies ist gleichbedeutend mit

$$\overline{S}^{(2)}(0) = \frac{S_{\text{Rezept}}}{n_d - 1} \times \left(1 + \frac{1}{v_d}\frac{\lambda_d}{\lambda_C - \lambda_F}\right)^{-1}$$

$$\psi^{(2)}(0) = \frac{1}{m} \times \frac{S_{\text{Rezept}}}{-v_d(\lambda_C - \lambda_F)} \times \left(1 + \frac{1}{v_d}\frac{\lambda_d}{\lambda_C - \lambda_F}\right)^{-1}.$$

(161)

Für das erste Beispiel ergeben sich folgenden numerischen Werte

$$\overline{S}^{(2)}(0) \approx 9{,}29\,dpt$$

$$\psi^{(2)}(0) \approx 7{,}76 \times 10^5 m^{-2}.$$

(161a)

Die Brechkraft eines solchen Glases ist nach Einsetzen von Gleichung (159) in den Gleichungen (147), (148), (149):

$$
\begin{aligned}
S(\overline{x},\lambda) &= S_{\text{ref}}(\overline{x},\lambda) + S_{\text{diff}}(\overline{x},\lambda) \\
&= (n(\lambda) - 1)\overline{S}^{(2)}(\overline{x}) - \Psi^{(2)}(\overline{x},\lambda) \\
&= (n_d - 1)\left(1 - \frac{1}{v_d}\left(\frac{\lambda - \lambda_d}{\lambda_C - \lambda_F}\right)\right)\frac{S_{\text{Rezept}}}{n_d - 1} \times \left(1 + \frac{1}{v_d}\frac{\lambda_d}{\lambda_C - \lambda_F}\right)^{-1} \\
&\quad - m\lambda\frac{1}{m} \times \frac{S_{\text{Rezept}}}{-v_d(\lambda_C - \lambda_F)} \times \left(1 + \frac{1}{v_d}\frac{\lambda_d}{\lambda_C - \lambda_F}\right)^{-1} \\
&= S_{\text{Rezept}}.
\end{aligned}
$$

(162)

Der Farblängsfehler (FLF) eines solchen Glases ist

$$FLF(\overline{x}) = S_{\text{Rezept}} - S_{\text{Rezept}} = 0.$$

(163)

Entsprechend gilt für den Farbquerfehler

$$FLF(\overline{x}) = 0.$$

(164)

Die Minimierung der Zielfunktion vom Typ 1 liefert folglich ein Glas, das die Rezeptvorgabe exakt erfüllt und das vollständig hinsichtlich des Farblängsfehlers und des Farbquerfehlers korrigiert ist.

**Zweites Beispiel**

Bei dem zweiten Beispiel wird das Brillenglas polychromatisch, unter Minimierung einer Zielfunktion vom Typ 2 (vgl. Gleichung (142b)) optimiert. Eine beispielhafte Zielfunktion ist eine Zielfunktion der Form

$$F = \left(a_d u + b_d v + c\right)^2 + \left(a_2 u + b_2 v - a_1 u - b_1 v\right)^2,$$

(165)

wobei

$$a_d = (n_d - 1);$$

$$a_i = (n_d - 1)\left(1 - \frac{1}{v_d}\left(\frac{\lambda_i - \lambda_d}{\lambda_C - \lambda_F}\right)\right), \quad i = 1,2;$$

$$b_i = -m\lambda_i, \quad i = 0,1,2;$$

$$c = -S_{\text{Rezept}};$$

$$u = \overline{S}^{(2)}(0);$$

$$v = \psi^{(2)}(0). \tag{166}$$

Direktes Ableiten von $F$ nach $u$ und $v$ und Nullsetzen führt auf die Lösungen

$$u = \frac{(b_2 - b_1)c}{(a_2 - a_1)b_0 - (b_2 - b_1)a_0} \quad v = \frac{(a_2 - a_1)c}{(b_2 - b_1)a_0 - (a_2 - a_1)b_0} \quad , \tag{167}$$

was gleichbedeutend ist mit

$$\overline{S}^{(2)}(0) = \frac{S_{\text{Rezept}}}{n_d - 1} \times \left(1 + \frac{1}{v_d}\frac{\lambda_d}{\lambda_C - \lambda_F}\right)^{-1}$$

$$\psi^{(2)}(0) = \frac{1}{m} \times \frac{S_{\text{Rezept}}}{-v_d(\lambda_C - \lambda_F)} \times \left(1 + \frac{1}{v_d}\frac{\lambda_d}{\lambda_C - \lambda_F}\right)^{-1} \tag{168}$$

Somit ist die Lösung nach Gleichung (168) identisch mit der Lösung nach Gleichung (160), welche nach der Minimierung der Zielfunktion vom Typ 1 erhalten wird.

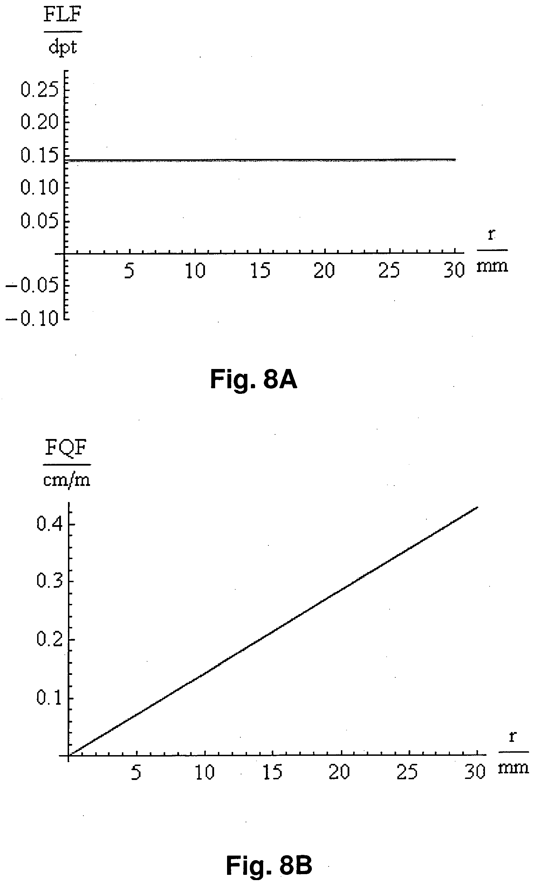

**Fig. 8** zeigt den Farblängsfehler (Fig. 8A) und den Farbquerfehler (Fig. 8B) des Beispielglases gemäß dem Vergleichsbeispiel 1. Wie aus Fig. 8 ersichtlich, tritt ein deutlicher Farblängsfehler (FLF) von 0,14dpt auf, so dass der Farbquerfehler (FQF) außerhalb eines Radius von $r \approx 8mm$ über der in der Physiologie üblichen Wahrnehmungsschwelle für den Farbsaum von 0,12 cm/m liegt.

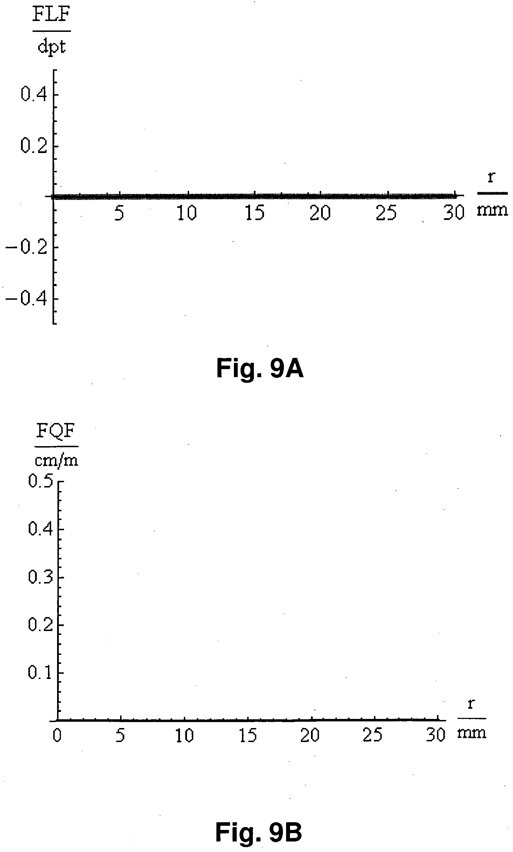

**Fig. 9** zeigt den Farblängsfehler (Fig. 9A) und den Farbquerfehler (Fig. 9B) des Beispielglases, welches nach einer Zielfunktion vom Typ 1 (Beispiel 1) oder vom Typ 2 (Beispiel 2) optimiert worden ist. Im Gegensatz zu dem Vergleichsbeispiel 1 ist durch eine Optimierung nach einer Zielfunktion vom Typ 1 oder vom Typ 2 möglich, den Farblängsfehler (FLF) und den Farbquerfehler FQF über das ganze Glas auf Null zu bringen.

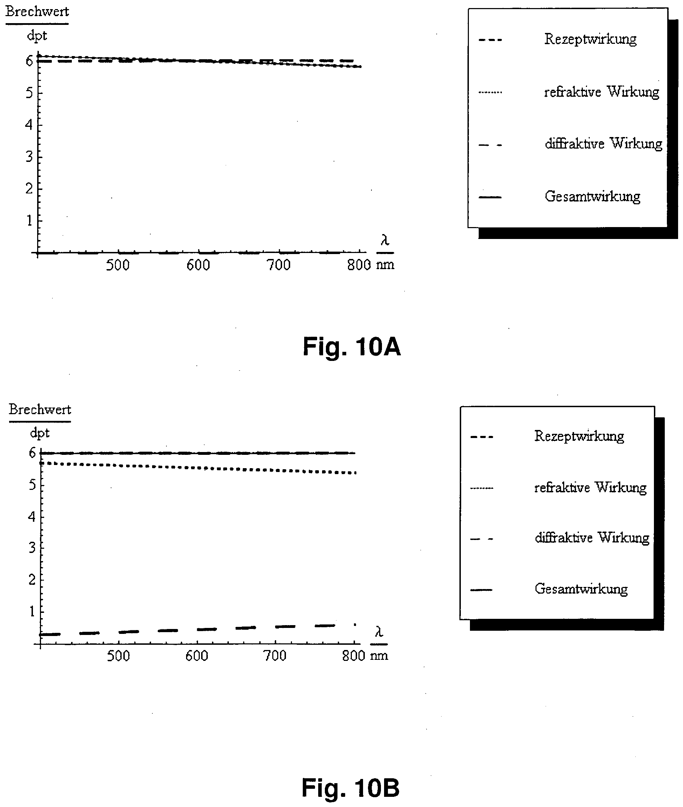

**Fig. 10A** zeigt die Rezeptwirkung, die refraktive Wirkung, die diffraktive Wirkung und die Gesamtwirkung in der Glasmitte als Funktion der Wellenlänge für das Brillenglas gemäß dem Vergleichsbeispiel 1, welches nach der monochromatischen Zielfunktion optimiert worden ist. **Fig. 10B** zeigt die Rezeptwirkung, die refraktive Wirkung, die diffraktive Wirkung und die Gesamtwirkung in der Glasmitte als Funktion der Wellenlänge für das Brillenglas, welches nach einer Zielfunktion vom Typ 1 (Beispiel 1) oder vom Typ 2 (Beispiel 2) optimiert worden ist.

Der Refraktionsfehler des Glases nach dem Vergleichsbeispiel 1 ist in Fig. 10A durch die leicht abfallende durchgezogene Kurve für die Gesamtwirkung gezeigt. Er ist ausschließlich durch den refraktiven Anteil (kurz gestrichelt) gegeben, der aufgrund der Dispersion für große Wellenlängen abfällt. Im Gegensatz dazu, entfallen bei dem Beispiel 1 und dem Beispiel 2 nur etwas mehr als 90% der Gesamtwirkung auf den refraktiven Anteil (Fig. 10B). Hinzu kommt ein diffraktiver Anteil (lang gestrichelt), welcher mit steigender Wellenlänge leicht ansteigt und dadurch das abfallende Verhalten des refraktiven Anteils kompensiert. Das Ergebnis ist ein refraktionsrichtiges Glas für alle Wellenlängen.

**Ausführungsbeispiel 2**

Ein zweites Vergleichsbeispiel betrifft ein Brillenglas, welches nach einem Verfahren gemäß dem Stand der Technik mittels Minimierung einer monochromatischen Zielfunktion optimiert worden ist. Die Einstärkengläser gemäß dem Beispiel 3 oder dem Beispiel 4 werden jeweils nach einem der oben dargestellten Verfahren mittels Zielfunktionen des Typs 1 (Beispiel 3) oder des Typs 2 (Beispiel 4) optimiert. Wie bei dem Ausführungsbeispiel 1 sind auch im Ausführungsbeispiel 2 die für die polychromatische Optimierung ausschlaggebenden Wellenlängen $\lambda_1 = \lambda_F = 486{,}134nm$ und $\lambda_2 = \lambda_C = 656{,}281nm$. Die nachfolgende Tabelle 2 fasst die Vorgaben für die Optimierung zusammen.

Tabelle 2

|  | Zielfunktion | Freiheitsgrade | Bewertungsstellen |
|---|---|---|---|
| **Vergleichsbeispiel 2** | monochromatisch | 1 (refraktiv) | 11 |
| **Beispiel 3** | Typ 1 | 1 (refraktiv) + 3 (diffraktiv) = 4 | 11 |
| **Beispiel 4** | Typ 2 | 1 (refraktiv) + 3 (diffraktiv) = 4 | 11 |

Die brechende, zu optimierende Glasfläche wird in diesem Ausführungsbeispiel durch eine exakte Sphäre, welche durch den einen Freiheitsgrad der Krümmung $k$ beschrieben wird, vorgegeben:

$$\overline{S}(\overline{x}) = \frac{1}{k} - \sqrt{\frac{1}{k^2} - \overline{x}^2} \; . \tag{169}$$

Die Gitterphase wird durch die Funktion

$$\psi(\overline{x}) = \frac{\alpha_2}{2}\overline{x}^2 + \frac{\alpha_3}{3!}\overline{x}^3 + \frac{\alpha_4}{4!}\overline{x}^4 \tag{170}$$

mit den drei Parametern $\alpha_2, \alpha_3, \alpha_4$ als Freiheitsgrade vorgegeben.
Für die Bewertungsstellen gilt

$$\overline{x}_i = -30mm + (i-1)\times 6mm \, , \; i = 1,2,...x \, . \tag{171}$$

Die 11 Bewertungsstellen sind folglich die Bewertungsstellen $\overline{x}_1$ = -30$mm$, $\overline{x}_2$ = -24$mm$ , ..., $\overline{x}_{11}$ = +30$mm$.

Zweites Vergleichsbeispiel

Für die Optimierung nach dem zweiten Vergleichsbeispiel wird eine monochromatische Zielfunktion nach Gleichung (3) verwendet. Unter den Annahmen von Ausführungsbeispiel 2, weist die Zielfunktion die Form

$$F_{\text{monochrom}} = \sum_{i=1}^{11} (a_d u_i + c)^2 \tag{172}$$

auf, wobei $u_i = S^{(2)}(\overline{x})$.
Eine Minimumsuche von Gleichung (172) nach dem Freiheitsgrad $k$ kann beispielsweise durch Differenzieren und Nullsetzen oder durch ein numerisches Verfahren zur Minimumsuche erfolgen. Ein geeignetes numerisches Verfahren zur Minimumsuche ist z.B. die Methode der konjugierten Gradienten, die Methode durch Hauptachsenbestimmung, die Methode nach Levenberg-Marquardt, ein Newton'sches Verfahren oder ein Quasi-Newton-Verfahren.
Als Ergebnis dieser Minimumbestimmung wird für den Parameter $k$ der Wert

$$k \approx 9{,}49 dpt \qquad (173)$$

ermittelt.

Dieser Wert ist etwas geringer als der Wert, welcher bei einer der monochromatischen Optimierungen mit nur einer einzigen Bewertungsstelle gemäß dem Vergleichsbeispiel 1 ermittelt wurde (siehe Gleichung (153)).

Drittes Beispiel

Im Vergleich zu dem zweiten Vergleichsbeispiel ist die in dem dritten Beispiel verwendete Zielfunktion vom Typ 1 der Form

$$F_1 = \sum_{i=1}^{11} (a_1 u_i + b_1 v_i + c)^2 + (a_2 u_i + b_2 v_i + c)^2 , \qquad (174)$$

wobei $u_i = S^{(2)}(\bar{x}_i)$, $v_i = \psi^{(2)}(\bar{x}_i)$.

Eine Minimumsuche von Gleichung (37) nach den Freiheitsgraden $k$, $\alpha_2, \alpha_3, \alpha_4$ führt zu den folgenden Ergebnissen:

$$
\begin{aligned}
k &\approx 8{,}846 dpt \,; \\
\alpha_2 &\approx 1{,}24 \times 10^6 \, m^{-2} \,; \\
\alpha_3 &\approx 4{,}04 \times 10^{-9} \, m^{-3} \,; \\
\alpha_4 &\approx -2{,}33 \times 10^9 \, m^{-4} \,.
\end{aligned}
\qquad (175)
$$

Dies liefert insbesondere

$$
\begin{aligned}
\overline{S}^{(2)}(0) &\approx 8{,}846 dpt \\
\psi^{(2)}(0) &= 1{,}24 \times 10^6 \, m^{-2}
\end{aligned}
\qquad (175a)
$$

und

$$
\begin{aligned}
\overline{S}^{(2)}(30mm) &\approx 9{,}86 dpt \\
\psi^{(2)}(30mm) &= 1{,}91 \times 10^5 \, m^{-2} \,.
\end{aligned}
\qquad (175b)
$$

Bei einem Vergleich der Gleichung (161 a) mit den Gleichungen (175a) und (175b) kann festgestellt werden, dass die Gleichung (161 a), welche auf eine Optimierung mit lediglich einer Bewertungsstelle basiert, im Wesentlichen Durchschnittswerte von Gleichungen (175a) und (175b), welche jeweils auf eine Optimierung mit 11 Bewertungsstellen basieren, liefert.

Viertes Beispiel

Die bei der Optimierung des Brillenglases nach dem vierten Beispiel verwendete Zielfunktion ist der Form

$$F_1 = \sum_{i=1}^{11} (a_d u_i + b_d v_i + c)^2 + (a_2 u_i + b_2 v_i - a_1 u_i - b_1 v_i)^2 \,. \qquad (176)$$

Eine Minimumsuche von Gleichung (176) nach den Freiheitsgraden $k,\ \alpha_2, \alpha_3, \alpha_4$ führt zu den folgenden Ergebnissen

$$k \approx 8{,}847\,dpt\,;$$

$$\alpha_2 \approx 1{,}19 \times 10^6\,m^{-2}\,;$$

$$\alpha_3 \approx 2{,}34 \times 10^{-9}\,m^{-3}\,;$$

$$\alpha_4 \approx -2{,}12 \times 10^9\,m^{-4}\,.$$

$$(177)$$

Dies liefert insbesondere

$$\overline{S}^{(2)}(0) \approx 8{,}846\,dpt$$

$$\psi^{(2)}(0) = 1{,}19 \times 10^6\,m^{-2}$$

$$(177a)$$

und

$$\overline{S}^{(2)}(30mm) \approx 9{,}87\,dpt$$

$$\psi^{(2)}(30mm) = 2{,}42 \times 10^5\,m^{-2}\,.$$

$$(177b)$$

Die obigen Zahlenwerte sind vergleichbar, jedoch leicht abweichend von den entsprechenden Zahlenwerten, welche mittels einer Minimumsuche der Zielfunktion vom Typ 1 erhalten werden.

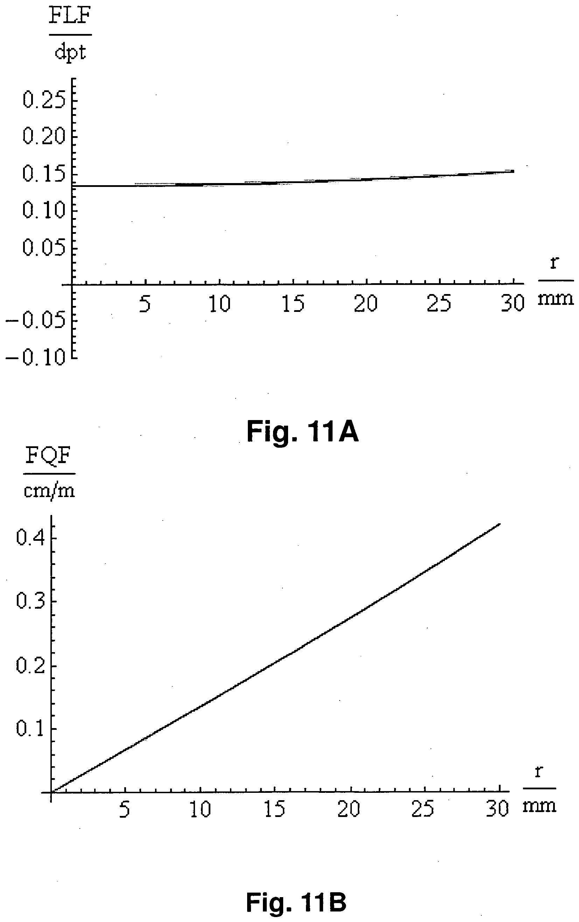

Die Ergebnisse der Brillenglasoptimierung jeweils nach der Zielfunktion vom Typ 1 (drittes Beispiel) und vom Typ 2 (viertes Beispiel) sind im Vergleich zu der Optimierung nach der monochromatischen Zielfunktion (zweites Vergleichsbeispiel) in Figuren 11 bis 15 dargestellt.

In **Fig. 11** sind der Farblängsfehler (Fig. 11A) und der Farbquerfehler (Fig. 11 B) des Brillenglases gemäß dem zweiten Beispiel als Funktion der radialen Koordinate dargestellt. Ähnlich wie beim ersten Vergleichsbeispiel (siehe Fig. 8A und Fig. 8B) mit nur einer Bewertungsstelle, liegt auch hier der Farblängsfehler über das ganze Glas über 0,12 dpt. Im Unterschied zu dem ersten Vergleichsbeispiel steigt er nach außen jedoch leicht an. Der Farbquerfehler weist praktisch einen ähnlichen Verlauf auf wie in Fig. 8B.

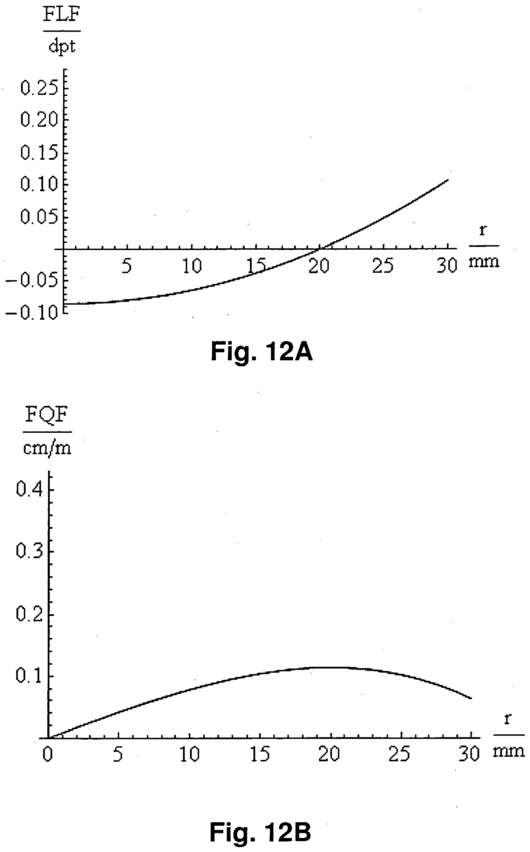

**Fig. 12** zeigt den Farblängsfehler (Fig. 12A) und Farbquerfehler (Fig. 12B) eines Beispielglases, welches gemäß dem dritten Beispiel nach einer Zielfunktion vom Typ 1 optimiert worden ist. Die Optimierung einer Zielfunktion vom Typ 1 führt zu einem Brillenglas, dessen Farblängsfehler im Betrag überall unter 0,1 dpt liegt (Fig. 12A). Der entsprechende Farbquerfehler liegt überall im Glas unter der Wahrnehmungsschwelle von 0,12cm/m (Fig. 12B).

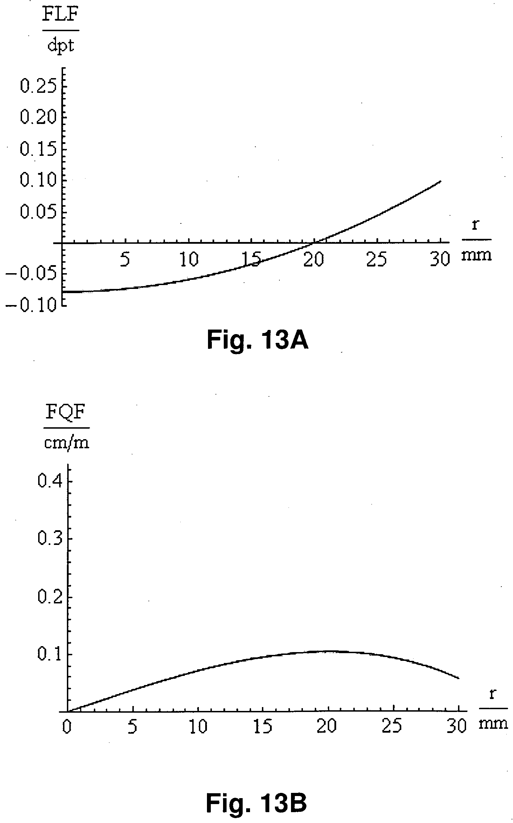

**Fig. 13** zeigt den Farblängsfehler (Fig. 13A) und Farbquerfehler (Fig. 13B) eines Beispielglases, welches gemäß dem vierten Beispiel nach einer Zielfunktion vom Typ 2 optimiert worden ist. Wird wie im vierten Beispiel eine Zielfunktion vom Typ 2 optimiert, so sind die Resultate numerisch leicht unterschiedlich von denjenigen bei einer Zielfunktion vom Typ 1. Qualitativ ist jedoch die Verbesserung gegenüber dem Stand der Technik (siehe Vergleichsbeispiel 2) sehr ähnlich.

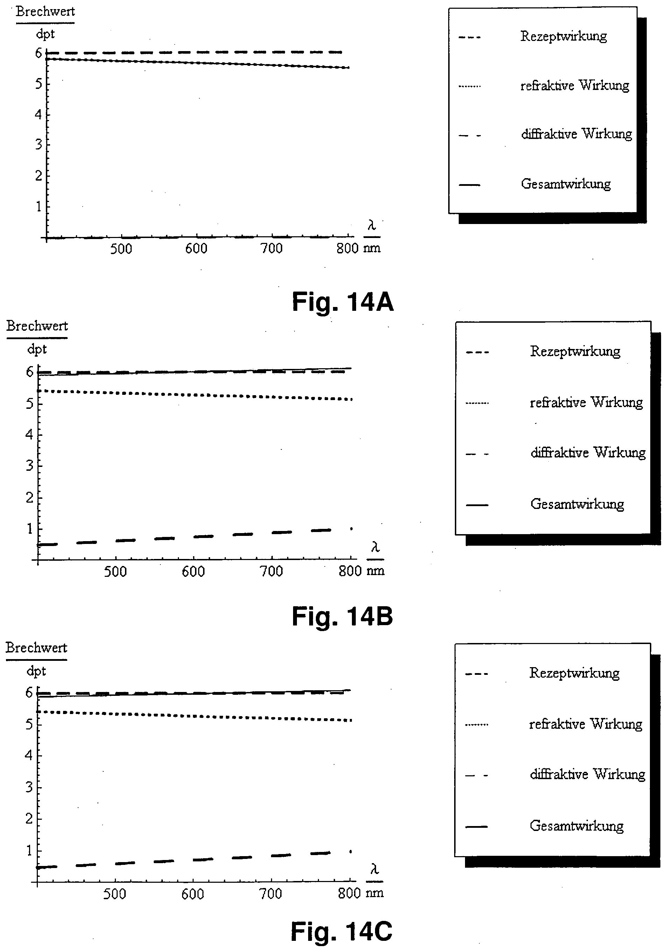

In **Fig. 14A-C** sind analog zu Fig. 10A-B die Wellenlängenabhängigkeiten verschiedener Größen (die Rezeptwirkung, die refraktive Wirkung, die diffraktive Wirkung und die Gesamtwirkung in der Glasmitte) aufgetragen. **Fig. 14A** zeigt die Verläufe für die monochromatische Optimierung nach dem zweiten Vergleichsbeispiel, **Fig. 14B** die Ergebnisse für eine Optimierung nach dem dritten Beispiel unter Verwendung einer Zielfunktion vom Typ 1 und **Fig. 14C** die Ergebnisse für eine Optimierung nach dem vierten Beispiel unter Verwendung einer Zielfunktion vom Typ 2. Wie aus den Figuren 14A-C ersichtlich, sind gegenüber Ausführungsbeispiel 1 keine auffälligen Änderungen durch die Hinzunahme von Bewertungsstellen sichtbar. Ebenfalls bestehen zwischen den Optimierungen nach Typ 1 und Typ 2 lediglich marginale Unterschiede.

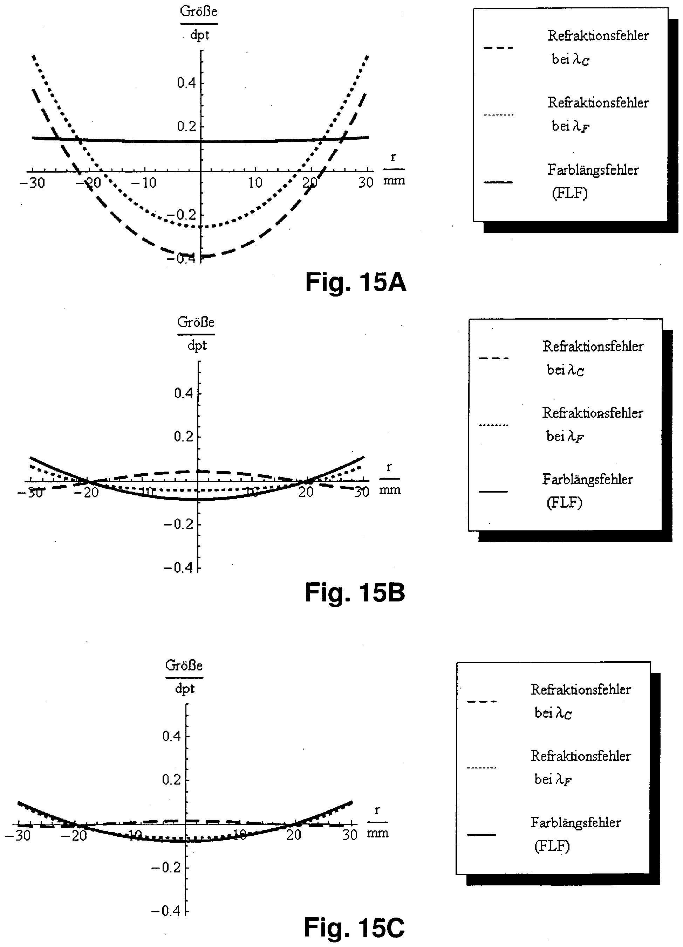

Im Gegensatz dazu sind in **Fig. 15A-C** die Refraktionsfehler bei verschiedenen Wellenlängen und der Farblängsfehler auf feinerer Skala gegen die radiale Koordinate aufgetragen. Insbesondere zeigt **Fig. 15A** den Refraktionsfehler bei der Wellenlänge $\lambda_C$, den Refraktionsfehler bei der Wellenlänge $\lambda_F$ und den Farblängsfehler eines Glases gemäß dem Vergleichsbeispiel 2, welches nach der oben beschriebenen monochromatischen Zielfunktion optimiert worden ist. **Fig. 15B** zeigt den Refraktionsfehler bei der Wellenlänge $\lambda_C$, den Refraktionsfehler bei der Wellenlänge $\lambda_F$ und den

Farblängsfehler eines Glases gemäß dem dritten Beispiel, welches nach einer polychromatischen Zielfunktion vom Typ 1 optimiert worden ist. **Fig. 15C** zeigt den Refraktionsfehler bei der Wellenlänge $\lambda_C$, den Refraktionsfehler bei der Wellenlänge $\lambda_F$ und den Farblängsfehler eines Glases gemäß dem vierten Beispiel, welches nach einer polychromatischen Zielfunktion vom Typ 2 optimiert worden ist.

Wie aus Fig. 15A ersichtlich, weist das nach einer monochromatischen Optimierung optimierten Brillenglas zunächst einen großen Hub der Refraktionsfehler bei beiden Wellenlängen auf. Dieser ist allerdings im Wesentlichen ein Merkmal des gewählten Flächenansatzes und ist durch die Auswahl eines flexibleren Flächenansatzes weitgehend vermeidbar. Im Gegensatz dazu ist der konstant hohe Farblängsfehler in Fig. 15A ein zwangsläufiges Merkmal des monochromatischen Optimierungsverfahrens nach dem Stand der Technik, bei welchem der Farbsaum nicht korrigiert wird. Durch die Hinzunahme eines diffraktiven Gitters und die Verwendung eines beispielhaften Verfahrens gemäß der Erfindung kann der Farblängsfehler stark verbessert werden (Fig. 15B). Die Optimierung mittels einer Zielfunktion vom Typ 1 führt zu einer deutlichen Reduktion des Farblängsfehlers, verbunden mit einer simultanen deutlichen Reduktion der Refraktionsfehler. Eine Optimierung mittels einer Zielfunktion vom Typ 2 führt zu ähnlich starken Verbesserungen, jedoch zu einer im Einzelnen anderen Verteilung der Fehler als Funktion der Koordinate (Fig. 15C).

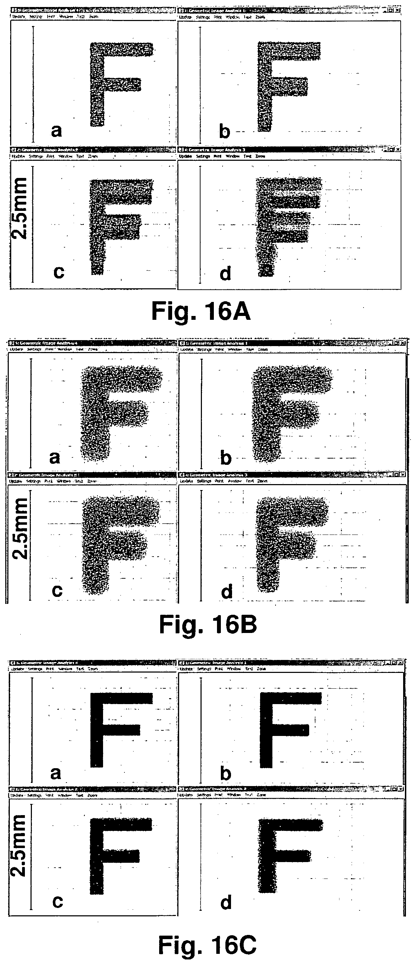

**Figuren 16A** bis **16C** illustrieren den Farbsaum eines Brillenglases für verschiedene Blickwinkel a) 0° b) 10° c) 20° d) 30°, wobei Fig. 16A eine unkorrigierte Abbildung durch ein monochromatisch optimiertes Brillenglas, Fig. 16B eine Abbildung durch ein farbsaumkorrigiertes Brillenglas, ohne eine asphärische Nachoptimierung der refraktiven Flächen und Fig. 16C eine Abbildung durch ein Brillenglas, welches mittels einer simultanen Farbsaumoptimierung und einer asphärischen Nachoptimierung optimiert worden ist, zeigen. Wie aus Fig. 16B ersichtlich, führt eine Farbsaumkorrektur ohne Berücksichtigung der Refraktionsfehler des Brillenglases mit dem Gitter zu einer etwas unscharfen Abbildung. Erst die Berücksichtigung sowohl des Farbsaums als auch des Refraktionsfehlers, z.B. mittels eines simultanen Optimierens des diffraktiven Gitters und zumindest einer der refraktiven Flächen des Brillenglases, führt zu einer scharfen, farbsaumkorrigieren Abbildung.

Mit der vorgeschlagenen Vorgehensweise gemäß einem bevorzugten Ausführungsbeispiel der Erfindung kann sowohl für Einstärkengläser und Mehrstärkengläser als auch Progressivgläser eine optimale Kombination aus refraktiven Flächen und diffraktiven Gitter ermittelt und hergestellt werden, welche sowohl mindestens die Abbildungseigenschaften zweiter Ordnung optimiert als auch den Farbsaum minimiert. Diesbezüglich eignet sich insbesondere das Verfahren gemäß dem vierten Beispiel der Erfindung. Jedoch kann ebenfalls mit den Verfahren gemäß dem ersten bis dritten Ausführungsbeispiel eine gute Approximation einer optimalen Kombination erzielt werden.

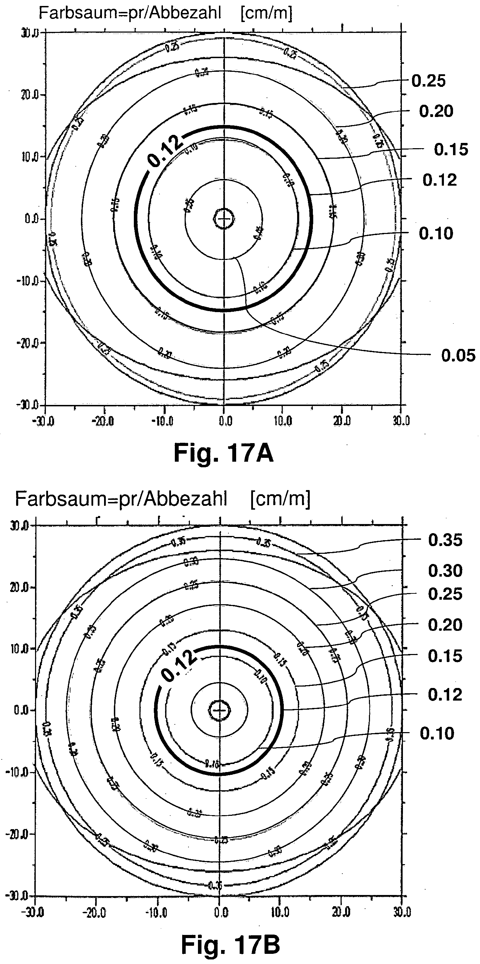

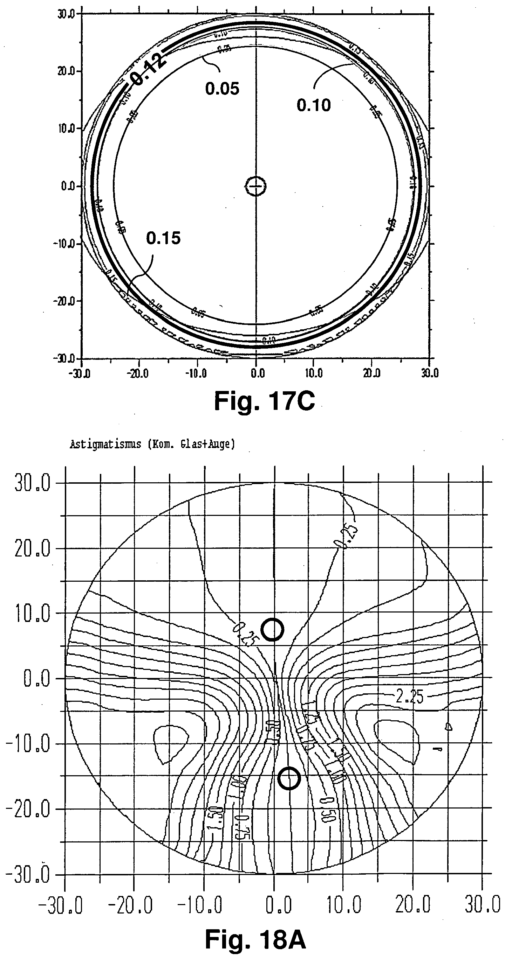

**Fig. 17A-17C** zeigen die Ergebnisse einer exemplarischen Farbsaumkorrektur bei einem rotationssymmetrischen Einstärkenglas mit einer sphärischen Wirkung (Sph) von - 4,0 dpt, wobei die Glaseigenschaften als Funktion der Brillenglaskoordinaten in mm angegeben sind. Fig. 17A zeigt den Farbsaum eines herkömmlichen unkorrigierten Einstärkenglases aus dem optischen Material Perfalit 1,5 mit einem Brechungsindex 1,5 und einer Abbezahl von 58,5. Fig. 17B zeigt den Farbsaum eines herkömmlichen Einstärkenglases aus dem optischen Material Perfalit 1,6 mit einem Brechungsindex 1,6 und mit einer Abbezahl von 40,5. Fig. 17C zeigt den Farbsaum eines farbsaumkorrigierten Einstärkenglases aus dem hochbrechenden optischen Material Perfalit 1,74, mit einem Brechungsindex 1,74. Das farbsaumkorrigierte Einstärkenglas weist eine effektive Abbezahl von ungefähr 130 auf.

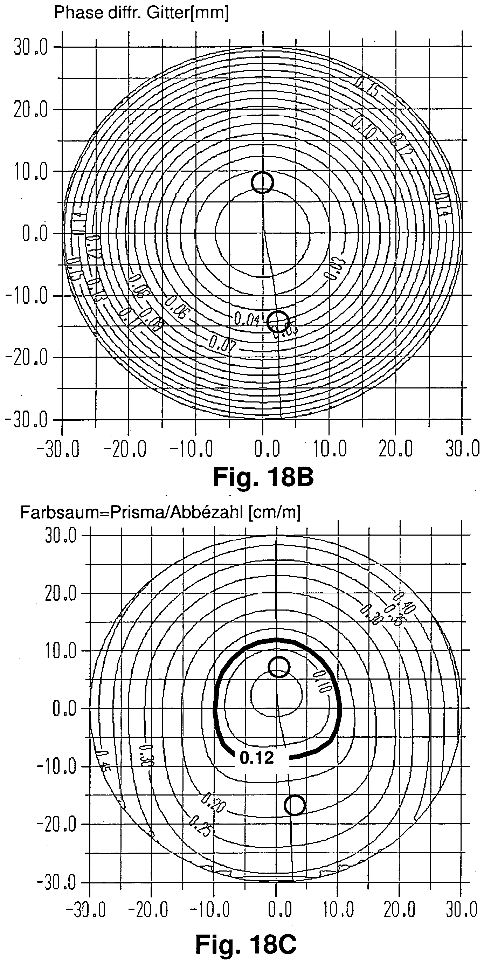

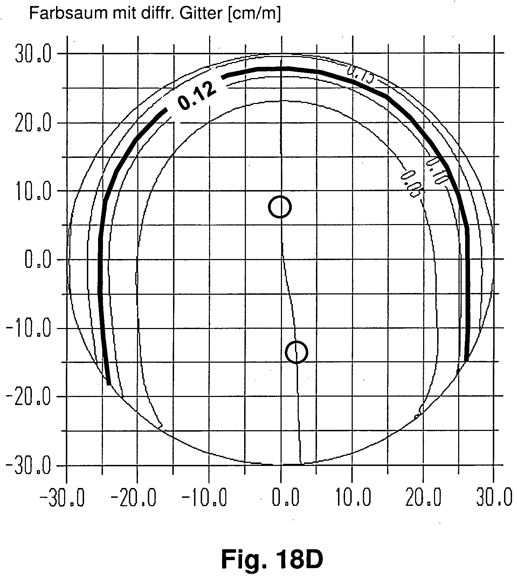

**Fig. 18A-18D** zeigen eine exemplarische Farbsaumkorrektur eines progressiven Brillenglases mittels eines diffraktiven Gitters, wobei Fig. 18A den Astigmatismus in Gebrauchsstellung des Brillenglases, Fig. 18B die diffraktive Phase bzw. die Form der Gitterlinien des diffraktiven Gitters, Fig. 18C den Farbsaum des unkorrigierten Brillenglases und Fig. 18D den Farbsaum des korrigierten Brillenglases zeigen. Das progressive Brillenglas weist eine sphärische Wirkung im Fernbezugspunkt (Sph) von -4,0 dpt und eine Addition von 2,5 dpt auf. Der Brechungsindex des optischen Materials des Brillenglases ist $n$ =1,668 und die Abbezahl $v_d$ = 31,81. Wie aus einem Vergleich der Figuren 18C und 18D ersichtlich, ist es möglich, auch bei relativ hoch asymmetrischen Flächen bzw. optischen Elementen, eine gute Farbsaumkorrektur zu erzielen.

Die obigen Beispiele beziehen sich auf Brillengläser. Mit der vorgeschlagenen Vorgehensweise können jedoch nicht nur Brillengläser, sondern beliebige diffraktive optische Elemente schnell und effizient ausgewertet und optimiert werden. Die vorgeschlagene Vorgehensweise eignet sich insbesondere zum Herstellen von optischen Elementen, welche sowohl hinsichtlich deren monochromatischer Abbildungseigenschaften als auch hinsichtlich deren Farbquer- und/oder Farblängsfehler optimiert worden sind.

**Bezugszeichenliste**

| | |
|---|---|
| 10 | einfallende Wellenfront |
| 12 | Grenzfläche |
| 14 | periodische Struktur (diffraktives Gitter) |

| 16 | ausfallende Wellenfront |
| 20 | Prisma |
| 100 | optisches Element/System (z.B. Brillenglas) |
| 102 | einfallender Strahl |
| 104,106 | refraktive Grenzflächen |
| 108 | ausfallender Strahl |
| 108-m | ausfallender Strahl der m-ten Beugungsordnung |
| 110 | einfallende Wellenfront |
| 112 | ausfallende Wellenfront |
| 122 | diffraktives Gitter |
| 114 | optisches Material |
| 116 | Durchgang durch das optische Material |
| 122a | Gitterlinien |
| 112b | projizierte Gitterlinien |
| 124 | Einfallsebene |
| 126 | orthogonale Trajektorien |
| 130-134 | Schritte des Übergangs zwischen einer Periodenfunktion und einer Phasenfunktion |

**Patentansprüche**

1. Computerimplementiertes Verfahren zum Auswerten zumindest einer Abbildungseigenschaft $k$-ter Ordnung, $k =$ 2, 3, 4, ... eines optischen Elements (100) an zumindest einer Bewertungsstelle, wobei das optische Element (100) zumindest eine Grenzfläche, welche aus einer refraktiven Grundfläche (120) und zumindest einem phasenändernden optischen Element (122) gebildet ist, umfasst, wobei das Verfahren umfasst:

   Bestimmen der Eigenschaften einer Wellenfront in der lokalen Umgebung der zumindest einen Bewertungsstelle mittels einer lokalen Wellenfrontdurchrechnung; und
   Bestimmen der zumindest einen Abbildungseigenschaft an der zumindest einen Bewertungsstelle anhand der Eigenschaften der Wellenfront in der lokalen Umgebung der zumindest einen Bewertungsstelle,
   wobei die lokale Wellenfrontdurchrechnung eine lokale Wellenfrontdurchrechnung beim Durchgang durch die zumindest eine Grenzfläche umfasst, und die lokale Wellenfrontdurchrechnung beim Durchgang durch die zumindest eine Grenzfläche nach der durch einen additiven Zusatzterm $\mathbf{PK}^{(k)}$ ergänzten Vergenzgleichung für die lokale Wellenfrontdurchrechnung durch die refraktive Grundfläche (120) erfolgt, wobei es sich bei der Vergenzgleichung um die verallgemeinerte Codington-Gleichung für Abbildungsfehler zweiter und höherer Ordnung handelt, wobei
   der additive Zusatzterm $\mathbf{PK}^{(k)}$ von den lokalen Ableitungen $k$-ter Ordnung einer dem phasenändernden optischen Element (122) zugeordneten Phasenfunktion $\Psi(\overline{x},\overline{y})$ nach den Koordinaten tangential zur Grundfläche (120) abhängt, wobei die Phasenfunktion $\Psi(\overline{x},\overline{y})$ die durch das zumindest eine phasenändernde optische Element (122) eingeführte optische Pfadlängendifferenz als Funktion der Koordinaten $(\overline{x},\overline{y})$ tangential zur Grundfläche (120) darstellt.

2. Verfahren nach Anspruch 1, wobei die zu bestimmende Abbildungseigenschaft eine Abbildungseigenschaft zweiter Ordnung ist, und die lokale Wellenfrontdurchrechnung nach der Gleichung

$$\mathbf{B} = \mathbf{A} + \mathbf{D} + \mathbf{PK}^{(2)},$$

   erfolgt, wobei

   $\mathbf{A}$ die Powervektorform der lokalen Vergenzmatrix der einfallenden Wellenfront an einem Durchstoßpunkt eines Hauptstrahls, welcher durch die zumindest eine Bewertungsstelle verläuft, mit der zumindest einen Grenzfläche bezeichnet,
   $\mathbf{B}$ die Powervektorform der lokalen Vergenzmatrix der ausfallenden Wellenfront an dem Durchstoßpunkt des Hauptstrahls mit der Grenzfläche bezeichnet,
   $\mathbf{D}$ die Powervektorform der lokalen Flächenbrechwertmatrix der refraktiven Grundfläche (120) bezeichnet, und
   der additive Zusatzterm $\mathbf{PK}^{(2)}$ von den lokalen Ableitungen zweiter Ordnung der Phasenfunktion $\Psi(\overline{x},\overline{y})$ nach

den Koordinaten tangential zur Grundfläche (120) abhängt.

3. Verfahren gemäß Anspruch 2, wobei der additive Zusatzterm eine vektorielle Größe ist und wobei für die Komponenten der additiven Zusatzterm:

$$\mathbf{PK} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2\Psi(\overline{x},\overline{y})/\partial\overline{x}^2 \\ \partial^2\Psi(\overline{x},\overline{y})/\partial\overline{x}\partial\overline{y} \\ \partial^2\Psi(\overline{x},\overline{y})/\partial\overline{y}^2 \end{pmatrix}\Bigg|_{(\overline{x},\overline{y})=(0,0)},$$

gilt.

4. Verfahren gemäß einem der vorangegangenen Ansprüche, wobei das Bestimmen der zumindest einen Abbildungseigenschaft ein Ermitteln des Verlaufs des durch die Bewertungsstelle verlaufenden Hauptstrahls umfasst.

5. Verfahren gemäß einem der vorangegangenen Ansprüche ferner umfassend
Erfassen von Flächendaten der zumindest einen refraktiven Grundfläche (120) und des phasenändernden optischen Elements (122).

6. Verfahren gemäß Anspruch 5, wobei die Daten des phasenändernden optischen Elements (122) Daten bezüglich des Verlaufs der Gitterlinien (122a) des phasenändernden optischen Elements (122) umfassen und wobei die Phasenfunktion $\Psi(\overline{x},\overline{y})$ anhand der erfassten Daten bezüglich des Verlaufs der Gitterlinien (122a) des phasenändernden optischen Elements (122) derart bestimmt wird, dass die Isolinien der Phasenfunktion bzw. die Kurven mit $\Psi(\overline{x},\overline{y})$ = *const.* = 0,1,2,... parallel zu den Gitterlinien (122a) des phasenändernden optischen Elements (122) verlaufen.

7. Verfahren gemäß Anspruch 6, wobei das Ermitteln der Phasenfunktion die Schritte

- Vermessen einer Gitterprojektion in einer vorgegebene Ebene $(\overline{x}^0,\overline{y}^0)$ ;
- Ermitteln einer Phasenfunktion $\psi^0(\overline{x}^0,\overline{y}^0)$ in einem globalen Koordinatensystem $(\overline{x}^0,\overline{y}^0,\overline{z}^0)$ mittels einer Auffassung der in der Ebene $(\overline{x}^0,\overline{y}^0)$ projizierten Gitterlinien (122a) als Kurven $\psi^0(\overline{x}^0,\overline{y}^0)$ = *const.* = 0,1,2... , wobei für alle Punkte, welche zwischen den Gitterlinien (122a) liegen, die Werte der Phasenfunktion durch Interpolation erhalten werden;
- Transformation der ermittelten Phasenfunktion $\psi^0(\overline{x}^0,\overline{y}^0)$ in ein lokales Koordinatensystem $(\overline{x}, \overline{y}, \overline{z})$ dessen $\overline{z}$-Achse senkrecht zur der Grundfläche (120) in der Bewertungsstelle steht:

$$\psi(\overline{x},\overline{y}) = \psi^0\left(\overline{x}^0(\overline{x},\overline{y}), \overline{y}^0(\overline{x},\overline{y})\right)$$

- Festlegen einer Wellenlänge und einer Beugungsordnung;
- Ermitteln der Phasenfunktion $\Psi(\overline{x},\overline{y})$ nach der Gleichung

$$\Psi(\overline{x},\overline{y}) = \Psi(\overline{x},\overline{y};\lambda,m) = m\lambda \cdot \psi(\overline{x},\overline{y}),$$

wobei das globale Koordinatensystem $(\overline{x}^0,\overline{y}^0,\overline{z}^0)$ ein Koordinatensystem ist, welches zur Beschreibung der Grundfläche (120) durch ihre Pfeilhöhe dient; und das lokale Koordinatensystem $x,y,z$ ein lokales Koordinatensystem ist, welches dazu dient, den Hindurchtritt eines (Haupt)Strahls durch eine Grenzfläche zu beschreiben, wobei am Durchstoßpunkt des Hauptstrahls mit der Grenzfläche $(\overline{x}, \overline{y}, \overline{z})$ = (0,0,0) gilt, und wobei die $\overline{z}$-Achse am Durchstoßpunkt senkrecht zur Grundfläche (120) steht

umfasst.

8. Verfahren gemäß einem der vorangegangenen Ansprüche ferner umfassend ein Vergleichen der an der zumindest einen Bewertungsstelle bestimmten Abbildungseigenschaft mit einem vorgegebenen Sollwert für die zumindest eine Abbildungseigenschaft an der zumindest einen Bewertungsstelle.

9. Verfahren gemäß einem der vorangegangenen Ansprüche, wobei die zumindest eine Abbildungseigenschaft ein Astigmatismus und/oder eine sphärische Wirkung und/oder eine Koma und/oder eine sphärische Aberration und/oder ein Dreiblattfehler ist.

10. Verfahren gemäß einem der vorangegangenen Ansprüchen, wobei die zumindest eine Abbildungseigenschaft an einer Vielzahl von Bewertungsstellen ausgewertet wird, wobei die Vielzahl von Bewertungsstellen zumindest 1000, vorzugsweise zumindest 2000, weiter bevorzugt zumindest 5000, besonders bevorzugt zumindest 10000 Bewertungsstellen umfasst.

11. Verfahren gemäß einem der vorangegangenen Ansprüche, wobei das optische Element (100) ein Brillenglas ist; und/oder wobei das phasenändernde optische Element (122) ein diffraktives Gitter ist.

12. Verfahren gemäß Anspruch 11, wobei das optische Element (100) ein Brillenglas ist und wobei das Bestimmen zumindest einer Abbildungseigenschaft des Brillenglases unter Berücksichtigung einer vorgegebenen, durchschnittlichen oder individuellen Gebrauchsstellung des Brillenglases und/oder eines vorgegebenen durchschnittlichen oder individuellen Objektabstandsmodell erfolgt.

13. Computerprogrammerzeugnis, welches ausgelegt ist, wenn geladen und ausgeführt auf einem Computer, ein Verfahren zum Auswerten zumindest einer Abbildungseigenschaft eines optischen Elements gemäß einem der Ansprüche 1 bis 12 durchzuführen.

14. Vorrichtung zum Auswerten zumindest einer Abbildungseigenschaft eines optischen Elements (100) an zumindest einer Bewertungsstelle, umfassend Rechenmittel, welche ausgelegt sind, ein Verfahren zum Auswerten zumindest einer Abbildungseigenschaft eines optischen Elements nach dem Verfahren gemäß einem der Ansprüche 1 bis 12 durchzuführen.

15. Verfahren zum Herstellen eines optischen Elements (100) umfassend zumindest ein phasenänderndes optisches Element (122), welches auf einer refraktive Grundfläche (120) angeordnet ist, umfassend die Schritte
Vorgabe eines zu optimierendes optischen Elements;
Optimieren des vorgegebenen optischen Elements, derart dass an zumindest einer Bewertungsstelle die Abweichung des Werts zumindest einer des optischen Elements von einem Sollwert minimiert wird, wobei die zumindest eine Abbildungseigenschaft nach dem Verfahren zum Auswerten zumindest einer Abbildungseigenschaft des optischen Elements gemäß einem der Ansprüche 1 bis 12 ausgewertet wird.

16. Verfahren zum Herstellen eines optischen Elements (100) gemäß Anspruch 15, wobei das Optimieren oder Modifizieren des vorgegebenen optischen Elements
eine Berechnung einer Zielfunktion umfasst, welche von der zumindest einen Abbildungseigenschaft abhängt; und/oder
eine Abänderung der refraktiven Grundfläche (120) und/oder des phasenändernden optischen Elements (122) umfasst.

17. Vorrichtung zum Herstellen eines optischen Elements (100), insbesondere eines Brillenglases mit zumindest einem phasenändernden optischen Element (122), umfassend
Vorgabemittel zur Vorgabe eines zu optimierenden optischen Elements;
Optimierungsmittel, welche ausgelegt sind, ein Optimieren oder Modifizieren des vorgegebenen optischen Elements durchzuführen, derart dass an zumindest einer Bewertungsstelle die Abweichung des Werts zumindest einer Abbildungseigenschaft des optischen Elements von einem Sollwert minimiert wird, wobei die zumindest eine Abbildungseigenschaft nach dem Verfahren zum Auswerten zumindest einer Abbildungseigenschaft des optischen Elements gemäß einem der Ansprüche 1 bis 12 ausgewertet wird.

**Claims**

1. Computer-implemented method for analysing at least one imaging property of the $k$-th order, $k$ = 2, 3, 4, ... of an optical element (100) at at least one evaluation position, wherein the optical element (100) comprises at least one boundary surface that is formed by a refractive base surface (120) and at least one phase-changing optical element (122), wherein the method comprises:

determining the properties of a wavefront in the local surroundings of the at least one evaluation position by means of local wavefront tracing; and

determining the at least one imaging property at the least one evaluation position on the basis of the properties of the wavefront in the local surroundings of the at least one evaluation position,

wherein the local wavefront tracing comprises local wavefront tracing upon transmission through the at least one boundary surface, and the local wavefront tracing upon transmission through the at least one boundary surface takes place by means of the refractive base surface (120) in accordance with the vergence equation for the local wavefront tracing, which equation is supplemented by an additive additional term $\mathbf{PK}^{(k)}$, wherein the vergence equation is a generalised Coddington equation for imaging errors of the second or higher order, wherein

the additive additional term $\mathbf{PK}^{(k)}$ depends on the local derivatives of the $k$-th order of a phase function $\Psi(\overline{x},\overline{y})$, which is associated with the phase-changing optical element (122), according to the coordinates that are tangential to the base surface (120), wherein the phase function $\Psi(\overline{x},\overline{y})$ represents the optical path length difference introduced by the at least one phase-changing optical element (122) as a function of the coordinates $(\overline{x},\overline{y})$ that are tangential to the base surface (120).

2. Method according to claim 1, wherein the imaging property to be determined is an imaging property of the second order, and the local wavefront tracing takes place according to the equation

$$\mathbf{B = A + D + PK}^{(2)},$$

wherein

$\mathbf{A}$ denotes the power vector form of the local vergence matrix of the incident wavefront at a point at which a main beam intersects the at least one boundary surface, which beam extends through the at least one evaluation position,

$\mathbf{B}$ denotes the power vector form of the local vergence matrix of the transmitted wavefront at the point at which the main beam intersects the boundary surface,

$\mathbf{D}$ denotes the power vector form of the local surface refractive power matrix of the refractive base surface (120), and

the additive additional term $\mathbf{PK}^{(2)}$ depends on the local derivatives of the second order of the phase function $\Psi(\overline{x},\overline{y})$ according to the coordinates that are tangential to the base surface (120).

3. Method according to claim 2, wherein the additive additional term is a vectorial variable and wherein, for the components of the additive additional term, it holds that:

$$\mathbf{PK} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2\Psi(\overline{x},\overline{y})/\partial\overline{x}^2 \\ \partial^2\Psi(\overline{x},\overline{y})/\partial\overline{x}\partial\overline{y} \\ \partial^2\Psi(\overline{x},\overline{y})/\partial\overline{y}^2 \end{pmatrix}\Bigg|_{(\overline{x},\overline{y})=(0,0)}$$

4. Method according to any of the preceding claims, wherein determining the at least one imaging property comprises identifying the course of the main beam that extends through the evaluation position.

5. Method according to any of the preceding claims, further comprising obtaining surface data of the at least one refractive base surface (120) and of the phase-changing optical element (122).

6. Method according to claim 5, wherein the data of the phase-changing optical element (122) comprise data relating to the course of the grating lines (122a) of the phase-changing optical element (122) and wherein the phase function

$\Psi(\overline{x},\overline{y})$ is determined on the basis of the obtained data relating to the course of the grating lines (122a) of the phase-changing optical element in such a way that the isolines of the phase function or the curves where $\Psi(\overline{x},\overline{y})$ = *const.* = 0,1,2... extend in parallel with the grating lines (122a) of the phase-changing optical element (122).

7. Method according to claim 6, wherein identifying the phase function comprises the steps of

- mapping a grating projection in a predetermined plane $(\overline{x}^0,\overline{y}^0)$ ;
- identifying a phase function $\psi^0(\overline{x}^0,\overline{y}^0)$ in a global coordinate system $(\overline{x}^0,\overline{y}^0,\overline{z}^0)$ by means of interpreting the grating lines (122a) projected in the plane as curves $\psi^0(\overline{x}^0,\overline{y}^0)$ = *const.* = 0,1,2..., wherein the values of the phase function are obtained by interpolation for all points that lie between the grating lines (122a);
- transforming the identified phase function $\psi^0(\overline{x}^0,\overline{y}^0)$ into a local coordinate system $(\overline{x},\overline{y},\overline{z})$ the z-axis of which is perpendicular to the base surface (120) in the evaluation position:

$$\psi(\overline{x},\overline{y}) = \psi^0\left(\overline{x}^0(\overline{x},\overline{y}),\overline{y}^0(\overline{x},\overline{y})\right)$$

- establishing a wave length and an order of diffraction;
- identifying the phase function $\Psi(\overline{x},\overline{y})$ according to the equation

$$\Psi(\overline{x},\overline{y}) = \Psi(\overline{x},\overline{y};\lambda,m) = m\lambda \cdot \psi(\overline{x},\overline{y})$$ ,

wherein the global coordinate system $(\overline{x}^0,\overline{y}^0,\overline{z}^0)$ is a coordinate system that is used to describe the base surface (120) by means of its sag; and the local coordinate system $\overline{x},\overline{y},\overline{z}$ is a local coordinate system that is used to describe the passage of a (main) beam through a boundary surface, wherein it holds that $(\overline{x},\overline{y},\overline{z})$ = (0,0,0) at the point that the main beam intersects the boundary surface, and wherein the $\overline{z}$-axis is perpendicular to the base surface (120) at the point of intersection.

8. Method according to any of the preceding claims, further comprising comparing the imaging property determined at the at least one evaluation position with a predetermined set value for the at least one imaging property at the at least one evaluation position.

9. Method according to any of the preceding claims, wherein the at least one imaging property is an astigmatism and/or a spherical effect and/or a coma and/or a spherical aberration and/or a trefoil.

10. Method according to any of the preceding claims, wherein the at least one imaging property is analysed at a plurality of evaluation positions, wherein the plurality of evaluation positions comprises at least 1000, preferably at least 2000, more preferably at least 5000, particularly preferably at least 10000 evaluation positions.

11. Method according to any of the preceding claims, wherein the optical element (100) is a spectacle lens; and/or wherein the phase-changing optical element (122) is a diffractive grating.

12. Method according to claim 11, wherein the optical element (100) is a spectacle lens and wherein at least one imaging property of the spectacle lens is determined taking into account a predetermined, average or individual usage position of the spectacle lens and/or a predetermined, average or individual object distance model.

13. Computer program product that is designed, when loaded and executed on a computer, to carry out a method according to any of claims 1 to 12 for analysing at least one imaging property of an optical element.

14. Device for analysing at least one imaging property of an optical element (100) at at least one evaluation position, which device comprises computing means that are designed to carry out a method for analysing at least one imaging property of an optical element in accordance with the method according to any of claims 1 to 12.

15. Method for producing an optical element (100) that comprises at least one phase-changing optical element (122) that is arranged on a refractive base surface (120), which method comprises the steps of
specifying an optical element to be optimised;

optimising the specified optical element so as to minimise, at at least one evaluation position, deviation of the value of at least one imaging property of the optical element from a set value, wherein the at least one imaging property is analysed in accordance with the method according to any of claims 1 to 12 for analysing at least one imaging property of the optical element.

16. Method for producing an optical element (100) according to claim 15, wherein optimising or modifying the specified optical element comprises
calculating an objective function that depends on the at least one imaging property; and/or
altering the refractive base surface (120) and/or the phase-changing optical element (122).

17. Device for producing an optical element (100), in particular a spectacle lens having at least one phase-changing optical element (122), which device comprises
specification means for specifying at least one optical element to be optimised;
optimisation means that are designed to optimise or modify the specified optical element so as to minimise, at at least one evaluation position, deviation of the value of at least one imaging property of the optical element from a set value, wherein the at least one imaging property is analysed in accordance with the method according to any of claims 1 to 12 for analysing at least one imaging property of the optical element.

**Revendications**

1. Procédé exécutable par ordinateur pour l'évaluation d'au moins une caractéristique de reproduction d'ordre $k$, $k$ = 2, 3, 4,... d'un élément optique (100) dans au moins une zone d'évaluation, dans lequel l'élément optique (100) comprend au moins une interface formée par une surface de base réfringente (120) et par au moins un élément optique à variation de phase (122), dans lequel le procédé comprend :

la détermination des propriétés d'un front d'onde dans l'environnement local de ladite au moins une zone d'évaluation au moyen d'un calcul local de front d'onde ; et
la détermination de ladite au moins une caractéristique de reproduction dans ladite au moins une zone d'évaluation à partir des propriétés du front d'onde dans l'environnement local de ladite au moins une zone d'évaluation,
dans lequel le calcul local de front d'onde comprend un calcul local de front d'onde lors du passage par ladite au moins une interface, et le calcul local de front d'onde lors du passage par ladite au moins une interface est effectué après complément par un terme additif supplémentaire $\mathbf{PK}^{(k)}$ de l'équation de vergence pour le calcul local de front d'onde au travers de la surface de base réfringente (120), dans lequel l'équation de vergence est l'équation de Coddington généralisée pour des aberrations de second d'ordre et plus, et dans lequel
le terme additif supplémentaire $\mathbf{PK}^{(k)}$ dépend de dérivées locales d'ordre $k$ d'une fonction de phase $\Psi(\bar{x}, \bar{y})$ associée à l'élément optique à variation de phase (122) suivant les coordonnées tangentiellement à la surface de base (120), dans lequel la fonction de phase $\Psi(\bar{x}, \bar{y})$ représente le différentiel de longueur de chemin optique introduit par ledit au moins un élément optique à variation de phase (122) en tant que fonction des coordonnées $(\bar{x}, \bar{y})$ tangentiellement à la surface de base (120).

2. Procédé selon la revendication 1, dans lequel la caractéristique de reproduction à déterminer est une caractéristique de reproduction de second ordre, et le calcul local de front d'onde est effectué conformément à l'équation

$$\mathbf{B} = \mathbf{A} + \mathbf{D} + \mathbf{PK}^{(2)},$$

dans laquelle

A est la forme de vecteur de puissance de la matrice de vergence locale du front d'onde incident sur un point d'intersection d'un faisceau principal traversant ladite au moins une zone d'évaluation, avec ladite au moins une interface,
B est la forme de vecteur de puissance de la matrice de vergence locale du front d'onde incident sur le point d'intersection du faisceau principal avec l'interface,
D est la forme de vecteur de puissance de la matrice d'indice de réfraction locale de la surface de base réfringente (120), et

le terme additif supplémentaire **PK**$^{(2)}$ dépend des dérivées locales de second ordre de la fonction de phase $\Psi(\overline{x}, \overline{y})$ suivant les coordonnées tangentiellement à la surface de base (120).

3. Procédé selon la revendication 2, dans lequel le terme additif supplémentaire est une grandeur vectorielle et dans lequel pour les composantes du terme additif supplémentaire l'équation suivante s'applique :

$$\mathbf{PK} = -\begin{pmatrix} \Psi^{(2,0)}(0,0) \\ \Psi^{(1,1)}(0,0) \\ \Psi^{(0,2)}(0,0) \end{pmatrix} = -\begin{pmatrix} \partial^2 \Psi(\overline{x},\overline{y})/\partial\overline{x}^2 \\ \partial^2 \Psi(\overline{x},\overline{y})/\partial\overline{x}\partial\overline{y} \\ \partial^2 \Psi(\overline{x},\overline{y})/\partial\overline{y}^2 \end{pmatrix}\Bigg|_{(\overline{x},\overline{y})=(0,0)},$$

4. Procédé selon l'une des revendications précédentes, dans lequel la détermination de ladite au moins une caractéristique de reproduction comprend une détermination du tracé du faisceau principal traversant la zone d'évaluation.

5. Procédé selon l'une des revendications précédentes, comprenant en outre :

   la saisie de données surfaciques de ladite au moins une surface de base réfringente (120) et de l'élément optique à variation de phase (122).

6. Procédé selon la revendication 5, dans lequel les données de l'élément optique à variation de phase (122) comprennent des données relatives au tracé des lignes de réseau (122a) de l'élément optique à variation de phase (122) et dans lequel la fonction de phase $\Psi(\overline{x}, \overline{y})$ est déterminée à partir des données saisies relativement au tracé des lignes de réseau (122a) de l'élément optique à variation de phase (122), de telle manière que les isolignes de la fonction de phase ou les courbes avec $\Psi(\overline{x}, \overline{y})$ = *const.* = 0, 1, 2,... soient parallèles aux lignes de réseau (122a) de l'élément optique à variation de phase (122).

7. Procédé selon la revendication 6, dans lequel la détermination de la fonction de phase comprend les étapes de :

   - mesure d'une projection de réseau sur un plan $(\overline{x}^0, \overline{y}^0)$ donné ;
   - détermination d'une fonction de phase $\psi^0(\overline{x}^0, \overline{y}^0)$ dans un système de coordonnées global $(\overline{x}^0, \overline{y}^0, \overline{z}^0)$ au moyen d'une considération des lignes de réseau (122a) projetées sur le plan $(\overline{x}^0, \overline{y}^0)$ en tant que courbes $\psi^0(\overline{x}^0, \overline{y}^0)$ = *const.* = 0, 1, 2... , dans lequel les valeurs de la fonction de phase sont obtenues par interpolation pour tous les points situés entre les lignes de réseau (122a) ;
   - transformation de la fonction de phase $\psi^0(\overline{x}^0, \overline{y}^0)$ déterminée en un système de coordonnées local $(\overline{x}, \overline{y}, \overline{z})$ dont l'axe z est perpendiculaire à la surface de base (120) dans la zone d'évaluation :

   $$\psi(\overline{x}, \overline{y}) = \psi^0(\overline{x}^0(\overline{x}, \overline{y}), \overline{y}^0(\overline{x}, \overline{y}))$$

   - définition d'une longueur d'onde et d'un ordre de diffraction ;
   - détermination de la fonction de phase $\Psi(\overline{x}, \overline{y})$ conformément à l'équation

   $$\Psi(\overline{x}, \overline{y}) = \Psi(\overline{x}, \overline{y}; \lambda, m) = m\lambda \cdot \psi(\overline{x}, \overline{y}),$$

   dans lequel le système de coordonnées global $(\overline{x}^0, \overline{y}^0, \overline{z}^0)$ est un système de coordonnées servant à décrire la surface de base (120) par sa flèche ; et le système de coordonnées local $\overline{x}, \overline{y}, \overline{z}$ est un système de coordonnées local servant à décrire le passage d'un faisceau (principal) par une interface, dans lequel $(\overline{x}, \overline{y}, \overline{z})$ = (0,0,0) sur le point d'intersection du faisceau principal avec l'interface s'applique, et dans lequel l'axe z est perpendiculaire à la surface de base (120) au point d'intersection.

8. Procédé selon l'une des revendications précédentes comprenant en outre une comparaison de la caractéristique de reproduction déterminée dans ladite au moins une zone d'évaluation avec une valeur de consigne définie pour ladite au moins une caractéristique de reproduction dans ladite au moins une zone d'évaluation.

**9.** Procédé selon l'une des revendications précédentes, dans lequel ladite au moins une caractéristique de reproduction est un astigmatisme et/ou un effet sphérique et/ou une aberration de coma et/ou une aberration sphérique et/ou une aberration de type trèfle.

**10.** Procédé selon l'une des revendications précédentes, dans lequel ladite au moins une caractéristique de reproduction est évaluée dans une pluralité de zones d'évaluation, dans lequel la pluralité de zones d'évaluation comprend au moins 1000, avantageusement au moins 2000, préférentiellement au moins 5000, et tout particulièrement au moins 10000 zones d'évaluation.

**11.** Procédé selon l'une des revendications précédentes, dans lequel l'élément optique (100) est un verre de lunette ; et/ou dans lequel l'élément optique à variation de phase (122) est un réseau de diffraction.

**12.** Procédé selon la revendication 11, dans lequel l'élément optique (100) est un verre de lunette et dans lequel la détermination d'au moins une caractéristique de reproduction du verre de lunette est effectuée en tenant compte d'une position d'utilisation définie, moyenne ou individuelle du verre de lunette et/ou d'un modèle de distance d'objet défini, moyen ou individuel.

**13.** Produit logiciel informatique, prévu pour exécuter un procédé pour l'évaluation d'au moins une caractéristique de reproduction d'un élément optique selon l'une des revendications 1 à 12, après chargement et exécution sur un ordinateur.

**14.** Dispositif pour l'évaluation d'au moins une caractéristique de reproduction d'un élément optique (100) dans au moins une zone d'évaluation, comprenant des moyens de calcul prévus pour exécuter un procédé pour l'évaluation d'au moins une caractéristique de reproduction d'un élément optique conformément au procédé selon l'une des revendications 1 à 12.

**15.** Procédé de fabrication d'un élément optique (100) comprenant au moins un élément optique à variation de phase (122) disposé sur une surface de base réfringente (120), comprenant les étapes de :

définition d'un élément optique à optimiser ;
optimisation de l'élément optique défini, de manière à minimiser dans au moins une zone d'évaluation l'écart entre la valeur d'au moins une caractéristique de reproduction de l'élément optique et une valeur de consigne, dans lequel ladite au moins une caractéristique de reproduction est évaluée conformément au procédé pour l'évaluation d'au moins une caractéristique de reproduction de l'élément optique selon l'une des revendications 1 à 12.

**16.** Procédé de fabrication d'un élément optique (100) selon la revendication 15, dans lequel l'optimisation ou la modification de l'élément optique défini comprend
un calcul d'une fonction cible dépendant de ladite au moins une caractéristique de reproduction ; et/ou
une modification de la surface de base réfringente (120) et/ou de l'élément optique à variation de phase (122).

**17.** Dispositif de fabrication d'un élément optique (100), en particulier d'un verre de lunette avec au moins un élément optique à variation de phase (122), comprenant :

des moyens de définition pour la définition d'un élément optique à optimiser ;
des moyens d'optimisation prévus pour effectuer une optimisation ou une modification de l'élément optique défini, de manière à minimiser dans au moins une zone d'évaluation l'écart entre la valeur d'au moins une caractéristique de reproduction de l'élément optique et une valeur de consigne, dans lequel ladite au moins une caractéristique de reproduction est évaluée conformément au procédé pour l'évaluation d'au moins une caractéristique de reproduction de l'élément optique selon l'une des revendications 1 à 12.

**Fig. 1**

**Fig. 2**

**Fig. 3**

**Fig. 3A**

EP 2 641 124 B1

**122**

## Fig. 4

$$\mathbf{d} = \begin{pmatrix} d_x \\ d_y \end{pmatrix}$$

**122a**

**122**

Orthogonale Trajektorien **126**

Gitterlinien **122a**

$$\mathbf{d}(\overline{x}^0, \overline{y}^0)$$

## Fig. 5

Fig. 6

EP 2 641 124 B1

**130**

Vermessung der Gitterprojektion (z.B. Mikroskopaufnahme):
- Gitterlinien
- Funktion $\mathbf{d}(\overline{x}^0, \overline{y}^0)$

Interpolation

Kurven mit $\psi^0(\overline{x}^0, \overline{y}^0) = const.$

**132**

Phasenfunktion $\psi^0(\overline{x}^0, \overline{y}^0)$

Festlegung $m, \lambda$

Abspalten $m, \lambda$

Phasenfunktion $\Psi^0(\overline{x}^0, \overline{y}^0; \lambda, m)$

Festlegung Durchstoß-punkt:

Trsf. in d. globale System

Trsf. in das lokale System

Trsf. in d. globale System

Trsf. in das lokale System

Phasenfunktion $\psi(\overline{x}, \overline{y})$

Festlegung $m, \lambda$

Abspalten $m, \lambda$

Phasenfunktion $\Psi(\overline{x}, \overline{y}; \lambda, m)$

**134**

**136**

## Fig. 7

**Fig. 8A**

**Fig. 8B**

**Fig. 9A**

**Fig. 9B**

Fig. 10A

Fig. 10B

**Fig. 11A**

**Fig. 11B**

Fig. 12A

Fig. 12B

**Fig. 13A**

**Fig. 13B**

**Fig. 14A**

**Fig. 14B**

**Fig. 14C**

**Fig. 15A**

**Fig. 15B**

**Fig. 15C**

**Fig. 16A**

**Fig. 16B**

**Fig. 16C**

Fig. 17A

Fig. 17B

**Fig. 17C**

Astigmatismus (Kom. Glas+Auge)

**Fig. 18A**

Phase diffr. Gitter[mm]

**Fig. 18B**

Farbsaum=Prisma/Abbézahl [cm/m]

**Fig. 18C**

Farbsaum mit diffr. Gitter [cm/m]

**Fig. 18D**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008089999 A1

- WO 2008089999 A

**In der Beschreibung aufgeführte Nicht-Patentliteratur**

- **G. ESSER et al.** Derivation of the refraction equations for higher-order aberrations of local wavefronts at oblique incidence. *JOSA A,* Februar 2010, vol. 27 (2), 218-237
- **W. BECKEN et al.** Brillengläser im Sport: Optimierung der Abbildungseigenschaften unter physiologischen Aspekten. *Z. Med. Phys.,* 2007, vol. 17, 56-66
- **G. ESSER.** Derivation of the refraction equations for higher-order aberrations of local wavefronts at oblique incidence. *JOSA A,* Februar 2010, vol. 27 (2), 218-237

- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *JOSA. A,* Februar 2010, vol. 27 (2), 218-237
- **G. ESSER ; W. BECKEN ; W. MÜLLER ; P. BAUMBACH ; J. ARASA ; D. UTTENWEILER.** Derivation of the refraction equations for higher-order aberrations of local wavefronts at oblique incidence. *J. Opt. Soc. Am. A,* Februar 2010, vol. 27 (2
- **W. BECKEN.** Brillengläser im Sport: Optimierung der Abbildungseigenschaften unter physiologischen Aspekten. *Z. Med. Phys.,* 2007, vol. 17, 56-66